# EUROPEAN PATENT APPLICATION

(11) **EP 4 694 053 A1**
(43) Date of publication of application: **11.02.2026**
(21) Application number: 24796001.6
(22) Date of filing: 22.04.2024
(51) Int. Cl.: H04L 41/0663, H04L 45/28

(54) **METHOD AND APPARATUS FOR DATA PROCESSING, AND COMMUNICATION SYSTEM**

(30) Priority: 27.04.2023 CN 202310478547; 18.07.2023 CN 202310885513
(71) Applicant: Huawei Technologies Co., Ltd., Shenzhen, Guangdong 518129 (CN)
(72) Inventor: QI, Yunlei, Shenzhen, Guangdong 518129 (CN); ZHANG, Jian, Shenzhen, Guangdong 518129 (CN); LI, Rixin, Shenzhen, Guangdong 518129 (CN); HU, Yongjian, Shenzhen, Guangdong 518129 (CN); XUE, Wei, Shenzhen, Guangdong 518129 (CN); CHEN, Yun, Shenzhen, Guangdong 518129 (CN)
(74) Representative: Goddar, Heinz J.
(86) International application number: PCT/CN2024/089078
(87) International publication number: WO 2024/222620

(57) **Abstract**

This application discloses a communication system including a target network, and belongs to the field of communication technologies. The communication system includes the target network, and the target network includes at least a first subnetwork domain. The first subnetwork domain includes a first network node that belongs to a first path and a second network node that belongs to a second path. The first path includes a first channel and a second channel that are connected to the first network node, and the second path includes a third channel and a fourth channel that are connected to the second network node. The first channel and the third channel are protection switching channels for each other, and the second channel and the fourth channel are protection switching channels for each other. The first network node and/or the second network node may determine a transmission path of a service based on a state of a channel. In this solution, the determined transmission path matches the state of the channel. Correspondingly, when service traffic is transmitted based on the determined transmission path, service traffic transmission interruption can be effectively avoided.

## Description

This application claims priority to Chinese Patent Application No. 202310885513.4, filed with the China National Intellectual Property Administration on July 18, 2023 and entitled "DATA PROCESSING METHOD AND APPARATUS, AND COMMUNICATION SYSTEM", and Chinese Patent Application No. 202310478547.1, filed with the China National Intellectual Property Administration on April 27, 2023 and entitled "FGMTN-BASED DATA PROCESSING METHOD", both of which are incorporated herein by reference in their entireties.

### TECHNICAL FIELD

This application relates to the field of communication technologies, and in particular, to a data processing method and apparatus, and a communication system.

### BACKGROUND

With development of communication technologies, more services are carried in a communication network, and correspondingly more service traffic is transmitted in the communication network. In some scenarios, to improve quality of service provided for a service, a flexible Ethernet (Flexible Ethernet, FlexE) technology may be applied. The FlexE technology is increasingly widely applied because of flexible bandwidth allocation on demand. In addition, to properly use a FlexE bandwidth resource, the FlexE technology may be further used to carry a fine-grained service. The fine-grained service may be understood as that a slot (slot) corresponding to a large bandwidth in the FlexE is divided into a plurality of sub-slots (sub-slots), and the sub-slots obtained through division are used to carry a client service having a low bandwidth requirement.

Currently, when service traffic is transmitted in the communication network, service traffic transmission interruption occurs. Therefore, a solution is urgently needed to resolve the foregoing problem.

### SUMMARY

This application provides a data processing method and apparatus, and a communication system, to reduce service traffic transmission interruption.

According to a first aspect, this application provides a communication system. The communication system includes a target network, the target network includes at least one subnetwork domain, and a first subnetwork domain may be one of the at least one subnetwork domain. The first subnetwork domain includes a first network node and a second network node. The first network node belongs to a first path, and the second network node belongs to a second path. The first path includes a first channel and a second channel that are connected to the first network node, and the second path includes a third channel and a fourth channel that are connected to the second network node. The first channel and the third channel are protection switching channels for each other, and the second channel and the fourth channel are protection switching channels for each other. The first network node and/or the second network node may determine a transmission path of a service based on a state of a channel. The state of the channel may include at least one state in a state set, and the state set includes a state of the first channel, a state of the second channel, a state of a third channel, and a state of a fourth channel. The determined transmission path of the service may be one or more paths in a path set, the path set includes the first path, the second path, a third path, and a fourth path, the third path includes the first channel and the fourth channel, and the fourth path includes the second channel and the third channel. It can be learned that, by using this solution, the first network node and/or the second network node may determine the transmission path of the service based on the state of the channel, so that the determined transmission path matches the state of the channel. Correspondingly, when service traffic is transmitted based on the determined transmission path, service traffic transmission interruption can be effectively avoided.

In a possible implementation, the first path and the second path are protection switching paths for each other. In this scenario, when a fault (for example, a single-point or multi-point fault) occurs on each of the first path and the second path that are protection switching paths for each other, a path that does not include a fault point can also be determined by using the solution provided in this application, thereby effectively avoiding service traffic transmission interruption.

In a possible implementation, the first network node and the second network node are a same network node. In this case, the first network node is a co-routed node of the first path and the second path. The first network node is separately connected to the first channel, the second channel, the third channel, and the fourth channel.

In a possible implementation, the first network node and the second network node are different network nodes, and a fifth channel is included between the first network node and the second network node. Correspondingly, the third path and the fourth path further include the fifth channel. To be specific, the third path includes the first channel, the fifth channel, and the fourth channel, and the fourth path includes the second channel, the fifth channel, and the third channel. Service traffic may be transmitted between the first network node and the second network node through the fifth channel. In this way, when both the first path and the second path are faulty, service traffic may be transmitted through the third path or the fourth path that includes a part of channels on the first path and a part of channels on the second path, so that the service traffic can bypass faulty links on the first path and the second path, to ensure that the service traffic is forwarded to a destination node of the service traffic, thereby avoiding service traffic transmission interruption.

In a possible implementation, when the fifth channel is included between the first network node and the second network node, the state set further includes a state of the fifth channel. To be specific, the first network node and/or the second network node may determine the transmission path of the service with reference to the state of the fifth channel, so that the determined transmission path of the service is more reasonable.

In a possible implementation, the first network node and the second network node are different network nodes, and a sixth channel and a seventh channel are included between the first network node and the second network node. Correspondingly, the third path and the fourth path further include the sixth channel or the seventh channel. Specifically, when the first network node sends a service to the second network node through the third path, the third path includes the seventh channel; when the second network node sends a service to the first network node through the third path, the third path includes the sixth channel; when the first network node sends a service to the second network node through the fourth path, the fourth path includes the sixth channel; or when the second network node sends a service to the first network node through the fourth path, the fourth path includes the seventh channel. Service traffic may be transmitted between the first network node and the second network node through the sixth channel or the seventh channel. In this way, when both the first path and the second path are faulty, service traffic may be transmitted through the third path or the fourth path that includes a part of channels on the first path and a part of channels on the second path, so that the service traffic can bypass faulty links on the first path and the second path, to ensure that the service traffic is forwarded to a destination node of the service traffic, thereby avoiding service traffic transmission interruption.

In a possible implementation, when the sixth channel and the seventh channel are included between the first network node and the second network node, the state set further includes a state of the sixth channel and a state of the seventh channel. To be specific, the first network node and/or the second network node may determine the transmission path of the service with reference to the state of the sixth channel and the state of the seventh channel, so that the determined transmission path of the service is more reasonable.

In a possible implementation, both the first network node and the second network node are provider edges (provider edge, PE). To be specific, the PE may determine the transmission path of the service based on the state of the channel, so that service traffic is transmitted through a proper transmission path when the service traffic arrives at the PE, thereby improving quality of service provided for the service.

In a possible implementation, the first network node and the second network node are provider intermediate devices. To be specific, the provider intermediate device may determine the transmission path of the service based on the state of the channel, so that service traffic can be transmitted through a proper transmission path in a network, thereby improving quality of service provided for the service. The provider intermediate device includes but is not limited to a provider (provider, P) backbone device. In the following descriptions of embodiments of this application, P may represent the provider intermediate device.

In a possible implementation, when the first network node and the second network node are provider intermediate devices, the first channel, the second channel, the third channel, and the fourth channel all are fine granularity channels. This solution can improve quality of service provided for a service carried by a fine granularity channel.

In a possible implementation, when the first network node and the second network node are provider intermediate devices, the first channel, the second channel, the third channel, and the fourth channel all are metropolitan transport network (metropolitan transport network, MTN) channels. This solution can improve quality of service provided for a service carried by an MTN channel.

In a possible implementation, if the first network node and the second network node are PEs, in an example, the first channel and the third channel are attachment circuit (attachment circuit, AC) links, and the second channel and the fourth channel are fine granularity channels. This solution can improve quality of service provided for a service carried by a fine granularity channel.

In a possible implementation, if the first network node and the second network node are PEs, in an example, the first channel and the third channel are AC links, and the second channel and the fourth channel are MTN channels. This solution can improve quality of service provided for a service carried by an MTN channel.

According to a second aspect, this application provides a data processing method. The method may be applied to a first network node. The first network node obtains a state of a channel, where the state of the channel includes at least one state in a state set, the state set includes a state of a first channel, a state of a second channel, a state of a third channel, and a state of a fourth channel, the first channel and the second channel are separately connected to the first network node, the first channel and the second channel belong to a first path, the third channel and the fourth channel are separately connected to a second network node, the third channel and the fourth channel belong to a second path, the first channel and the third channel are protection switching channels for each other, and the second channel and the fourth channel are protection switching channels for each other. After obtaining the state of the channel, the first network node may determine a transmission path of a service based on the obtained state of the channel, where the determined transmission path of the service may be one or more paths in a path set, the path set includes the first path, the second path, a third path, and a fourth path, the third path includes the first channel and the fourth channel, and the fourth path includes the second channel and the third channel. It can be learned that, by using this solution, the first network node may determine the transmission path of the service based on the state of the channel, so that the determined transmission path matches the state of the channel. Correspondingly, when service traffic is transmitted based on the determined transmission path, service traffic transmission interruption can be effectively avoided.

In a possible implementation, the first path and the second path are protection switching paths for each other. In this scenario, when a fault (for example, a single-point or multi-point fault) occurs on each of the first path and the second path that are protection switching paths for each other, a path that does not include a fault point can also be determined by using the solution provided in this application, thereby effectively avoiding service traffic transmission interruption.

In a possible implementation, the first network node and the second network node are a same network node.

In a possible implementation, the first network node and the second network node are different network nodes, a fifth channel is included between the first network node and the second network node, and the third path and the fourth path further include the fifth channel.

In a possible implementation, the state set further includes a state of the fifth channel.

In a possible implementation, the first network node and the second network are different network nodes, a sixth channel and a seventh channel are included between the first network node and the second network node, and the third path and the fourth path each include the sixth channel or the seventh channel. When the first network node sends a service to the second network node through the third path, the third path includes the seventh channel; when the second network node sends a service to the first network node through the third path, the third path includes the sixth channel; when the first network node sends a service to the second network node through the fourth path, the fourth path includes the sixth channel; or when the second network node sends a service to the first network node through the fourth path, the fourth path includes the seventh channel.

In a possible implementation, the state set further includes a state of the sixth channel and a state of the seventh channel.

In a possible implementation, both the first network node and the second network node are provider edges PEs.

In a possible implementation, the first network node and the second network node are provider intermediate devices.

In a possible implementation, the first channel, the second channel, the third channel, and the fourth channel all are fine granularity channels; or the first channel, the second channel, the third channel, and the fourth channel all are metropolitan transport network MTN channels.

In a possible implementation, the first channel and the third channel are attachment circuit AC links, and the second channel and the fourth channel are fine granularity channels; or the first channel and the third channel are AC links, and the second channel and the fourth channel are MTN channels.

In a possible implementation, the state of the first channel is determined based on a first factor, and the first factor may include one or more factors indicating whether service data can be transmitted through the first channel. Considering that the state of the third channel, local fault information of the first channel, first remote fault indication information received through the first channel, and the state of the second channel may all indicate whether the service data can be transmitted through the first channel, the first factor may include one or more of the state of the third channel, the local fault information of the first channel, the first remote fault indication information received through the first channel, and the state of the second channel. In an example, the first network node may determine the state of the first channel based on the first factor, so as to determine the transmission path of the service based on the state set including the state of the first channel.

In a possible implementation, if the first network node and the second network node are different network nodes, a state of a target channel between the first network node and the second network node may also indicate whether the service data can be transmitted through the first channel. Therefore, when the first network node and the second network node are different network nodes, the first factor further includes the state of the target channel, and the state of the target channel indicates whether the target channel is faulty. When the fifth channel is included between the first network node and the second network node, the target channel includes the fifth channel; or when the sixth channel and the seventh channel are included between the first network node and the second network node, the target channel includes the sixth channel and the seventh channel.

In a possible implementation, if the first path is a working path, in an example, when the state of the third channel is active (active), the first network node may determine that the state of the first channel is standby (standby). In another example, when the local fault information of the first channel indicates that a local fault occurs on the first channel, the first network node may determine that the state of the first channel is standby. In still another example, when the first remote fault indication information is received through the first channel, the first network node may determine that the state of the first channel is standby. In yet another example, when the state of the second channel is standby and the state of the target channel indicates that the target channel is faulty, the first network node may determine that the state of the first channel is standby.

In a possible implementation, if the first path is a protection path, in an example, when the state of the third channel is standby, the first network node may determine that the state of the first channel is active. In another example, when the local fault information of the first channel indicates that a local fault occurs on the first channel, the first network node may determine that the state of the first channel is standby. In still another example, when the first remote fault indication information is received through the first channel, the first network node may determine that the state of the first channel is standby. In yet another example, when the state of the second channel is standby and the state of the target channel indicates that the target channel is faulty, the first network node may determine that the state of the first channel is standby.

In a possible implementation, if the first network node and the second network node are different network nodes, during specific implementation of obtaining the state of the third channel and the state of the fourth channel, the first network node may receive the state of the third channel and the state of the fourth channel that are sent by the second network node.

In a possible implementation, if the fifth channel is included between the first network node and the second network node, the first network node may receive, through the fifth channel, the state of the third channel and the state of the fourth channel that are sent by the second network node. In other words, both the state of the third channel and the state of the fourth channel are transmitted through the fifth channel.

In a possible implementation, if the sixth channel and the seventh channel are included between the first network node and the second network node, the first network node may receive, through the sixth channel, the state of the third channel that is sent by the second network node, and receive, through the seventh channel, the state of the fourth channel that is sent by the second network node. In other words, the state of the third channel and the state of the fourth channel are respectively transmitted through the sixth channel and the seventh channel.

In a possible implementation, during specific implementation of receiving the state of the third channel that is sent by the second network node, the first network node may receive state information of the third channel that is sent by the second network node, where the state information includes the state of the third channel. The first network node may parse the state information of the third channel, to obtain the state of the third channel.

In a possible implementation, during specific implementation of receiving state information of the third channel that is sent by the second network node, the first network node may receive a first operation, administration and maintenance (operation, administration and maintenance, OAM) code block sent by the second network node, where the first OAM code block carries the state information. The first network node may parse the first OAM code block, to obtain the state information of the third channel.

In a possible implementation, a new OAM code block may be defined to carry the state information of the third channel. In this case, a type field of the first OAM code block indicates that the first OAM code block carries the state information of the third channel.

In a possible implementation, an existing OAM code block may be used for the first OAM code block. In a specific example, the first OAM code block may be a first automatic protection switching (automatic protection switching, APS) code block, and the state information of the third channel is carried in an available field of the first APS code block.

In a possible implementation, during specific implementation of receiving state information of the third channel that is sent by the second network node, the first network node may receive a first Ethernet packet sent by the second network node, where the first Ethernet packet includes the state information. The first network node may parse the first Ethernet packet, to obtain the state information of the third channel.

In a possible implementation, in addition to the state of the third channel, the state information of the third channel may further include fault information of the third channel, and the fault information of the third channel indicates whether a fault occurs on the third channel. In an example, the fault information of the third channel may include local fault information of the third channel, and the local fault information of the third channel indicates whether a local fault occurs on the third channel. In another example, the fault information of the third channel may further include second remote fault indication information received through the third channel, and the second remote fault indication information may indicate that a remote fault occurs on the third channel. In an example, the first network node may check the state of the third channel based on the fault information of the third channel, to determine reasonableness of the received state of the third channel.

In a possible implementation, in addition to receiving the state of the third channel and the state of the fourth channel that are sent by the second network node, the first network node may further send the state of the first channel and the state of the second channel to the second network node, so that the second network node determines the transmission path of the service based on the state of the channel.

In a possible implementation, if the state of the second channel is standby and the target channel is faulty, and if the first network node receives service data through the first channel, a packet loss occurs on the service data at the first network node. To prevent a remote node of the first network node on the first path from sending service data to the first network node through the first channel, the first network node may send third remote fault indication information through the first channel, so that a network node that receives the third remote fault indication information determines a remote fault, and no longer sends the service data to the first network node through the first channel, thereby avoiding a packet loss on the service data.

In a possible implementation, the third remote fault indication information sent by the first network node through the first channel, the second remote fault information received by the second network node through the third channel, or the first remote fault indication information received by the first network node through the first channel may be carried in a second OAM code block. In other words, the target remote fault indication information may be carried in the second OAM code block, and the target remote fault indication information may be one of the first remote fault indication information, the second remote fault indication information, and the third remote fault indication information.

In a possible implementation, a new OAM code block may be defined to carry the target remote fault indication information. In this case, a type field of the second OAM code block indicates that the second OAM code block carries the target remote fault indication information.

In a possible implementation, an existing OAM code block may be used for the second OAM code block. In a specific example, the second OAM code block may be a basic (basic) code block. Correspondingly, the target remote fault indication information may be carried in an available field of the basic code block. In an example, the target remote fault indication information may be carried in a reserved field or a remote defect indication (remote defect indication, RDI) field of the basic code block. In another specific example, the second OAM code block may be a second APS code block, and the target remote fault indication information is carried in an available field of the second APS code block.

In a possible implementation, the first network node may further exchange a target OAM message with another network node on the first path. Specifically, the first network node may send or receive the target OAM message through the first channel or the second channel.

In an example, when the first channel or the second channel is a fine granularity channel, the target OAM message may be an end-to-end fine-granularity OAM message. In this embodiment of this application, when the first network node is P, the first network node may also receive or send an end-to-end fine-granularity OAM message through the first channel.

In another example, the target OAM message may be a newly defined OAM message. In a specific example, an O code block type field of the target OAM message indicates a message type of the target OAM message. The target OAM message may be an OAM message initiated or terminated at a P node on which a fine granularity technology is deployed. In another specific example, a type field of the target OAM message indicates a message type of the target OAM message. The target OAM message may be an OAM message initiated or terminated at a P node on which a fine granularity technology is deployed.

In a possible implementation, if the first channel and the third channel are configured as 1:1 protection switching channels, and the second channel and the fourth channel are also configured as 1:1 protection switching channels, in an example, when both the state of the first channel and the state of the second channel are active, the first network node may determine a path including the first channel and/or the second channel as the transmission path of the service. Specifically, the first network node may determine the first path as the transmission path of the service. In another example, when the state of the first channel is active and the state of the second channel is standby, the first network node may determine a path including the first channel as the transmission path of the service. Specifically, the first network node may determine the third path as the transmission path of the service. In still another example, when the state of the first channel is standby and the state of the second channel is active, the first network node may determine a path including the second channel as the transmission path of the service. Specifically, the first network node may determine the fourth path as the transmission path of the service. In yet another example, when both the state of the first channel and the state of the second channel are standby, the first network node may determine the first path as the transmission path of the service or determine to discard the service.

In a possible implementation, if the first channel and the third channel are configured as 1:1 protection switching channels, and the second channel and the fourth channel are configured as 1+1 protection switching channels, when both the state of the first channel and the state of the second channel are active, the first network node may determine a path including the first channel and/or the second channel as the transmission path of the service. Specifically, the first network node may determine the first path and the third path as the transmission paths of the service, where the third path is a unidirectional path, and on the third path, the first network node is an upstream node of the second network node. In another example, when the state of the first channel is active and the state of the second channel is standby, the first network node may determine a path including the first channel as the transmission path of the service. Specifically, the first network node may determine the first path and the third path as the transmission paths of the service, where the first path is a unidirectional path, and on the first path, the first channel is an upstream channel of the second channel. In still another example, when the state of the first channel is standby and the state of the second channel is active, the first network node may determine a path including the second channel as the transmission path of the service. Specifically, the first network node may determine the fourth path as the transmission path of the service. In yet another example, when both the state of the first channel and the state of the second channel are standby, the first network node may determine the fourth path as the transmission path of the service, where the fourth path is a unidirectional path, and on the fourth path, the first network node is a downstream node of the second network node.

In a possible implementation, if the first channel and the third channel are configured as 1+1 protection switching channels, and the second channel and the fourth channel are configured as 1:1 protection switching channels, in an example, when both the state of the first channel and the state of the second channel are active, the first network node may determine the first path and the fourth path as the transmission paths of the service, where the fourth path is a unidirectional path, and on the fourth path, the first network node is an upstream node of the second network node. In another example, when the state of the first channel is active and the state of the second channel is standby, the first network node may determine the third path as the transmission path of the service. In still another example, when the state of the first channel is standby and the state of the second channel is active, the first network node may determine the fourth path and the first path as the transmission paths of the service, where the first path is a unidirectional path, and on the first path, the second channel is an upstream channel of the first channel. In yet another example, when both the state of the first channel and the state of the second channel are standby, the first network node may determine the third path as the transmission path of the service, where the third path is a unidirectional path, and on the third path, the second network node is an upstream node of the first network node.

In a possible implementation, if the fifth channel is included between the first network node and the second network node, the first channel and the third channel are configured as 1+1 protection switching channels, and the second channel and the fourth channel are also configured as 1+1 protection switching channels, in an example, when both the state of the first channel and the state of the second channel are active, the first network node may determine the first path as the transmission path of the service. In another example, when the state of the first channel is active and the state of the second channel is standby, the first network node may determine the first path and the third path as the transmission paths of the service, where the first path is a unidirectional path, and on the first path, the first channel is an upstream channel of the second channel. In still another example, when the state of the first channel is standby and the state of the second channel is active, the first network node may determine the fourth path and the first path as the transmission paths of the service, where the first path is a unidirectional path, and on the first path, the second channel is an upstream channel of the first channel. In yet another example, when both the state of the first channel and the state of the second channel are standby, the first network node may determine the first path as the transmission path of the service.

In a possible implementation, if the sixth channel and the seventh channel are included between the first network node and the second network node, the first channel and the third channel are configured as 1+1 protection switching channels, and the second channel and the fourth channel are also configured as 1+1 protection switching channels, in an example, when both the state of the first channel and the state of the second channel are active, the first network node may determine the first path, the third path, and the fourth path as the transmission paths of the service, where the first path is a bidirectional path, both the third path and the fourth path are unidirectional paths, the unidirectional third path includes the seventh channel, and the unidirectional fourth path includes the sixth channel. In another example, when the state of the first channel is active and the state of the second channel is standby, the first network node may determine the first path and the third path as the transmission paths of the service, where the first path is a unidirectional path, the third path is a bidirectional path, and on the unidirectional first path, the first channel is an upstream channel of the second channel. In still another example, when the state of the first channel is standby and the state of the second channel is active, the first network node may determine the fourth path and the first path as the transmission paths of the service, where the first path is a unidirectional path, the fourth path is a bidirectional path, and on the unidirectional first path, the second channel is an upstream channel of the first channel. In yet another example, when both the state of the first channel and the state of the second channel are standby, the first network node may determine the third path and the fourth path as the transmission paths of the service, where both the third path and the fourth path are unidirectional paths, the unidirectional third path includes the sixth channel, and the unidirectional fourth path includes the seventh channel.

According to a third aspect, an embodiment of this application provides a data processing apparatus. The data processing apparatus is configured to perform the data processing method performed by the first network node according to any one of the second aspect. In a specific example, the data processing apparatus may include an obtaining unit and a processing unit. The obtaining unit is configured to obtain a state of a channel, where the state of the channel includes at least one state in a state set, the state set includes a state of a first channel, a state of a second channel, a state of a third channel, and a state of a fourth channel, the first channel and the second channel are separately connected to the first network node, the first channel and the second channel belong to a first path, the third channel and the fourth channel are separately connected to a second network node, the third channel and the fourth channel belong to a second path, the first channel and the third channel are protection switching channels for each other, and the second channel and the fourth channel are protection switching channels for each other. The processing unit is configured to determine a transmission path of a service based on the state of the channel, where the transmission path of the service is one or more paths in a path set, the path set includes the first path, the second path, a third path, and a fourth path, the third path includes the first channel and the fourth channel, and the fourth path includes the second channel and the third channel.

In a possible implementation, the first network node and the second network node are a same network node.

In a possible implementation, the first network node and the second network node are different network nodes, a fifth channel is included between the first network node and the second network node, and the third path and the fourth path further include the fifth channel.

In a possible implementation, the state set further includes a state of the fifth channel.

In a possible implementation, the first network node and the second network are different network nodes, a sixth channel and a seventh channel are included between the first network node and the second network node, and the third path and the fourth path each include the sixth channel or the seventh channel. When the first network node sends a service to the second network node through the third path, the third path includes the seventh channel; when the second network node sends a service to the first network node through the third path, the third path includes the sixth channel; when the first network node sends a service to the second network node through the fourth path, the fourth path includes the sixth channel; or when the second network node sends a service to the first network node through the fourth path, the fourth path includes the seventh channel.

In a possible implementation, the state set further includes a state of the sixth channel and a state of the seventh channel.

In a possible implementation, both the first network node and the second network node are provider edges PEs.

In a possible implementation, the first network node and the second network node are provider intermediate devices.

In a possible implementation, the first channel, the second channel, the third channel, and the fourth channel all are fine granularity channels; or the first channel, the second channel, the third channel, and the fourth channel all are metropolitan transport network MTN channels.

In a possible implementation, the first channel and the third channel are attachment circuit AC links, and the second channel and the fourth channel are fine granularity channels; or the first channel and the third channel are AC links, and the second channel and the fourth channel are MTN channels.

In a possible implementation, the state of the first channel is determined based on a first factor, and the first factor includes one or more of the following: the state of the third channel, local fault information of the first channel, first remote fault indication information received through the first channel, and the state of the second channel.

In a possible implementation, if the first network node and the second network node are different network nodes, the first factor further includes a state of a target channel, and the state of the target channel indicates whether the target channel is faulty. When the fifth channel is included between the first network node and the second network node, the target channel includes the fifth channel; or when the sixth channel and the seventh channel are included between the first network node and the second network node, the target channel includes the sixth channel and the seventh channel.

In a possible implementation, the first path is a working path, and the state of the first channel is determined in the following manner: when the state of the third channel is active active, determining that the state of the first channel is standby standby; or when the local fault information of the first channel indicates that a local fault occurs on the first channel, determining that the state of the first channel is standby; or when the first remote fault indication information is received through the first channel, determining that the state of the first channel is standby; or when the state of the second channel is standby and the state of the target channel indicates that the target channel is faulty, determining that the state of the first channel is standby.

In a possible implementation, the first path is a protection path, and the state of the first channel is determined in the following manner: when the state of the third channel is standby, determining that the state of the first channel is active; or when the local fault information of the first channel indicates that a local fault occurs on the first channel, determining that the state of the first channel is standby; or when the first remote fault indication information is received through the first channel, determining that the state of the first channel is standby; or when the state of the second channel is standby and the state of the target channel indicates that the target channel is faulty, determining that the state of the first channel is standby.

In a possible implementation, the obtaining unit is configured to receive the state of the third channel and the state of the fourth channel that are sent by the second network node.

In a possible implementation, if the fifth channel is included between the first network node and the second network node, the obtaining unit is configured to receive the state of the third channel and the state of the fourth channel that are sent by the second network node through the fifth channel.

In a possible implementation, if the sixth channel and the seventh channel are included between the first network node and the second network node, the obtaining unit is configured to: receive the state of the third channel that is sent by the second network node through the sixth channel, and receive the state of the fourth channel that is sent by the second network node through the seventh channel.

In a possible implementation, the obtaining unit is configured to receive state information of the third channel that is sent by the second network node, where the state information includes the state of the third channel.

In a possible implementation, the obtaining unit is configured to receive a first operation, administration and maintenance OAM code block sent by the second network node, where the first OAM code block carries the state information.

In a possible implementation, a type field of the first OAM code block indicates that the first OAM code block carries the state information.

In a possible implementation, the first OAM code block is a first automatic protection switching APS code block, and the state information is carried in an available field of the first APS code block.

In a possible implementation, the obtaining unit is configured to receive a first Ethernet packet sent by the second network node, where the first Ethernet packet includes the state information.

In a possible implementation, the state information further includes: local fault information of the third channel, and/or second remote fault indication information received through the third channel.

In a possible implementation, the apparatus further includes a sending unit, configured to send the state of the first channel and the state of the second channel to the second network node.

In a possible implementation, the apparatus further includes: a sending unit, configured to: when the state of the second channel is standby and the state of the target channel indicates that the target channel is faulty, send third remote fault indication information through the first channel.

In a possible implementation, target fault indication information is carried in a second OAM code block, and the target fault indication information includes the first remote fault indication information, the second remote fault indication information, or the third remote fault indication information.

In a possible implementation, a type field of the second OAM code block indicates that the second OAM code block carries the target remote fault indication information.

In a possible implementation, the second OAM code block is a basic code block, and the target remote fault indication information is carried in a reserved field or a remote defect indication RDI field of the basic code block.

In a possible implementation, the second OAM code block is a second APS code block, and the target remote fault indication information is carried in an available field of the second APS code block.

In a possible implementation, the apparatus further includes: a sending unit, configured to send or receive a target OAM message through the first channel. The target OAM message is an end-to-end fine-granularity channel OAM message; or an O code block type field of the target OAM message indicates a message type of the target OAM message; or a type field of the target OAM code block indicates a message type of the target OAM message.

In a possible implementation, the first channel and the third channel are configured as 1:1 protection switching channels, and the second channel and the fourth channel are also configured as 1:1 protection switching channels. The processing unit is configured to: when both the state of the first channel and the state of the second channel are active, determine the first path as the transmission path of the service; or when the state of the first channel is active and the state of the second channel is standby, determine the third path as the transmission path of the service; or when the state of the first channel is standby and the state of the second channel is active, determine the fourth path as the transmission path of the service; or when both the state of the first channel and the state of the second channel are standby, determine the first path as the transmission path of the service or determine to discard the service.

In a possible implementation, the first channel and the third channel are configured as 1:1 protection switching channels, and the second channel and the fourth channel are configured as 1+1 protection switching channels. The processing unit is configured to: when both the state of the first channel and the state of the second channel are active, determine the first path and the third path as the transmission paths of the service, where the third path is a unidirectional path, and on the third path, the first network node is an upstream node of the second network node; or when the state of the first channel is active and the state of the second channel is standby, determine the first path and the third path as the transmission paths of the service, where the first path is a unidirectional path, and on the first path, the first channel is an upstream channel of the second channel; or when the state of the first channel is standby and the state of the second channel is active, determine the fourth path as the transmission path of the service; or when both the state of the first channel and the state of the second channel are standby, determine the fourth path as the transmission path of the service, where the fourth path is a unidirectional path, and on the fourth path, the first network node is a downstream node of the second network node.

In a possible implementation, the first channel and the third channel are configured as 1+1 protection switching channels, and the second channel and the fourth channel are configured as 1:1 protection switching channels. The processing unit is configured to: when both the state of the first channel and the state of the second channel are active, determine the first path and the fourth path as the transmission paths of the service, where the fourth path is a unidirectional path, and on the fourth path, the first network node is an upstream node of the second network node; or when the state of the first channel is active and the state of the second channel is standby, determine the third path as the transmission path of the service; or when the state of the first channel is standby and the state of the second channel is active, determine the fourth path and the first path as the transmission paths of the service, where the first path is a unidirectional path, and on the first path, the second channel is an upstream channel of the first channel; or when both the state of the first channel and the state of the second channel are standby, determine the third path as the transmission path of the service, where the third path is a unidirectional path, and on the third path, the second network node is an upstream node of the first network node.

In a possible implementation, the first channel and the third channel are configured as 1+1 protection switching channels, and the second channel and the fourth channel are also configured as 1+1 protection switching channels. The processing unit is configured to: when both the state of the first channel and the state of the second channel are active, determine the first path as the transmission path of the service; or when the state of the first channel is active and the state of the second channel is standby, determine the first path and the third path as the transmission paths of the service, where the first path is a unidirectional path, and on the first path, the first channel is an upstream channel of the second channel; or when the state of the first channel is standby and the state of the second channel is active, determine the fourth path and the first path as the transmission paths of the service, where the first path is a unidirectional path, and on the first path, the second channel is an upstream channel of the first channel; or when both the state of the first channel and the state of the second channel are standby, determine the first path as the transmission path of the service.

In a possible implementation, the first channel and the third channel are configured as 1+1 protection switching channels, and the second channel and the fourth channel are also configured as 1+1 protection switching channels. The processing unit is configured to: when both the state of the first channel and the state of the second channel are active, determine the first path, the third path, and the fourth path as the transmission paths of the service, where the first path is a bidirectional path, both the third path and the fourth path are unidirectional paths, the unidirectional third path includes the seventh channel, and the unidirectional fourth path includes the sixth channel; or when the state of the first channel is active and the state of the second channel is standby, determine the first path and the third path as the transmission paths of the service, where the first path is a unidirectional path, the third path is a bidirectional path, and on the unidirectional first path, the first channel is an upstream channel of the second channel; or when the state of the first channel is standby and the state of the second channel is active, determine the fourth path and the first path as the transmission paths of the service, where the first path is a unidirectional path, the fourth path is a bidirectional path, and on the unidirectional first path, the second channel is an upstream channel of the first channel; or when both the state of the first channel and the state of the second channel are standby, determine the third path and the fourth path as the transmission paths of the service, where both the third path and the fourth path are unidirectional paths, the unidirectional third path includes the sixth channel, and the unidirectional fourth path includes the seventh channel.

According to a fourth aspect, an embodiment of this application provides a data processing apparatus, including a communication interface and a processor. The communication apparatus performs the method according to any one of the second aspect according to the communication interface and the processor.

In a specific design, the data processing apparatus may be a chip, the communication interface includes an interface circuit, and the processor includes a processing circuit. The interface circuit may include an input circuit and an output circuit. The processing circuit is configured to: receive a signal by using the input circuit, and transmit a signal by using the output circuit, so that any implementation of the second aspect is implemented.

According to a fifth aspect, an embodiment of this application provides a computer-readable storage medium, including instructions or a computer program. When the instructions or the computer program is run on a processor, the method according to any one of the second aspect is performed.

According to a sixth aspect, an embodiment of this application provides a computer program product, including the computer program product. When the computer program product runs on a processor, the method according to any one of the second aspect and the implementations of the second aspect is performed.

According to a seventh aspect, an embodiment of this application provides a chip system. The chip system may include a processor. The processor is coupled to a memory, and may be configured to perform any implementation of the second aspect. Optionally, the chip system further includes the memory. The memory is configured to store a computer program (which may also be referred to as code or instructions). The processor is configured to invoke the computer program from the memory and run the computer program, so that an apparatus in which the chip system is installed performs any implementation of the second aspect.

According to an eighth aspect, an embodiment of this application provides a data processing apparatus, including an interface circuit and a processing circuit. The interface circuit may include an input circuit and an output circuit. The processing circuit is configured to: receive a signal by using the input circuit, and transmit a signal by using the output circuit, so that any implementation of the second aspect is implemented. In a specific implementation, the processing circuit includes an operation performed by a FlexE shim layer.

In a specific implementation process, the data processing apparatus may be a chip, the input circuit may be an input pin, the output circuit may be an output pin, and the processing circuit may be a transistor, a gate circuit, a trigger, various logic circuits, or the like. An input signal that is received by the input circuit may be received and input by, for example, but not limited to, a receiver, a signal that is output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In another implementation, the data processing apparatus may be some components in a first network node, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

To describe the technical solutions in embodiments of this application or the conventional technology more clearly, the following briefly describes the accompanying drawings for describing embodiments or the conventional technology. It is clear that the accompanying drawings in the following descriptions show only some embodiments recorded in this application, and persons of ordinary skill in the art may still derive other drawings from these accompanying drawings without creative efforts.
FIG. 1a is a diagram of an example application scenario according to an embodiment of this application;
FIG. 1b is a diagram of another example application scenario according to an embodiment of this application;
FIG. 1c is a diagram of another example application scenario according to an embodiment of this application;
FIG. 1d is a diagram of another example application scenario according to an embodiment of this application;
FIG. 1e is a diagram of another example application scenario according to an embodiment of this application;
FIG. 1f is a diagram of still another example application scenario according to an embodiment of this application;
FIG. 2a is a diagram of a transmission path according to an embodiment of this application;
FIG. 2b is a diagram of another transmission path according to an embodiment of this application;
FIG. 2c is a diagram of another transmission path according to an embodiment of this application;
FIG. 2d is a diagram of still another transmission path according to an embodiment of this application;
FIG. 3 is a schematic flowchart of a method for determining a transmission path of a service according to an embodiment of this application;
FIG. 4a is a schematic flowchart of determining a state of a first channel according to an embodiment of this application;
FIG. 4b is a schematic flowchart of determining a state of a first channel according to an embodiment of this application;
FIG. 4c is a diagram of a structure of a first OAM code block according to an embodiment of this application;
FIG. 4d is a diagram of a structure of another first OAM code block according to an embodiment of this application;
FIG. 4e is a diagram of a structure of a first APS code block according to an embodiment of this application;
FIG. 4f is a diagram of a structure of another first APS code block according to an embodiment of this application;
FIG. 4g is a diagram of a structure of a first Ethernet packet according to an embodiment of this application;
FIG. 4h is a diagram of a structure of a second OAM code block according to an embodiment of this application;
FIG. 4i is a diagram of a structure of another second OAM code block according to an embodiment of this application;
FIG. 4j is a diagram of a structure of a basic code block according to an embodiment of this application;
FIG. 4k is a diagram of a structure of another basic code block according to an embodiment of this application;
FIG. 5a(1) and FIG. 5a(2) are a diagram of a technical architecture according to an embodiment of this application;
FIG. 5b(1) and FIG. 5b(2) are a diagram of another technical architecture according to an embodiment of this application;
FIG. 5c(1) and FIG. 5c(2) are a diagram of still another technical architecture according to an embodiment of this application;
FIG. 5d(1) and FIG. 5d(2) are a diagram of another technical architecture according to an embodiment of this application;
FIG. 6a(1) and FIG. 6a(2) are a diagram of an example application scenario according to an embodiment of this application;
FIG. 6b(1) and FIG. 6b(2) are a diagram of an example application scenario according to an embodiment of this application;
FIG. 6c(1) and FIG. 6c(2) are a diagram of an example application scenario according to an embodiment of this application;
FIG. 6d(1) and FIG. 6d(2) are a diagram of an example application scenario according to an embodiment of this application;
FIG. 6e(1) and FIG. 6e(2) are a diagram of an example application scenario according to an embodiment of this application;
FIG. 6f(1) and FIG. 6f(2) are a diagram of an example application scenario according to an embodiment of this application;
FIG. 6g(1) and FIG. 6g(2) are a diagram of an example application scenario according to an embodiment of this application;
FIG. 6h(1) and FIG. 6h(2) are a diagram of an example application scenario according to an embodiment of this application;
FIG. 7a is a diagram of an example application scenario according to an embodiment of this application;
FIG. 7b is a diagram of another example application scenario according to an embodiment of this application;
FIG. 7c is a diagram of another example application scenario according to an embodiment of this application;
FIG. 7d is a diagram of another example application scenario according to an embodiment of this application;
FIG. 7e is a diagram of another example application scenario according to an embodiment of this application;
FIG. 7f is a diagram of still another example application scenario according to an embodiment of this application;
FIG. 8 is a diagram of a structure of a data processing apparatus according to an embodiment of this application;
FIG. 9 is a diagram of a structure of a data processing device according to an embodiment of this application; and
FIG. 10 is a diagram of a structure of a data processing device according to an embodiment of this application.

### DESCRIPTION OF EMBODIMENTS

Embodiments of this application provide a data processing method and apparatus, and a communication system, to reduce service traffic transmission interruption.

In an example, a FlexE technology may be applied to a communication network. In this case, a path used for service traffic transmission in the communication network may be an MTN path. The MTN path may be understood as a path including an MTN channel.

In another example, the communication network may carry a fine-grained service. In this case, a path used for service traffic transmission in the communication network may be a fine granularity path. The fine granularity path may be understood as a path including a fine granularity channel.

The following briefly describes related content of the FlexE and the fine-grained service.

Flexible Ethernet group (FlexE group): Each FlexE group includes one or more PHYs. When a plurality of PHYs are included, the plurality of PHYs are physically independent. A network device to which the FlexE technology is applied may identify, by using PHY numbers, specific PHYs included in a FlexE group, to implement logical bonding of a plurality of PHYs. For example, each PHY number may be identified by using one number ranging from 1 to 254, and 0 and 255 are reserved numbers. A number of one PHY may correspond to one interface on the network device. Two adjacent network devices need to use a same number to identify a same PHY. Numbers PHYs included in a FlexE group do not need to be consecutive. Usually, there is one FlexE group between two network devices. However, this application does not limit that there is only one FlexE group between two network devices. In other words, there may be a plurality of FlexE groups between two network devices. One PHY may be used to carry at least one client, and one client may be transmitted on at least one PHY. The FlexE may support mapping and transmission of any plurality of different FlexE clients over any group of PHYs, to implement PHY bonding, channelization, sub-rating, and other functions.

FlexE client: The FlexE client corresponds to various user interfaces or bandwidths of a network. The FlexE client represents a client data stream transmitted in a specified slot (one or more slots) in a FlexE group. One FlexE group may carry a plurality of FlexE clients, and one FlexE client may correspond to one or more user service data streams (which may also be referred to as MAC clients). The FlexE client may be flexibly configured based on a bandwidth requirement, to support Ethernet medium access control (media access control, MAC) data streams at various rates (for example, 10G, 40G, n*25G data streams, and even non-standard rate data streams). For example, the data streams may be transmitted to a FlexE shim layer through 64B/66B coding. Clients sent by using a same FlexE group need to share a same clock, and these clients need to perform adaptation based on allocated slot rates. In this application, a FlexE client (which may also be referred to as a FlexE client interface) may be used to transmit a service data stream corresponding to the FlexE client. The FlexE client interface is a logical interface. Each FlexE interface may be logically divided into one or more FlexE client interfaces, each FlexE interface may be divided into a plurality of slots in time domain, and each FlexE client interface occupies at least one of the plurality of slots. 64/66B means that a data code block includes 66 bits. In the 66 bits, the first two bits are synchronization bits, and the last 64 bits are data bits. At a physical coding sublayer (Physical Coding Sublayer, PCS), 64/66B may be extracted by using the first two synchronization bits.

FlexE shim: The FlexE shim is an additional logical layer inserted between a MAC and a PHY (PCS) in a conventional Ethernet architecture, and is a core architecture for implementing the FlexE technology through a slot distribution mechanism. For a transmit end, a main function of the FlexE shim is to encapsulate data into a slot (slot) obtained through pre-division. Then, slots obtained through division are mapped to PHYs in a FlexE group based on a FlexE slot table for transmission. Each slot is mapped to one PHY in the FlexE group. A 100GE PHY is used as an example. The FlexE shim layer may divide each 100GE PHY in the FlexE group into data bearer channels of 20 slots (slot). A bandwidth corresponding to each slot is 5 Gbps. Each time 64/66B data of 1023*20 slots is sent over the PHY, one FlexE overhead (Overhead, OH) is inserted to notify a receive end of how to parse received data.

Fine-grained service: In some embodiments, a slot corresponding to a large bandwidth may be further divided into a plurality of sub-slots (sub-slots), to carry a client service having a low bandwidth requirement. The foregoing service is also referred to as a fine-grained service. For example, the foregoing large bandwidth may be understood as a bandwidth corresponding to a service layer of the fine-grained service. For example, when the service layer of the fine-grained service is an MTN path layer, a bandwidth of the MTN path layer is 5 Gbps, and a slot corresponding to a large bandwidth of 5 Gbps is further divided into 480 sub-slots in a granularity of 10 Mbps. The 480 sub-slots are used to carry the fine-grained service. For example, a 1^{st} sub-slot, a 3^{rd} sub-slot, and a 5^{th} sub-slot in the 480 sub-slots are used to carry a fine-grained service 1. For another example, when the service layer of the fine-grained service is a 10GE Ethernet physical layer, a corresponding large bandwidth is further divided into a plurality of sub-slots in a finer granularity, to carry the fine-grained service. It can be learned that a fine-grained bandwidth has a finer granularity, and the fine-grained service is a service having a low bandwidth requirement. For example, a bandwidth requirement of a power private line service is 10 Mbps. In this case, a fine granularity technology may be used to allocate a specified bandwidth to the power private line service, to carry service traffic of the power private line service. The power private line service is a fine-grained service.

When the fine-grained service is transmitted, for the transmit end, in an example, the FlexE shim may encapsulate, based on a fine granularity slot configuration, data into a sub-slot obtained through pre-division for transmission. For the receive end, the FlexE shim may restore, based on the fine granularity slot configuration, data received in the slot corresponding to the bandwidth of 5 Gbps to original fine-grained service data and continue transmission. In another example, for the transmit end, data may be encapsulated into a corresponding sub-slot for transmission by using an MTN path adaptation function (MTN path adaptation function). For the receive end, data received in the slot corresponding to the bandwidth of 5 Gbps may be restored to original fine-grained service data and transmission is continued by using the MTN path adaptation function. In an example, the fine-grained service data may be carried in a fine granularity unit (fine granularity unit, FGU) base frame. In an example, a fine granularity unit may also be referred to as a fine granularity basic unit (fine granularity basic unit, fgBU). In the following descriptions, the two may be used interchangeably.

For a specific implementation of a FlexE OH insertion manner and a structure of an overhead frame, refer to related FlexE descriptions of the optical internetworking forum (optical internetworking forum, OIF). Details are not described herein.

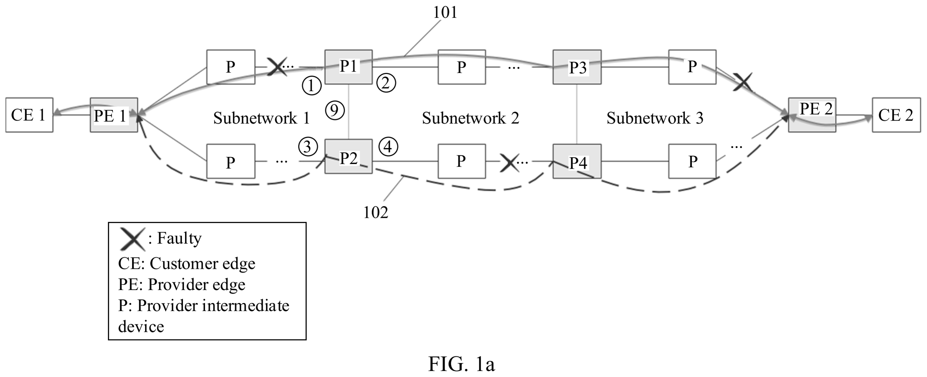

Currently, to provide better quality of service for a service, a plurality of paths used for service traffic transmission may be provided. In an example, an active path and a standby path may be provided for the service, and the active path and the standby path may be protection switching paths for each other. In a specific example, when the active path is normal, the active path may be used for service traffic transmission, and when the active path is faulty, the standby path may be used for service traffic transmission. However, in this manner, once both the active path and the standby path are faulty, service traffic is interrupted. Refer to FIG. 1a to FIG. 1f for understanding.

FIG. 1a is a diagram of an example application scenario according to an embodiment of this application. As shown in FIG. 1a, service traffic between a customer edge (customer edge, CE) 1 and a CE 2 may be transmitted through two paths. For example, the CE 1 sends the service traffic to the CE 2: The CE 1 may forward the service traffic to a PE 1; the PE 1 may forward the service traffic to a PE 2 through a path 101 represented by a solid line in FIG. 1a, or may forward the service traffic to the PE 2 through a path 102 represented by a dashed line in FIG. 1a; and the PE 2 further forwards the received service traffic to the CE 2. In an example, the path 101 and the path 102 may be protection switching paths for each other. If a fault, for example, a fault shown in FIG. 1a, occurs on each of the path 101 and the path 102, service traffic transmission is interrupted.

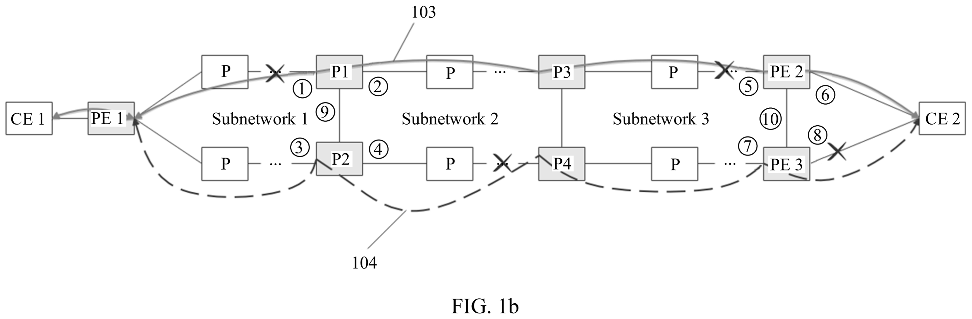

FIG. 1b is a diagram of another example application scenario according to an embodiment of this application. As shown in FIG. 1b, service traffic between a CE 1 and a CE 2 may be transmitted through two paths. For example, the CE 1 sends the service traffic to the CE 2: The CE 1 may forward the service traffic to a PE 1; and the PE 1 may forward the service traffic to the CE 2 through a path 103 represented by a solid line in FIG. 1b, or may forward the service traffic to the CE 2 through a path 104 represented by a dashed line in FIG. 1b. In an example, the path 103 and the path 104 may be protection switching paths for each other. If a fault, for example, a fault shown in FIG. 1b, occurs on each of the path 103 and the path 104, service traffic transmission is interrupted.

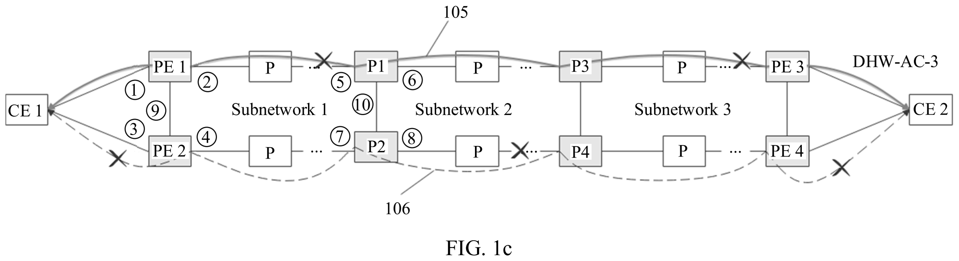

FIG. 1c is a diagram of another example application scenario according to an embodiment of this application. As shown in FIG. 1c, service traffic between a CE 1 and a CE 2 may be transmitted through two paths. For example, the CE 1 sends the service traffic to the CE 2: The CE 1 may forward the service traffic to the CE 2 through a path 105 represented by a solid line in FIG. 1c, or may forward the service traffic to the CE 2 through a path 106 represented by a dashed line in FIG. 1c. If a fault, for example, a fault shown in FIG. 1c, occurs on each of the path 105 and the path 106, service traffic transmission is interrupted.

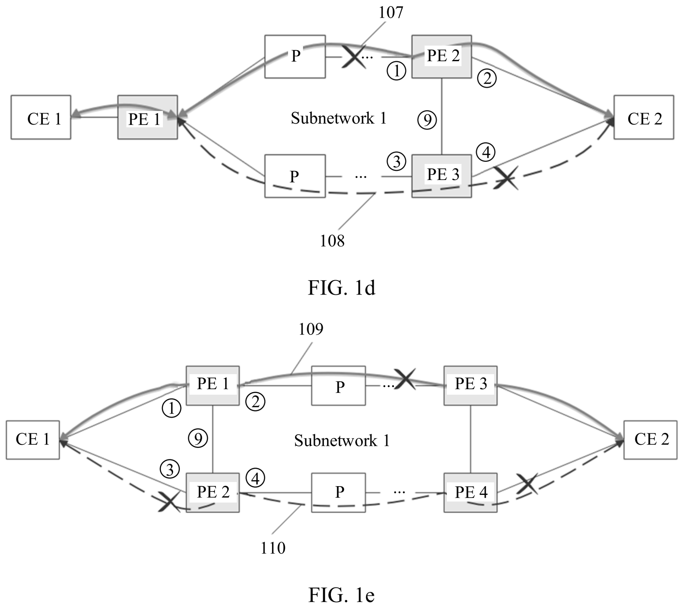

FIG. 1d is a diagram of another example application scenario according to an embodiment of this application. As shown in FIG. 1d, service traffic between a CE 1 and a CE 2 may be transmitted through two paths. For example, the CE 1 sends the service traffic to the CE 2: The CE 1 may forward the service traffic to a PE 1; and the PE 1 may forward the service traffic to the CE 2 through a path 107 represented by a solid line in FIG. 1d, or may forward the service traffic to the CE 2 through a path 108 represented by a dashed line in FIG. 1d. In an example, the path 107 and the path 108 may be protection switching paths for each other. If a fault, for example, a fault shown in FIG. 1d, occurs on each of the path 107 and the path 108, service traffic transmission is interrupted.

FIG. 1e is a diagram of another example application scenario according to an embodiment of this application. As shown in FIG. 1e, service traffic between a CE 1 and a CE 2 may be transmitted through a path 109 or a path 110. In an example, the path 109 and the path 110 may be protection switching paths for each other. If a fault, for example, a fault shown in FIG. 1e, occurs on each of the path 109 and the path 110, service traffic transmission is interrupted.

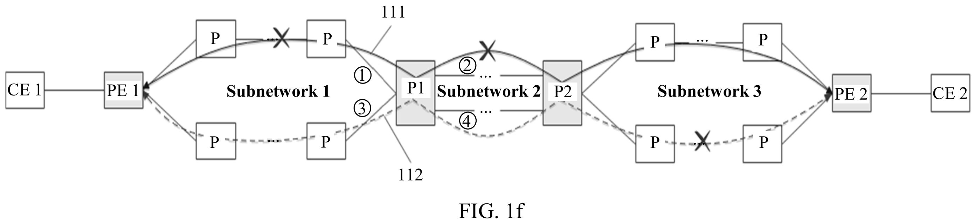

FIG. 1f is a diagram of still another example application scenario according to an embodiment of this application. As shown in FIG. 1f, service traffic between a CE 1 and a CE 2 may be transmitted through two paths. For example, the CE 1 sends the service traffic to the CE 2: The CE 1 may forward the service traffic to a PE 1; the PE 1 may forward the service traffic to a PE 2 through a path 111 represented by a solid line in FIG. 1f, or may forward the service traffic to the PE 2 through a path 112 represented by a dashed line in FIG. 1f; and the PE 2 further forwards the received service traffic to the CE 2. In an example, the path 111 and the path 112 may be protection switching paths for each other. If a fault, for example, a fault shown in FIG. 1f, occurs on each of the path 111 and the path 112, service traffic transmission is interrupted.

To resolve the foregoing problem, an embodiment of this application provides a communication system. For example, the communication system may be used in the network scenarios shown in FIG. 1a to FIG. 1f.

The communication system provided in this embodiment of this application includes a target network. In this embodiment of this application, the target network includes at least one subnetwork domain, the at least one subnetwork domain includes a first subnetwork domain, the first subnetwork domain includes a first network node and a second network node, the first network node belongs to a first path, and the second network node belongs to a second path. In a specific example, the first path and the second path may be protection switching paths for each other. In another specific example, the first path and the second path may be load sharing paths for each other.

The first path includes a first channel and a second channel that are connected to the first network node. The first channel and the second channel may be respectively data transmission channels between the first network node and upstream and downstream nodes of the first network node on the first path. For example, the first channel is a channel between the first network node and the upstream node of the first network node on the first path, and the second channel is a channel between the first network node and the downstream node of the first network node on the first path. For another example, the first channel is a channel between the first network node and the downstream node of the first network node on the first path, and the second channel is a channel between the first network node and the upstream node of the first network node on the first path.

The second path includes a third channel and a fourth channel that are connected to the second network node. The third channel and the fourth channel may be respectively data transmission channels between the second network node and upstream and downstream nodes of the second network node on the second path. For example, the third channel is a channel between the second network node and the upstream node of the second network node on the second path, and the fourth channel is a channel between the second network node and the downstream node of the second network node on the second path. For another example, the third channel is a channel between the second network node and the downstream node of the second network node on the second path, and the fourth channel is a channel between the second network node and the upstream node of the second network node on the second path.

In this embodiment of this application, the first channel and the third channel are protection switching channels for each other, and the second channel and the fourth channel are also protection switching channels for each other. In an example, when the first channel is a channel between the first network node and the upstream node of the first network node on the first path, the third channel is a channel between the second network node and the upstream node of the second network node on the second path. Correspondingly, when the second channel is a channel between the first network node and the downstream node of the first network node on the first path, the fourth channel is a channel between the second network node and the downstream node of the second network node on the second path. In another example, when the first channel is a channel between the first network node and the downstream node of the first network node on the first path, the third channel is a channel between the second network node and the downstream node of the second network node on the second path. Correspondingly, when the second channel is a channel between the first network node and the upstream node of the first network node on the first path, the fourth channel is a channel between the second network node and the upstream node of the second network node on the second path.

In an example, the first network node and the second network node may be different network nodes. For example, when the target network corresponds to a network used for service traffic transmission between the CE 1 and the CE 2 in FIG. 1a to FIG. 1e, the first network node and the second network node are different network nodes.

In an example, when the first network node and the second network node are different network nodes, a fifth channel may be included between the first network node and the second network node, and service traffic may be transmitted between the first network node and the second network node through the fifth channel.

In another example, when the first network node and the second network node are different network nodes, a sixth channel and a seventh channel may be included between the first network node and the second network node, and service traffic may be transmitted between the first network node and the second network node through the sixth channel and/or the seventh channel.

In some embodiments, when the target network corresponds to a network used for service traffic transmission between the CE 1 and the CE 2 in FIG. 1a, the first subnetwork domain may correspond to a subnetwork 1, a subnetwork 2, or a subnetwork 3 shown in FIG. 1a. The first path may be the path 101 shown in FIG. 1a, and the second path may be the path 102 shown in FIG. 1a. In this case, both the first network node and the second network node may be P. In an example, the first channel, the second channel, the third channel, and the fourth channel all may be MTN channels. In this case, the service traffic between the CE 1 and the CE 2 may be transmitted through the MTN channels in the target network. Correspondingly, if the fifth channel is included between the first network node and the second network node, the fifth channel may also be an MTN channel; or if the sixth channel and the seventh channel are included between the first network node and the second network node, the sixth channel and the seventh channel may also be MTN channels, and the service traffic between the first network node and the second network node may be transmitted through the MTN channels. In another example, the first channel, the second channel, the third channel, and the fourth channel all may be fine granularity channels. In this case, the service traffic between the CE 1 and the CE 2 may be transmitted through the fine granularity channels in the target network. Correspondingly, if the fifth channel is included between the first network node and the second network node, the fifth channel may also be a fine granularity channel; or if the sixth channel and the seventh channel are included between the first network node and the second network node, the sixth channel and the seventh channel may also be fine granularity channels, and the service traffic between the first network node and the second network node may be transmitted through the fine granularity channels.

In a specific example, the first network node may correspond to P1 shown in FIG. 1a, and the second network node may correspond to P2 shown in FIG. 1a. In this case, the first channel may correspond to a channel ① shown in FIG. 1a, the second channel may correspond to a channel ② shown in FIG. 1a, the third channel may correspond to a channel ③ shown in FIG. 1a, the fourth channel may correspond to a channel ④ shown in FIG. 1a, and the fifth channel may correspond to a channel ⑨ shown in FIG. 1a. In another specific example, the first network node may alternatively be P3 shown in FIG. 1a, and the second network node may alternatively be P4 shown in FIG. 1b.

In some other embodiments, when the target network corresponds to a network used for service traffic transmission between the CE 1 and the CE 2 in FIG. 1b, the first subnetwork domain may correspond to a subnetwork 1, a subnetwork 2, or a subnetwork 3 shown in FIG. 1b. The first path may be the path 103 shown in FIG. 1b, and the second path may be the path 104 shown in FIG. 1b. In an example, both the first network node and the second network node may be P. In a specific example, the first network node may correspond to P1 shown in FIG. 1b, the second network node may correspond to P2 shown in FIG. 1b, the first channel may correspond to a channel ① shown in FIG. 1b, the second channel may correspond to a channel ② shown in FIG. 1b, the third channel may correspond to a channel ③ shown in FIG. 1b, the fourth channel may correspond to a channel ④ shown in FIG. 1b, and the fifth channel may correspond to a channel ⑨ shown in FIG. 1b. In another specific example, the first network node may alternatively be P3 shown in FIG. 1b, and the second network node may alternatively be P4 shown in FIG. 1b. In this case, in an example, the first channel, the second channel, the third channel, and the fourth channel all may be MTN channels, and correspondingly the fifth channel is also an MTN channel. In another example, the first channel, the second channel, the third channel, and the fourth channel all may be fine granularity channels, and correspondingly the fifth channel is also a fine granularity channel. In another example, both the first network node and the second network node may be PEs. In a specific example, the first network node may correspond to the PE 2 shown in FIG. 1b, the second network node may correspond to the PE 3 shown in FIG. 1b, the first channel may, for example, correspond to a channel ⑤ shown in FIG. 1b, the second channel may correspond to a channel ⑥ shown in FIG. 1b, the third channel may correspond to a channel ⑦ shown in FIG. 1b, the fourth channel may correspond to a channel ⑧ shown in FIG. 1b, and the fifth channel may correspond to a channel ⑩ shown in FIG. 1b. In this case, in an example, both the first channel and the third channel may be MTN channels, the second channel and the fourth channel may be AC links, and correspondingly the fifth channel is an MTN channel. In another example, both the first channel and the third channel may be fine granularity channels, the second channel and the fourth channel may be AC links, and correspondingly the fifth channel is a fine granularity channel.

In some other embodiments, when the target network corresponds to a network used for service traffic transmission between the CE 1 and the CE 2 in FIG. 1c, the first subnetwork domain may correspond to a subnetwork 1, a subnetwork 2, or a subnetwork 3 shown in FIG. 1c. The first path may be the path 105 shown in FIG. 1c, and the second path may be the path 106 shown in FIG. 1c. In an example, both the first network node and the second network node may be PEs. In a specific example, the first network node may correspond to the PE 1 shown in FIG. 1c, the second network node may correspond to the PE 2 shown in FIG. 1c, the first channel may correspond to a channel ① shown in FIG. 1c, the second channel may correspond to a channel ② shown in FIG. 1c, the third channel may correspond to a channel ③ shown in FIG. 1c, the fourth channel may correspond to a channel ④ shown in FIG. 1c, and the fifth channel may correspond to a channel ⑨ shown in FIG. 1c. In an example, both the first channel and the third channel may be AC links, both the second channel and the fourth channel may be MTN channels, and correspondingly the fifth channel is an MTN channel. In another example, both the first channel and the third channel may be AC links, both the second channel and the fourth channel may be fine granularity channels, and correspondingly the fifth channel is a fine granularity channel. In another specific example, the first network node may alternatively be the PE 3 shown in FIG. 1c, and the second network node may alternatively be the PE 4 shown in FIG. 1c. Details are not described herein again. In another example, both the first network node and the second network node may be P. In a specific example, the first network node may correspond to P1 shown in FIG. 1c, the second network node may correspond to P2 shown in FIG. 1c, the first channel may correspond to a channel ⑤ shown in FIG. 1c, the second channel may correspond to a channel ⑥ shown in FIG. 1c, the third channel may correspond to a channel ⑦ shown in FIG. 1c, the fourth channel may correspond to a channel ⑧ shown in FIG. 1c, and the fifth channel may correspond to a channel ⑩ shown in FIG. 1c. In this case, in an example, the first channel, the second channel, the third channel, and the fourth channel all may be MTN channels, and the fifth channel is also an MTN channel. In another example, the first channel, the second channel, the third channel, and the fourth channel all may be fine granularity channels, and the fifth channel is also an MTN channel.

In still some other embodiments, when the target network corresponds to a network used for service traffic transmission between the CE 1 and the CE 2 in FIG. 1d, the first subnetwork domain may correspond to a subnetwork 1 shown in FIG. 1d. The first path may be the path 107 shown in FIG. 1d, the second path may be the path 108 shown in FIG. 1d, and both the first network node and the second network node may be PEs. In a specific example, the first network node may correspond to the PE 2 shown in FIG. 1d, the second network node may correspond to the PE 3 shown in FIG. 1d, the first channel may correspond to a channel ① shown in FIG. 1d, the second channel may correspond to a channel ② shown in FIG. 1d, the third channel may correspond to a channel ③ shown in FIG. 1d, the fourth channel may correspond to a channel ④ shown in FIG. 1d, and the fifth channel may correspond to a channel ⑨ shown in FIG. 1d. In an example, both the first channel and the third channel may be MTN channels, both the second channel and the fourth channel may be AC links, and correspondingly the fifth channel is an MTN channel. In another example, both the first channel and the third channel may be fine granularity channels, both the second channel and the fourth channel may be AC links, and correspondingly the fifth channel is a fine granularity channel.

In still some other embodiments, when the target network corresponds to a network used for service traffic transmission between the CE 1 and the CE 2 in FIG. 1e, the first subnetwork domain may correspond to a subnetwork 1 shown in FIG. 1e. The first path may be the path 109 shown in FIG. 1e, the second path may be the path 110 shown in FIG. 1e, and both the first network node and the second network node may be PEs. In a specific example, the first network node may correspond to the PE 1 shown in FIG. 1e, the second network node may correspond to the PE 2 shown in FIG. 1e, the first channel may correspond to a channel ① shown in FIG. 1e, the second channel may correspond to a channel ② shown in FIG. 1e, the third channel may correspond to a channel ③ shown in FIG. 1e, the fourth channel may correspond to a channel ④ shown in FIG. 1e, and the fifth channel may correspond to a channel ⑨ shown in FIG. 1e. In an example, both the first channel and the third channel may be AC links, both the second channel and the fourth channel may be MTN channels, and correspondingly the fifth channel is an MTN channel. In another example, both the first channel and the third channel may be AC links, both the second channel and the fourth channel may be fine granularity channels, and correspondingly the fifth channel is a fine granularity channel. In another specific example, the first network node may correspond to the PE 3 shown in FIG. 1e, and the second network node may correspond to the PE 4 shown in FIG. 1e. In this case, for the first channel, the second channel, the third channel, and the fourth channel, refer to the foregoing related descriptions in FIG. 1d. Details are not described herein again.

Although in FIG. 1a to FIG. 1e, both the first network node and the second network node show one channel (the channel ⑨), in some other examples, a plurality of channels may be included between the first network node and the second network node. For example, in the scenario shown in FIG. 1a, the first network node and the second network node do not include the channel ⑨ shown in FIG. 1a, but include a channel ⑪ and a channel ⑫. Correspondingly, the sixth channel and the seventh channel may respectively correspond to the channel ⑪ and the channel ⑫. In this case, in an example, the first channel, the second channel, the third channel, and the fourth channel all may be MTN channels, and correspondingly the sixth channel and the seventh channel are also MTN channels. In another example, the first channel, the second channel, the third channel, and the fourth channel all may be fine granularity channels, and correspondingly the sixth channel and the seventh channel are also fine granularity channels.

In an example, the first network node and the second network node may be a same network node. For example, when the target network corresponds to a network used for service traffic transmission between the CE 1 and the CE 2 in FIG. 1f, the first network node and the second network node are a same network node. In a specific example, both the first network node and the second network node may correspond to P1 shown in FIG. 1f, the first channel may correspond to a channel ① shown in FIG. 1f, the second channel may correspond to a channel ② shown in FIG. 1f, the third channel may correspond to a channel ③ shown in FIG. 1f, and the fourth channel may correspond to a channel ④ shown in FIG. 1f. In an example, the first channel, the second channel, the third channel, and the fourth channel all may be MTN channels. In another example, the first channel, the second channel, the third channel, and the fourth channel all may be fine granularity channels. In another specific example, both the first network node and the second network node may correspond to P2 shown in FIG. 1f. Details are not described herein.

In this embodiment of this application, a state of the first channel, a state of the second channel, a state of the third channel, and a state of the fourth channel may form a state set, and the state set may include at least the state of the first channel, the state of the second channel, the state of the third channel, and the state of the fourth channel. For any one of the first channel, the second channel, the third channel, and the fourth channel, a state of the channel may mean an active/standby state of the channel, and the active/standby state may be active or standby.

In an example, the first network node may determine a transmission path of a service based on a state of at least one channel in the state set. By using this solution, the first network node may determine the transmission path of the service based on the state of the channel, so that the determined transmission path matches the state of the channel. Correspondingly, when service traffic is transmitted based on the determined transmission path, service traffic transmission interruption can be effectively avoided.

In this embodiment of this application, the transmission path of the service may include at least one path in a path set, and the path set includes the first path, the second path, a third path, and a fourth path. In an example, the third path includes the first channel and the fourth channel, and the fourth path includes the second channel and the third channel. In other words, the third path includes a part of channels (the first channel) on the first path and a part of channels (the fourth channel) on the second path, and the fourth path also includes a part of channels (the second channel) on the first path and a part of channels (the third channel) on the second path. In this way, when both the first path and the second path are faulty, the first network node may determine a transmission path including a part of channels on the first path and a part of channels on the second path, so that service traffic can bypass faulty links on the first path and the second path, to ensure that the service traffic is forwarded to a destination node of the service traffic, thereby avoiding service traffic transmission interruption.

In an example, when the first network node and the second network node are a same network node, the path set may be a first path set, and the first path set includes the first path, the second path, the third path, and the fourth path. When the first network node and the second network node are different network nodes, the path set may be a second path set, and the second path set includes the first path, the third path, and the fourth path.

It can be learned from the foregoing descriptions that, when the first network node and the second network node are different network nodes, in an example, the fifth channel is included between the first network node and the second network node, and the service traffic between the first network node and the second network node may be transmitted through the fifth channel. In this case, both the third path and the fourth path may include the fifth channel, and the fifth channel is used to connect a part of channels on the first path and a part of channels on the second path, so as to obtain a complete transmission path.

In an example, when the first network node and the second network node are different network nodes, the state set may further include a state of the fifth channel. The state of the fifth channel may be a fault state of the fifth channel, and the fault state of the fifth channel may be faulty or not faulty. In this case, the first network node may further determine the transmission path of the service with reference to the state of the fifth channel, so that the determined transmission path is more reasonable, thereby helping reduce service traffic transmission interruption.

It can be learned from the foregoing descriptions that, in another example, the sixth channel and the seventh channel are included between the first network node and the second network node, and the service traffic between the first network node and the second network node may be transmitted through the sixth channel or the seventh channel. In this case, both the third path and the fourth path may include the sixth channel or the seventh channel, and the sixth channel or the seventh channel is used to connect a part of channels on the first path and a part of channels on the second path, so as to obtain a complete transmission path.

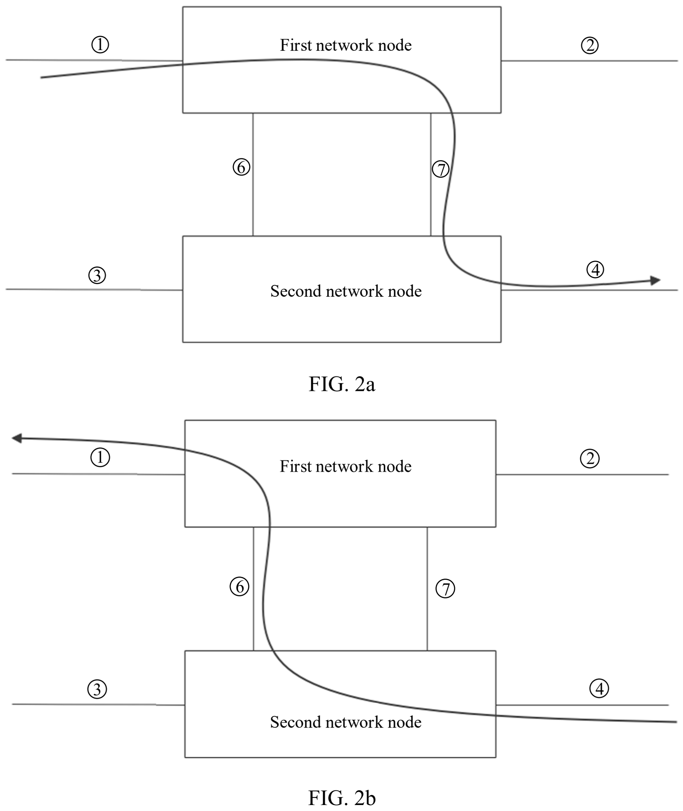

In an example, when the first network node sends a service to the second network node through the third path, the third path includes the seventh channel. In this case, the transmission path of the service includes the first channel, the seventh channel, and the fourth channel. Refer to FIG. 2a for understanding. FIG. 2a is a diagram of a transmission path of the service for transmitting the service to the second network node by the first network node through the third path according to an embodiment of this application. In FIG. 2a, the first channel corresponds to a channel ①, the second channel corresponds to a channel ②, the third channel corresponds to a channel ③, the fourth channel corresponds to a channel ④, the sixth channel corresponds to a channel ⑥, and the seventh channel corresponds to a channel ⑦. The transmission path of the service is shown in FIG. 2a.

In another example, when the second network node sends a service to the first network node through the third path, the third path includes the sixth channel. In this case, the transmission path of the service includes the fourth channel, the sixth channel, and the first channel. Refer to FIG. 2b for understanding. FIG. 2b is a diagram of a transmission path of the service for transmitting the service to the second network node by the second network node through the third path according to an embodiment of this application. In FIG. 2b, the first channel corresponds to a channel ①, the second channel corresponds to a channel ②, the third channel corresponds to a channel ③, the fourth channel corresponds to a channel ④, the sixth channel corresponds to a channel ⑥, and the seventh channel corresponds to a channel ⑦. The transmission path of the service is shown in FIG. 2b.

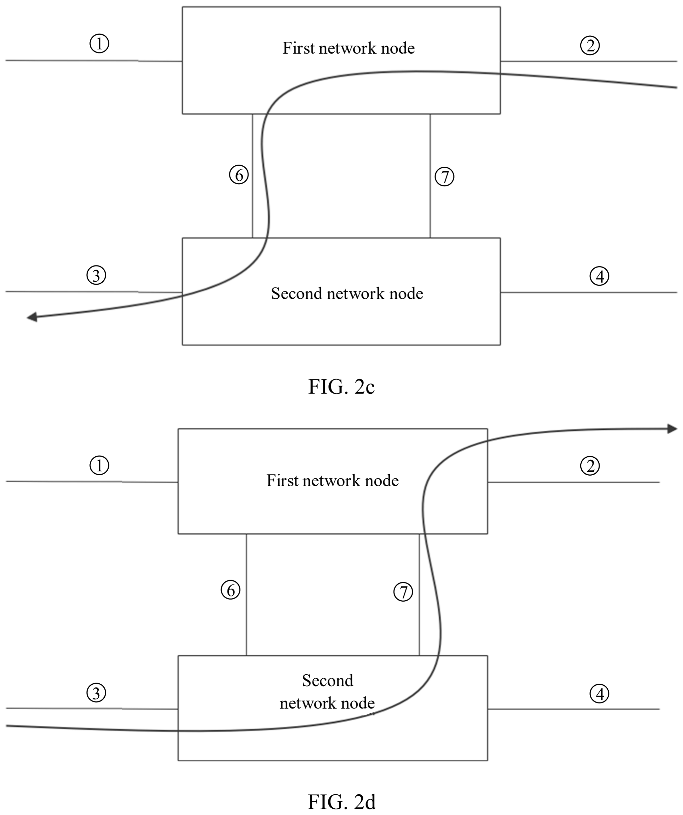

In an example, when the first network node sends a service to the second network node through the fourth path, the fourth path includes the sixth channel. In this case, the transmission path of the service includes the second channel, the sixth channel, and the third channel. Refer to FIG. 2c for understanding. FIG. 2c is a diagram of a transmission path of the service for transmitting the service to the second network node by the first network node through the fourth path according to an embodiment of this application. In FIG. 2c, the first channel corresponds to a channel ①, the second channel corresponds to a channel ②, the third channel corresponds to a channel ③, the fourth channel corresponds to a channel ④, the sixth channel corresponds to a channel ⑥, and the seventh channel corresponds to a channel ⑦. The transmission path of the service is shown in FIG. 2c.

In another example, when the second network node sends a service to the first network node through the fourth path, the fourth path includes the seventh channel. In this case, the transmission path of the service includes the third channel, the seventh channel, and the second channel. Refer to FIG. 2d for understanding. FIG. 2d is a diagram of a transmission path of the service for transmitting the service to the first network node by the second network node through the fourth path according to an embodiment of this application. In FIG. 2d, the first channel corresponds to a channel ①, the second channel corresponds to a channel ②, the third channel corresponds to a channel ③, the fourth channel corresponds to a channel ④, the sixth channel corresponds to a channel ⑥, and the seventh channel corresponds to a channel ⑦. The transmission path of the service is shown in FIG. 2d.

For the first path and the second path, refer to the foregoing related descriptions. Details are not described herein again.

Similar to the first network node, the second network node may also determine the transmission path of the service based on the state of the channel. A principle in which the second network node determines the transmission path of the service based on the state of the channel is the same as a principle in which the first network node determines the transmission path of the service based on the state of the channel. The following uses the first network node as an example to describe a specific implementation in which the first network node determines the transmission path of the service based on the state of the channel.

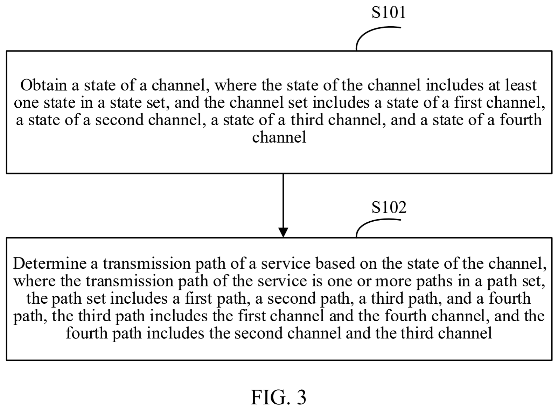

FIG. 3 is a schematic flowchart of a method for determining a transmission path of a service according to an embodiment of this application. The method for determining a transmission path of a service shown in FIG. 3 may include S101 and S102.

S101: Obtain a state of a channel, where the state of the channel includes at least one state in a state set, and the channel set includes a state of a first channel, a state of a second channel, a state of a third channel, and a state of a fourth channel.

It can be learned from the foregoing descriptions that the first channel and the second channel are channels connected to a first network node. In this embodiment of this application, the state of the first channel and the state of the second channel may be determined by the first network node based on corresponding state determining logic. It can be learned from the foregoing descriptions of the first channel and the second channel that the first channel and the second channel are respectively channels used by the first network node to communicate with upstream and downstream nodes on a first path. A principle in which the first network node determines the state of the first channel is the same as a principle in which the first network node determines the state of the second channel. The following uses an example in which the first network node determines the state of the first channel for description.

In an example, the state of the first channel may be determined based on a first factor. The first factor mentioned herein may include one or more factors that can indicate whether service data transmission can be performed through the first channel.

In an example, it is considered that the state of the third channel can indicate whether the third channel is used for service data transmission, and the first channel and the third channel are protection switching channels for each other. Therefore, the state of the third channel can indicate, to some extent, whether service data transmission can be performed through the first channel. Therefore, in an example, the first factor may include the state of the third channel. In addition, it is considered that whether the third channel is faulty can also indicate whether the third channel is used for service data transmission. Correspondingly, whether the third channel is faulty can indicate, to some extent, whether service data transmission can be performed through the first channel. Therefore, in an example, the first factor may include fault information of the third channel, and the fault information of the third channel indicates whether a local fault and/or a remote fault occur/occurs on the third channel.

In another example, it is considered that local fault information of the first channel can indicate whether the first channel is faulty, that is, the local fault information of the first channel can indicate whether service data transmission can be performed through the first channel. Therefore, in an example, the first factor may include the local fault information of the first channel. The local fault information of the first channel may include signal degrade (signal degrade, SD) information and/or signal fail (signal fail, SF) information.

In still another example, it is considered that first remote fault indication information received through the first channel can indicate whether a remote fault exists on the first path. Therefore, the first remote fault indication information can indicate whether service data transmission can be performed through the first channel. Therefore, in an example, the first factor may include the first remote fault indication information.

In yet another example, it is considered that the state of the second channel can indicate whether the second channel can be used for service data transmission, and the first channel and the second channel are respectively channels used by the first network node to communicate with the upstream and downstream nodes on the first path. Therefore, the state of the second channel can indicate, to some extent, whether service data transmission can be performed through the first channel. For example, if the state of the second channel is standby, data received by the first network node through the first channel cannot be transmitted through the first path. In this case, if another path such as a third path cannot be used for service data transmission, a packet loss occurs on the service data received through the first channel at the first network node. In this case, theoretically, the service data should not be received through the first channel. Therefore, in an example, the first factor may include the state of the second channel.

As described above, when the first network node and a second network node are different network nodes, in an example, one or more channels are included between the first network node and the second network node. For ease of description, a channel between the first network node and the second network node is referred to as a target channel. In an example, the target channel includes a fifth channel. In another example, the target channel includes a sixth channel and a seventh channel. In an example, a state of the target channel can indicate, to some extent, whether service data transmission can be performed through the first channel. The state of the target channel indicates whether the target channel is faulty. For example, if the target channel is faulty, data received by the first network node through the first channel cannot be transmitted through the third path. In this case, if another path such as a second path cannot be used for service data transmission, a packet loss occurs on the service data received through the first channel at the first network node. In this case, theoretically, the service data should not be received through the first channel. Therefore, in an example, the first factor may include the state of the target channel.

The following describes a specific implementation in which the first network node determines the state of the first channel based on the first factor.

As described above, the first network node belongs to the first path, the second network node belongs to the second path, and the first path and the second path may be protection switching paths for each other. In an example, the first path may be a working path, and the second path may be a protection path. In another example, the first path may be a protection path, and the second path is a working path.

In an example, if the first path is a working path, an initial state of the first channel is active, and an initial state of the third channel is standby. In this case, when the state of the third channel is active, the first network node determines that the state of the first channel is standby. To be specific, when the state of the third channel is no longer standby by default but active, the first network node determines that the state of the first channel is standby. In this case, a state of one of the two channels that are protection switching channels for each other, namely, the first channel and the third channel, is active, and a state of the other channel is standby.

In another example, if the first path is a protection path, an initial state of the third channel is active, and an initial state of the first channel is standby. In this case, when the state of the third channel is standby, the first network node determines that the state of the first channel is active. To be specific, when the state of the third channel is no longer active by default but standby, the first network node determines that the state of the first channel is active. In this case, a state of one of the two channels that are protection switching channels for each other, namely, the first channel and the third channel, is active, and a state of the other channel is standby.

In an example, when the first path is a protection path, the first network node may alternatively determine, based on an external switching command, that the state of the first channel is active. In another example, when the first path is a protection path, the first network node may alternatively determine, based on remote APS, that the state of the first channel is active. For example, when receiving an APS message sent by a remote end, the first network node determines, based on fault information or a switching indication carried in the APS message, that the state of the first channel is active. In another example, the first network node may alternatively determine, based on a local channel active/standby decision state machine, that the state of the first channel is active. For example, when a state of the local channel active/standby decision state machine changes, that is, the state of the local channel active/standby decision state machine changes from standby to active, the first network node may determine that the state of the first channel is active. The channel active/standby decision state machine mentioned herein may be understood as an APS state machine that can be used to determine an active/standby state of a channel.

In another example, regardless of whether the first path is a working path or a protection path, if the local fault information of the first channel indicates that a local fault occurs on the first channel, it indicates that normal service data transmission cannot be performed through the first channel. In this case, the first network node may determine that the state of the first channel is standby. Similarly, if the first network node receives the first remote fault indication information through the first channel, it indicates that a fault occurs at a remote end of the first network node on the first path. In this case, normal service data transmission cannot be performed through the first channel. Therefore, the first network node may determine that the state of the first channel is standby. Similarly, it is considered that data received by the first network node through the first channel may continue to be transmitted to another network node through the second channel or the target channel. Therefore, if the state of the second channel is standby and the target channel is faulty, and if the first network node receives service data through the first channel, a packet loss occurs on the service data at the first network node. Therefore, to avoid a packet loss on the service data at the first network node, when the state of the second channel is standby and the state of the target channel indicates that the target channel is faulty, the first network node may determine that the state of the first channel is standby.

A method in which the first network node determines the state of the first channel is described below with reference to the accompanying drawings.

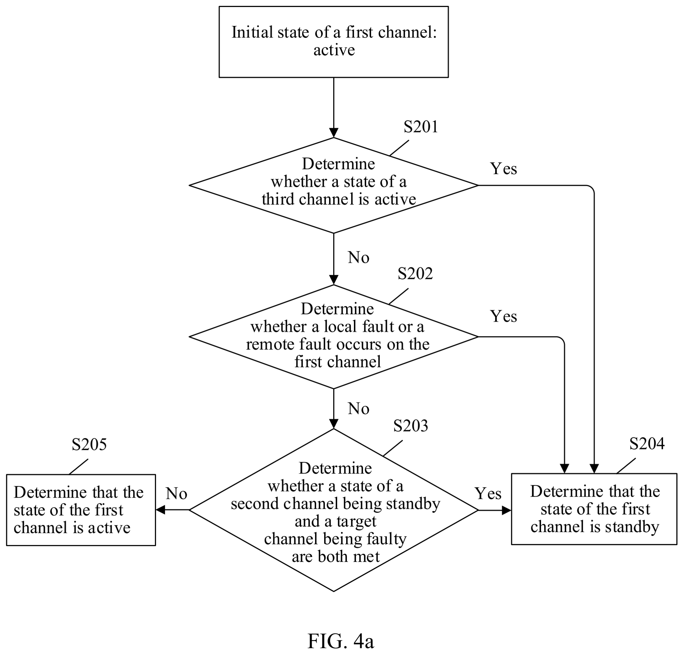

FIG. 4a is a schematic flowchart of determining the state of the first channel according to an embodiment of this application.

When the first path is a working path, the first network node may determine the state of the first channel by using a procedure shown in FIG. 4a. The method shown in FIG. 4a may include S201 to S205.

S201: Determine whether the state of the third channel is active.

If the state of the third channel is active, S204 is performed. If the state of the third channel is standby, S202 is performed.

S202: Determine whether a local fault or a remote fault occurs on the first channel.

If a local fault or a remote fault occurs on the first channel, S204 is performed. If neither a local fault nor a remote fault occurs on the first channel, S203 is performed. When the first network node receives the first remote fault indication information through the first channel, it indicates that a remote fault occurs on the first channel.

S203: Determine whether the state of the second channel being standby and the target channel being faulty are both met.

If the two conditions are met at the same time, S204 is performed. If the two conditions cannot be met at the same time, S205 is performed.

S204: Determine that the state of the first channel is standby.

S205: Determine that the state of the first channel is active.

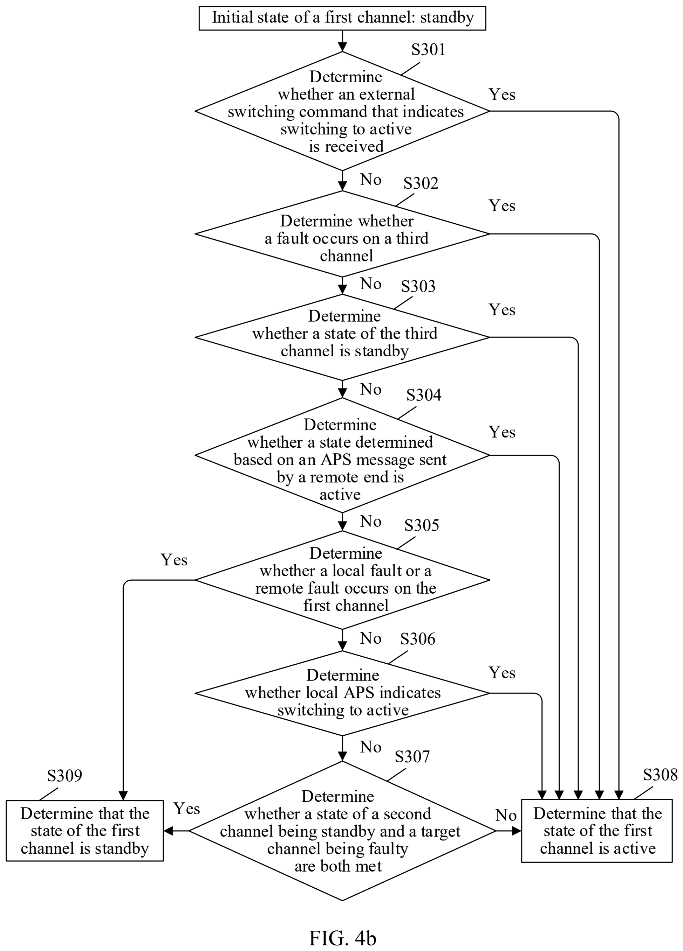

FIG. 4b is a schematic flowchart of determining the state of the first channel according to an embodiment of this application.

When the first path is a protection path, the first network node may determine the state of the first channel by using a procedure shown in FIG. 4b. The method shown in FIG. 4b may include S301 to S307.

S301: Determine whether an external switching command that indicates switching to active is received.

If the external switching command that indicates switching to active is received, S308 is performed. If the external switching command that indicates switching to active is not received, S302 is further performed.

S302: Determine whether a fault occurs on the third channel.

Herein, the determining whether a fault occurs on the third channel may be determining whether a local fault or a remote fault occurs on the third channel.

If it is determined that a fault occurs on the third channel, S308 is performed. If it is determined that no fault occurs on the third channel, S303 is further performed.

S303: Determine whether the state of the third channel is standby.

If the state of the third channel is standby, S308 is performed. If the state of the third channel is active, S304 is further performed.

S304: Determine whether a state determined based on an APS message sent by a remote end is active.

The APS message sent by the remote end may be used to determine the state of the first channel. After receiving the APS message sent by the remote end, the first network node may parse the APS message, and determine the state of the first channel by using content obtained through parsing.

If the state determined based on the APS message sent by the remote end is active, S308 is performed. If the state determined based on the APS message sent by the remote end is standby, S305 is further performed.

S305: Determine whether a local fault or a remote fault occurs on the first channel.

If a local fault or a remote fault occurs on the first channel, S309 is performed. If neither a local fault nor a remote fault occurs on the first channel, S306 is further performed.

S306: Determine whether local APS indicates switching to active.

If the local APS indicates switching to active, S308 is performed. If the local APS does not indicate switching to active, S307 is further performed.

S307: Determine whether the state of the second channel being standby and the target channel being faulty are both met.

If the two conditions are met at the same time, S309 is performed. If the two conditions cannot be met at the same time, S308 is performed.

S308: Determine that the state of the first channel is active.

S309: Determine that the state of the first channel is standby.

It should be noted that FIG. 4a and FIG. 4b are merely shown for ease of understanding, and do not constitute a limitation on embodiments of this application. A sequence of performing S201 to S203 is not limited to the sequence shown in FIG. 4a. A sequence of performing S301 to S307 is not limited to the sequence shown in FIG. 4b.

During specific implementation of determining the state of the second channel, the first network node may obtain, for example, a second factor, and determine the state of the second channel based on the second factor. The second factor may include the state of the fourth channel, local fault information of the second channel, remote fault indication information received through the second channel, and the state of the first channel. If the first network node and the second network node are different network nodes, the second factor further includes a state of a target channel, and the state of the target channel indicates whether the target channel is faulty. For the target channel, refer to the foregoing related descriptions. Details are not described herein again.

A principle in which the first network node determines the state of the second channel based on the second factor is similar to a principle in which the first network node determines the state of the first channel based on the first factor.

If the first path is a working path, an initial state of the second channel is active. In an example, when the state of the fourth channel is active, the first network node may determine that the state of the second channel is standby; or when the local fault information of the second channel indicates that a local fault occurs on the second channel, the first network node may determine that the state of the second channel is standby; or when the remote fault indication information is received through the second channel, the first network node may determine that the state of the second channel is standby; or when the state of the first channel is standby and the state of the target channel indicates that the target channel is faulty, the first network node may determine that the state of the second channel is standby.

If the first path is a protection path, an initial state of the second channel is standby. In an example, when the state of the fourth channel is standby, the first network node may determine that the state of the second channel is active; or when the local fault information of the second channel indicates that a local fault occurs on the second channel, the first network node may determine that the state of the second channel is standby; or when the remote fault indication information is received through the second channel, the first network node may determine that the state of the second channel is standby; or when the state of the first channel is standby and the state of the target channel indicates that the target channel is faulty, the first network node may determine that the state of the second channel is standby.

In an example, during specific implementation of determining the state of the third channel and the state of the fourth channel, the first network node may collect a third factor and a fourth factor; and further determine the state of the third channel based on the third factor, and determine the state of the fourth channel based on the fourth factor.

In another example, the second network node may determine the state of the third channel and the state of the fourth channel, and send the state of the third channel and the state of the fourth channel to the first network node. In this case, during specific implementation of obtaining the state of the third channel and the state of the fourth channel, the state of the third channel and the state of the fourth channel that are sent by the second network node may be received.

A principle of determining the state of the third channel based on the third factor is similar to a principle of determining the state of the first channel based on the first factor, except that the first channel and the third channel are exchanged, and the second channel and the fourth channel are exchanged. In other words, the third factor may be obtained by changing the first channel in the first factor to the third channel, replacing the second channel with the fourth channel, and replacing the third channel with the first channel. For a specific implementation of determining the state of the third channel based on the third factor, refer to the specific implementation of determining the state of the first channel based on the first factor. Details are not described herein again.

A principle of determining the state of the fourth channel based on the fourth factor is similar to a principle of determining the state of the second channel based on the second factor, except that the first channel and the third channel are exchanged, and the second channel and the fourth channel are exchanged. In other words, the fourth factor may be obtained by changing the fourth channel in the second factor to the second channel, replacing the second channel with the fourth channel, and replacing the first channel with the third channel. For a specific implementation of determining the state of the fourth channel based on the fourth factor, refer to the specific implementation of determining the state of the second channel based on the second factor. Details are not described herein again.

As described above, in an example, the fifth channel may be included between the first network node and the second network node. In this case, the first network node may receive the state of the third channel and the state of the fourth channel that are sent by the second network node through the fifth channel. In another example, the sixth channel and the seventh channel may be included between the first network node and the second network node. In this case, the second network node may send the state of the third channel to the first network node through the sixth channel, and send the state of the fourth channel to the first network node through the seventh channel. In other words, the first network node may receive the state of the third channel that is sent by the second network node through the sixth channel, and receive the state of the fourth channel that is sent by the second network node through the seventh channel. With reference to FIG. 2a, it may be understood that the second network node may send the state of the channel ③ to the first network node through the channel ⑥, and send the state of the channel ④ to the first network node through the channel ⑦.

A principle in which the second network node sends the state of the third channel to the first network node is the same as a principle in which the second network node sends the state of the fourth channel to the first network node. The following uses an example in which the second network node sends the state of the third channel to the first network node for description.

In an example, the second network node may send state information of the third channel to the first network node, where the state information of the third channel includes at least the state of the third channel. In this manner, the second network node sends the state of the third channel to the first network node in a manner of sending the state information of the third channel to the first network node. Correspondingly, the first network node may receive the state information of the third channel that is sent by the second network node, to obtain the state of the third channel.

In an example, in addition to the state of the third channel, the state information of the third channel may further include fault information of the third channel, and the fault information of the third channel indicates whether a fault occurs on the third channel. In an example, the fault information of the third channel may include local fault information of the third channel, and the local fault information of the third channel indicates whether a local fault occurs on the third channel. In another example, the fault information of the third channel may further include second remote fault indication information received through the third channel, and the second remote fault indication information may indicate that a remote fault occurs on the third channel. That a remote fault occurs on the third channel may be understood as that a fault occurs on a remote end of the third channel.

In some embodiments, the second network node may send a first OAM code block to the first network node, where the first OAM code block is used to carry the state information of the third channel. The first network node may receive the first OAM code block sent by the second network node, and parse the first OAM code block, to obtain the state information of the third channel.

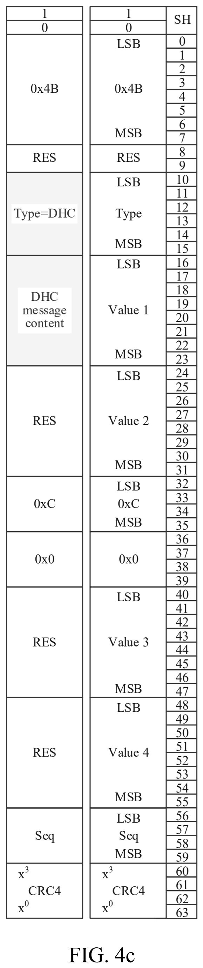

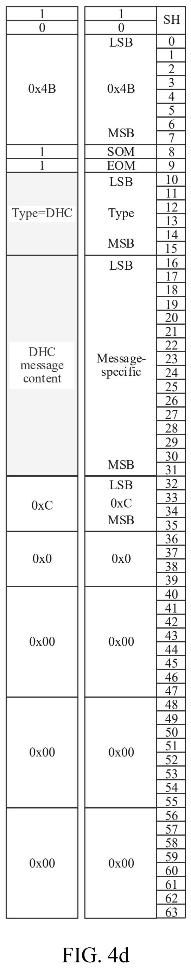

In a possible implementation, a new OAM code block may be defined to carry the state information of the third channel. A type field of the first OAM code block indicates that the first OAM code block carries the state information of the third channel. In this case, a structure of the first OAM code block may be shown in FIG. 4c or FIG. 4d. FIG. 4c and FIG. 4d are respectively diagrams of structures of two first OAM code blocks according to an embodiment of this application.

FIG. 4c is a diagram of a structure of an OAM code block complying with a China communications standards association (China communications standards association, CCSA) standard format. As shown in FIG. 4c, a value of a type field of the OAM code block is dual-homing coordination (dual-homing coordination, DHC), the DHC indicates that the OAM code block is used to carry a DHC message, and the DHC message includes the state information of the third channel. The state information of the third channel may be carried in some or all of four value (value) fields of the OAM code block. For example, the state information of the third channel may be carried in Value 1. For another field included in the OAM code block shown in FIG. 4c, refer to a CCSA standard definition. Details are not described herein again.

FIG. 4d is a diagram of a structure of an OAM code block complying with an international telecommunication union telecommunications standards branch (international telecommunication union telecommunications standards branch, ITU-T) standard format. As shown in FIG. 4d, a type field of the OAM code block indicates that the OAM code block is used to carry a DHC message, and the DHC message includes the state information of the third channel. The state information of the third channel may be carried in some or all fields in a message-specific (Message-specific) field of the OAM code block. For another field included in the OAM code block shown in FIG. 4d, refer to an ITU-T standard definition. Details are not described herein again.

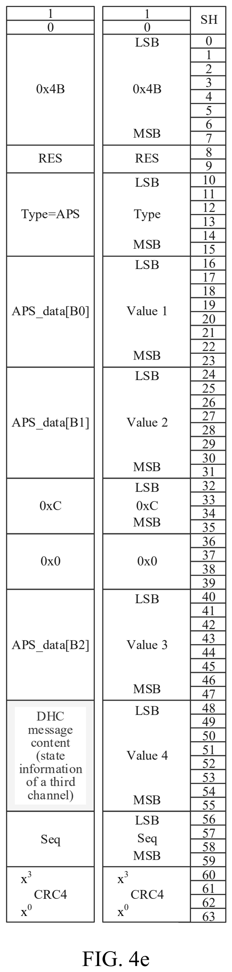

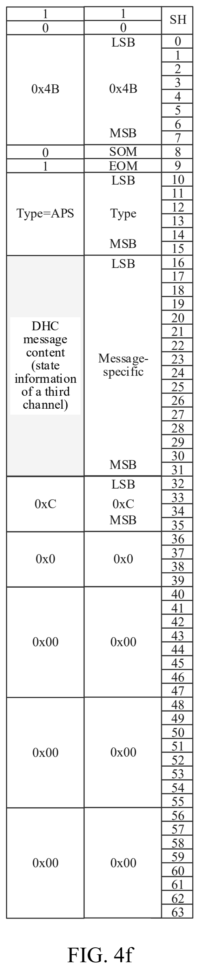

In another possible implementation, an existing OAM code block may be used for the first OAM code block, and a new OAM field does not need to be defined. In an example, the first OAM code block may be a first APS code block, and the state information of the third channel may be carried in an available field of the first APS code block. Refer to FIG. 4e and FIG. 4f for understanding. FIG. 4e and FIG. 4f are respectively diagrams of structures of two first APS code blocks according to an embodiment of this application.

FIG. 4e is a diagram of a structure of an APS code block complying with a CCSA standard format. In this case, a DHC message used to carry the state information of the third channel may be carried, for example, in Value 4 of the APS code block. For another field of the first APS code block shown in FIG. 4e, refer to a CCSA definition. Details are not described herein again.

FIG. 4f is a diagram of a structure of an APS code block complying with an ITU-T standard format. In this case, a DHC message used to carry the state information of the third channel may be carried, for example, in a message-specific field. For another field of the APS code block shown in FIG. 4f, refer to an ITU-T definition. Details are not described herein again.

In some other embodiments, the second network node may send a first Ethernet packet to the first network node, where the first Ethernet packet includes the state information of the third channel. The first network node may receive the first Ethernet packet sent by the second network node, and parse the first Ethernet packet, to obtain the state information of the third channel.

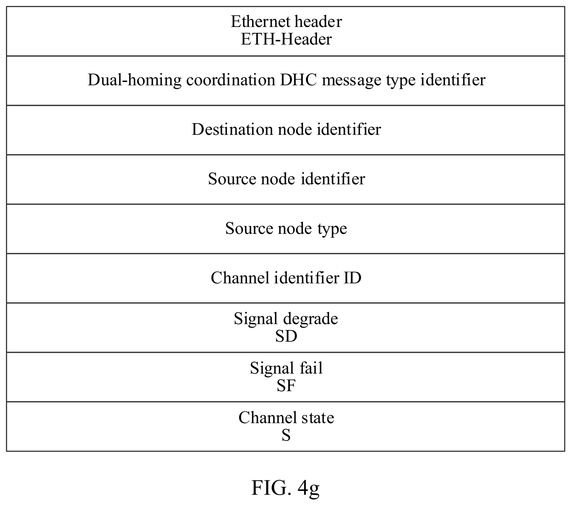

In a possible implementation, a structure of the first Ethernet packet may be shown in FIG. 4g. FIG. 4g is a diagram of the structure of the first Ethernet packet according to an embodiment of this application. As shown in FIG. 4g, the first Ethernet packet includes fields shown in Table 1.

**Table 1**

| Field name | Meaning | Remark |
|---|---|---|
| Ethernet header (Ethernet header) | Ethernet header | Standard Ethernet header |
| DHC message type identifier | Type of a carried DHC message | Identify that an Ethernet packet carries a DHC message |
| Destination node identifier | Identify a destination node of an Ethernet packet | Identifier of the first network node |
| Source node identifier | Identify a source node of an Ethernet packet | Identifier of the second network node |
| Source node type | Source node role | The role includes a working node and a protection node. |
| | | The working node is a network node on a working path, and the protection node is a network node on a protection path |
| Channel identifier (identifier, ID) | Identifier of a channel | State information of the third channel |
| SD | Channel SD information, including local SD information and/or remote SD information | |
| SF | Channel SF information, including local SF information and/or remote SF information | |
| State (state, S) | State of a channel | |

It should be noted herein that, in an example, the state of the third channel and other information of the third channel may alternatively be sent by using two Ethernet packets. This is not specifically limited in embodiments of this application. In another example, if one channel, that is, the fifth channel, is included between the first network node and the second network node, the first Ethernet packet may further include state information of the fourth channel. To be specific, the state information of the third channel and the state information of the fourth channel may be carried in a same Ethernet packet and transferred to the first network node through the fifth channel. For a field that carries the state information of the fourth channel in the first Ethernet packet, refer to the description part that carries the state information of the third channel in Table 1. Details are not described herein again.

In an example, in addition to receiving the state of the third channel and the state of the fourth channel that are sent by the second network node, the first network node may further send the state of the first channel and the state of the second channel to the second network node, so that the second network node determines the transmission path of the service based on the state of the channel. An implementation principle in which "the first network node sends the state of the first channel and the state of the second channel to the second network node" is the same as an implementation principle in which "the second network node sends the state of the third channel and the state of the fourth channel to the first network node". For specific implementation in which "the first network node sends the state of the first channel and the state of the second channel to the second network node", refer to the foregoing specific descriptions that "the second network node sends the state of the third channel and the state of the fourth channel to the first network node". Details are not described herein.

As described above, if the state of the second channel is standby and the target channel is faulty, and if the first network node receives service data through the first channel, a packet loss occurs on the service data at the first network node. To prevent a remote node of the first network node on the first path from sending service data to the first network node through the first channel, the first network node may send third remote fault indication information through the first channel, so that a network node that receives the third remote fault indication information determines a remote fault, and no longer sends the service data to the first network node through the first channel, thereby avoiding a packet loss on the service data.

In an example, the third remote fault indication information sent by the first network node through the first channel, the second remote fault information received by the second network node through the third channel, or the first remote fault indication information received by the first network node through the first channel may be carried in a second OAM code block. In other words, in an example, the first network node may receive the second OAM code block through the first channel, and parse the second OAM code block, to obtain the first remote fault indication information. In another example, the second network node may receive the second OAM code block through the third channel, and parse the second OAM code block, to obtain the second remote fault indication information. In still another example, the first network node may send the second OAM code block through the first channel, where the second OAM code block carries the third remote fault indication information.

For ease of description, a concept "target remote fault indication information" is introduced. The target remote fault indication information may be one of the first remote fault indication information, the second remote fault indication information, and the third remote fault indication information. As described above, the target remote fault indication information may be carried in the second OAM code block.

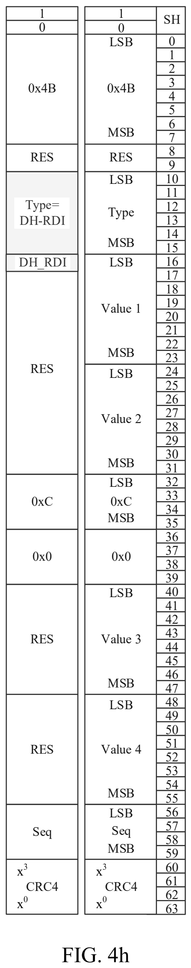

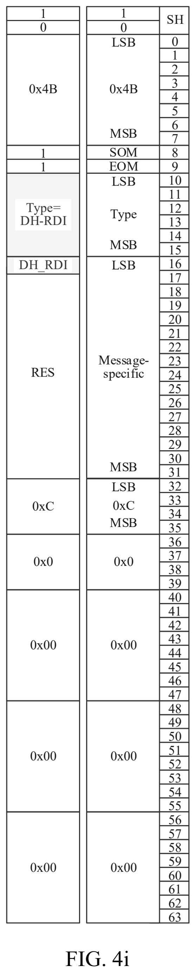

In a possible implementation, a new OAM code block may be defined to carry the target remote fault indication information. A type field of the second OAM code block indicates that the second OAM code block carries the target remote fault indication information. In this case, a structure of the second OAM code block may be shown in FIG. 4h or FIG. 4i. FIG. 4h and FIG. 4i are respectively diagrams of structures of two second OAM code blocks according to an embodiment of this application.

FIG. 4h is a diagram of a structure of an OAM code block complying with a CCSA standard format. As shown in FIG. 4h, a value of a type field of the OAM code block is a dual-homing remote defect indication (dual-homing remote defect indication, DH-RDI), and the DH-RDI indicates that the second OAM code block is used to carry the target remote fault indication information. The target remote fault indication information may be carried in some or all of four value fields of the OAM code block. For example, the target remote fault indication information may be carried in a 1^{st} bit of Value 1. In an example, the second OAM code block may be used to carry the third remote fault indication information by using, for example, a target OAM message mentioned below.

FIG. 4i is a diagram of a structure of an OAM code block complying with an ITU-T standard format. As shown in FIG. 4i, a type field of the OAM code block indicates that the OAM code block is used to carry the target remote fault indication information. The target remote fault indication information may be carried in some or all fields in a message-specific field of the OAM code block. For example, the target remote fault indication information may be carried in a 1^{st} bit of the message-specific field. In an example, the second OAM code block may be used to carry the third remote fault indication information by using, for example, a target OAM message mentioned below.

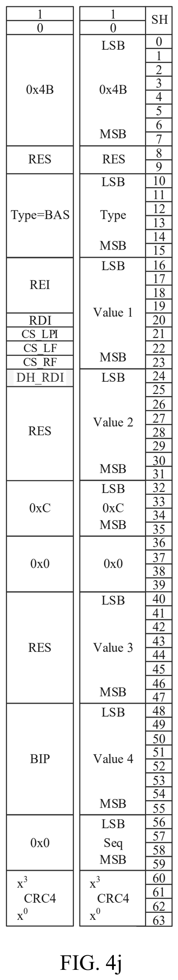

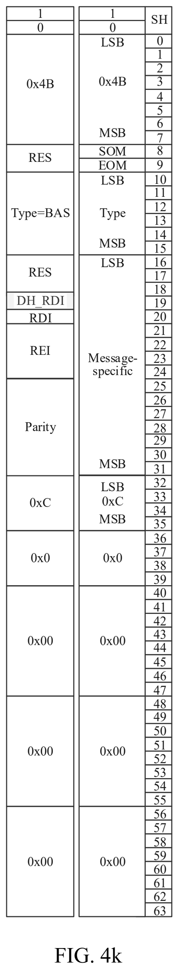

In another possible implementation, an existing OAM code block may be used for the second OAM code block, and a new OAM field does not need to be defined. In an example, the second OAM code block may be a basic code block. In this case, the target remote fault indication information may be carried in an available field of the basic code block. In an example, the target remote fault indication information may be carried in a reserved field of the basic code block. For example, refer to FIG. 4j and FIG. 4k for understanding. FIG. 4j and FIG. 4k are respectively diagrams of structures of two basic code blocks according to an embodiment of this application. FIG. 4j is a diagram of a structure of a basic code block complying with a CCSA standard format. The target remote fault indication information may be carried in a 1^{st} bit of Value 2 of the basic code block. FIG. 4k is a diagram of a structure of a basic code block complying with an ITU-T standard format. The target remote fault indication information may be carried in a 4^{th} bit of a message-specific field of the basic code block. In another example, the target remote fault indication information may be carried in an RDI field of the basic code block. In another example, the second OAM code block may be a second APS code block. In this case, the target remote fault indication information may be carried in an available field of the second APS code block. In an example, it is considered that a request/state (request/state) field of an APS code block supports extension. Therefore, a request/state field of the second APS code block may be used to carry the target remote fault indication information. For example, when a value of the request/state field is 1100, it indicates that the second APS carries the remote fault indication information.

S102: Determine a transmission path of a service based on the state of the channel, where the transmission path of the service is one or more paths in a path set, the path set includes the first path, the second path, the third path, and a fourth path, the third path includes the first channel and the fourth channel, and the fourth path includes the second channel and the third channel.

After obtaining the state of the channel, the first network node may determine the transmission path of the service based on the state of the channel. The transmission path of the service includes one or more paths in the path set, and the path set includes four paths: the first path, the second path, the third path, and the fourth path. The following describes a specific implementation in which the first network node determines the transmission path of the service based on the state of the channel.

First, a specific implementation in which the first network node determines the transmission path of the service based on the state of the channel when the first network node and the second network node are a same network node is described. As described above, when the first network node and the second network node are a same network node, the transmission path of the service may include one or more paths in a first path set, and the first path set includes the first path, the second path, the third path, and the fourth path. Refer to Table 2 for understanding. In Table 2, "A1" represents the "first channel", "B1" represents the "second channel", "A2" represents the "third channel", and "B2" represents the "fourth channel". West-side 1:1 means that the first channel and the third channel are configured as 1:1 protection switching paths, west-side 1+1 means that the first channel and the third channel are configured as 1+1 protection switching paths, east-side 1:1 means that the second channel and the fourth channel are configured as 1:1 protection switching paths, and east-side 1+1 means that the second channel and the fourth channel are configured as 1+1 protection switching paths.

**Table 2**

| Serial number | State of A1/A2 | State of B1/B2 | Transmission path of the service | | | |
|---|---|---|---|---|---|---|
| | | | West-side 1:1 and east-side 1:1 | West-side 1:1 and east-side 1+1 | West-side 1+1 and east-side 1+1 | West-side 1+1 and east-side 1:1 |
| 1 | active/standby | active/standby | A1<->B1 | A1<->B1 & A1->B2 | A1<->B1 & A1->B2 & B1->A2 | A1<->B1 & B1->A2 |
| 2 | active/standby | standby/active | A1<->B2 | A1<->B2 & A1->B1 | A1<->B2 & A1->B1 & B2->A2 | A1<->B2 & B2->A2 |
| 3 | standby/active | active/standby | A2<->B 1 | B1<->A2 & A2->B2 | A2<->B1& A2->B2 & B1->A1 | B1<->A2 & B1->A1 |
| 4 | standby/active | standby/active | A2<->B2 | A2<->B2 & A2->B1 | A2<->B2 & A2->B1 & B2->A1 | A2<->B2 & B2->A1 |

For Table 2, it should be noted that:

The state of A1 and the state of A2 are mutually exclusive. In other words, if the state of A1 is active, the state of A2 is standby; or if the state of A1 is standby, the state of A2 is active. Similarly, the state of B1 and the state of B2 are mutually exclusive. In other words, if the state of B1 is active, the state of B2 is standby; or if the state of B1 is standby, the state of B2 is active.

If both the state of A1 and the state of B1 are active, it indicates that the channel A1 and the channel A2 can be used for normal data transmission. In this case, a path including the channel A1 and/or the channel B1 may be determined as the transmission path of the service.

In a case of west-side 1:1 and east-side 1:1, it may be determined that the transmission path of the service is the first path (A1<->B1).

In a case of west-side 1:1 and east-side 1+1, it may be determined that the transmission path of the service includes the first path (A1<->B1) and the third path (A1->B2).

In a case of west-side 1+1 and east-side 1+1, it may be determined that the transmission path of the service includes the first path (A1<->B1), the third path (A1->B2), and the fourth path (B1->A2).

In a case of west-side 1+1 and east-side 1:1, it may be determined that the transmission path of the service includes the first path (A1<->B1) and the fourth path (B1->A2).

If the state of A1 is active and the state of B1 is standby, it indicates that the first channel and the fourth channel can be used for normal data transmission. Therefore, a path including the first channel A1 and/or the fourth channel B2 may be determined as the transmission path of the service.

In a case of west-side 1:1 and east-side 1:1, it may be determined that the transmission path of the service is the third path (A1<->B2).

In a case of west-side 1:1 and east-side 1+1, it may be determined that the transmission path of the service includes the third path (A1<->B2) and the first path (A1->B1).

In a case of west-side 1+1 and east-side 1+1, it may be determined that the transmission path of the service includes the third path (A1<->B2), the first path (A1->B1), and the second path (B2->A2).

In a case of west-side 1+1 and east-side 1:1, it may be determined that the transmission path of the service includes the third path (A1<->B2) and the second path (B2->A2).

If the state of A1 is standby and the state of B1 is active, it indicates that the second channel B1 and the third channel A2 may be used for normal data transmission. Therefore, a path including the second channel B1 and the third channel A2 may be determined as the transmission path of the service.

In a case of west-side 1:1 and east-side 1:1, it may be determined that the transmission path of the service is the fourth path (A2<->B1).

In a case of west-side 1:1 and east-side 1+1, it may be determined that the transmission path of the service includes the fourth path (A2<->B1) and the second path (A2->B2).

In a case of west-side 1+1 and east-side 1+1, it may be determined that the transmission path of the service includes the fourth path (A2<->B1), the first path (B1->A1), and the second path (A2->B2).

In a case of west-side 1+1 and east-side 1:1, it may be determined that the transmission path of the service includes the fourth path (B1<->A2) and the first path (B1->A1).

If both the state of A1 and the state of B1 are standby, it indicates that the channel A2 and the channel B2 can be used for normal data transmission. In this case, a path including the channel B1 and/or the channel B2 may be determined as the transmission path of the service.

In a case of west-side 1:1 and east-side 1:1, it may be determined that the transmission path of the service is the second path (A2<->B2).

In a case of west-side 1:1 and east-side 1+1, it may be determined that the transmission path of the service includes the second path (A2<->B2) and the fourth path (A2->B1).

In a case of west-side 1+1 and east-side 1+1, it may be determined that the transmission path of the service includes the second path (A2<->B2), the fourth path (A2->B1), and the third path (B2->A1).

In a case of west-side 1+1 and east-side 1:1, it may be determined that the transmission path of the service includes the fourth second path (A2<->B2) and the third path (B2->A1).

The following describes a specific implementation in which the first network node determines the transmission path of the service based on the state of the channel when the first network node and the second network node are different network nodes. As described above, when the first network node and the second network node are different network nodes, the transmission path of the service may include one or more paths in a second path set, and the second path set includes the first path, the third path, and the fourth path.

First, a specific implementation in which the first network node determines the transmission path of the service based on the state of the channel when the fifth channel is included between the first network node and the second network node is described. Refer to Table 3 for understanding. In Table 3, "A" represents the "first channel", "B" represents the "second channel", and "C" represents the "fifth channel". Same as above, west-side 1:1 means that the first channel and the third channel are configured as 1:1 protection switching paths, west-side 1+1 means that the first channel and the third channel are configured as 1+1 protection switching paths, east-side 1:1 means that the second channel and the fourth channel are configured as 1:1 protection switching paths, and east-side 1+1 means that the second channel and the fourth channel are configured as 1+1 protection switching paths.

**Table 3**

| Serial number | State of A | State of B | State of C | Transmission path of the service | | | |
|---|---|---|---|---|---|---|---|
| | | | | West-side 1:1 and east-side 1:1 | West-side 1:1 and east-side 1+1 | West-side 1+1 and east-side 1+1 | West-side 1+1 and east-side 1:1 |
| 1 | active | active | OK | A<->B | A<->B & A->C | A<->B | A<->B & B->C |
| 2 | active | active | NOK | A<->B | A<->B & A->C, or A<->B | A<->B | A<->B & B->C, or A<->B |
| 3 | active | standby | OK | A<->C | A->B & A<->C | A->B & A<->C | A<->C |
| 4 | active | standby | NOK | A<->C, or discard the service | A->B & A<->C, or A->B | A->B & A<->C, or A->B | A<->C, or discard the service |
| 5 | standby | active | OK | B<->C | B<->C | B->A & B<->C | B->A & B<->C |
| 6 | standby | active | NOK | B<->C, or discard the service | B<->C, or discard the service | B->A & B<->C, or B->A | B->A & B<->C, or B->A |
| 7 | standby | standby | OK | A<->B, or discard the service | C->B | A<->B | C->A |
| 8 | standby | standby | NOK | A<->B, or discard the service | C->B, or discard the service | A<->B | C->A, or discard the service |

In Table 3, that the state of C is OK means that the fifth channel is not faulty, and that the state of C is NOK means that the fifth channel is faulty. In an example, whether the fifth channel is faulty may be determined based on an OAM detection result of the fifth channel. For example, if OAM of the fifth channel detects an SD, SF, or RDI fault, it may be determined that the fifth channel is faulty. For example, the first network node may send OAM to the second network node through the fifth channel. For another example, the second network node may send OAM to the first network node through the fifth channel. If the OAM transferred through the fifth channel detects an SD, SF, or RDI fault, it may be determined that the fifth channel is faulty. In another example, the first network node and the second network node may transmit a DHC message at a specific frequency on the fifth channel. A fault on the fifth channel may be a fault in a DHC protocol between the first network node and the second network node. For example, a source node identifier in the DHC message received by the first network node is incorrect, or the first network node does not receive the DHC message within a specified time, or the DHC message that is received by the first network node and that is sent by the second network node carries a DHC protocol fault indication. In addition, when the source node identifier in the received DHC message is incorrect or the DHC message is not received within a specified time, the first network node may send the DHC message that carries the DHC protocol fault indication to the second network node. In this case, in an example, content of the DHC message in the first OAM shown in FIG. 4c to FIG. 4d may include the DHC protocol fault indication. In another example, the first Ethernet packet shown in FIG. 4g may include the DHC protocol fault indication.

For Table 3, it should be noted that:

If both the state of A and the state of B are active, and the state of C is OK, it indicates that the channel A, the channel B, and the channel C can be used for normal data transmission. Therefore, a path including one or more of the channel A, the channel B, and the channel C may be determined as the transmission path of the service.

In a case of west-side 1:1 and east-side 1:1, it may be determined that the transmission path of the service is the first path (A<->B).

In a case of west-side 1:1 and east-side 1+1, it may be determined that the transmission path of the service includes the first path (A<->B) and the third path (A->C).

In a case of west-side 1+1 and east-side 1+1, it may be determined that the transmission path of the service includes the first path (A<->B).

In a case of west-side 1+1 and east-side 1:1, it may be determined that the transmission path of the service includes the first path (A<->B) and the fourth path (B->C).

If both the state of A and the state of B are active, and the state of C is NOK, it indicates that the channel A and the channel B can be used for normal data transmission. Therefore, a path including the channel A and/or the channel B may be determined as the transmission path of the service.

In a case of west-side 1:1 and east-side 1:1, it may be determined that the transmission path of the service is the first path (A<->B).

In a case of west-side 1:1 and east-side 1+1, it may be determined that the transmission path of the service includes the first path (A<->B) and the third path (A->C). Alternatively, it may be determined that the transmission path of the service includes only the first path (A<->B). Because the state of C is NOK, the third path cannot be actually used for service data transmission.

In a case of west-side 1+1 and east-side 1+1, it may be determined that the transmission path of the service includes the first path (A<->B).

In a case of west-side 1+1 and east-side 1:1, it may be determined that the transmission path of the service includes the first path (A<->B) and the fourth path (B->C). Alternatively, it may be determined that the transmission path of the service includes only the first path (A<->B). Because the state of C is NOK, the fourth path cannot be actually used for service data transmission.

If the state of A is active, the state of B is standby, and the state of C is OK, it indicates that the channel A and the channel C can be used for normal data transmission. Therefore, a path including the channel A and/or the channel C may be determined as the transmission path of the service.

In a case of west-side 1:1 and east-side 1:1, it may be determined that the transmission path of the service is the third path (A<->C).

In a case of west-side 1:1 and east-side 1+1, it may be determined that the transmission path of the service includes the third path (A<->C) and the first path (A->B).

In a case of west-side 1+1 and east-side 1+1, it may be determined that the transmission path of the service includes the third path (A<->C) and the first path (A->B).

In a case of west-side 1+1 and east-side 1:1, it may be determined that the transmission path of the service includes the third path (A<->C).

If the state of A is active, the state of B is standby, and the state of C is NOK, it indicates that the channel A can be used for normal data transmission. Therefore, a path including the channel A may be determined as the transmission path of the service.

In a case of west-side 1:1 and east-side 1:1, it may be determined that the transmission path of the service is the third path (A<->C), or it is determined to discard the service data.

In a case of west-side 1:1 and east-side 1+1, it may be determined that the transmission path of the service includes the third path (A<->C) and the first path (A->B). Alternatively, it may be determined that the transmission path of the service includes only the unidirectional first path (A->B).

In a case of west-side 1+1 and east-side 1+1, it may be determined that the transmission path of the service includes the third path (A<->C) and the first path (A->B). Alternatively, it is determined that the transmission path of the service includes only the unidirectional first path (A->B).

In a case of west-side 1+1 and east-side 1:1, it may be determined that the transmission path of the service includes the third path (A<->C), or it is determined to discard the service data.

If the state of A is standby, the state of B is active, and the state of C is OK, the channel B and the channel C can be used for normal data transmission. Therefore, a path including the channel B and/or the channel C may be determined as the transmission path of the service.

In a case of west-side 1:1 and east-side 1:1, it may be determined that the transmission path of the service is the fourth path (B<->C).

In a case of west-side 1:1 and east-side 1+1, it may be determined that the transmission path of the service includes the fourth path (B<->C).

In a case of west-side 1+1 and east-side 1+1, it may be determined that the transmission path of the service includes the fourth path (B<->C) and the first path (B->A).

In a case of west-side 1+1 and east-side 1:1, it may be determined that the transmission path of the service includes the fourth path (B<->C) and the first path (B->A).

If the state of A is standby, the state of B is active, and the state of C is NOK, the channel B can be used for normal data transmission. Therefore, a path including the channel B may be determined as the transmission path of the service.

In a case of west-side 1:1 and east-side 1:1, it may be determined that the transmission path of the service is the fourth path (B<->C), or it is determined to discard the service data.

In a case of west-side 1:1 and east-side 1+1, it may be determined that the transmission path of the service includes the fourth path (B<->C), or it is determined to discard the service data.

In a case of west-side 1+1 and east-side 1+1, it may be determined that the transmission path of the service includes the fourth path (B<->C) and the first path (B->A). Alternatively, it is determined that the transmission path of the service includes only the unidirectional first path (B->A).

In a case of west-side 1+1 and east-side 1:1, it may be determined that the transmission path of the service includes the fourth path (B<->C) and the first path (B->A). Alternatively, it is determined that the transmission path of the service includes only the unidirectional first path (B->A).

If both the state of A and the state of B are standby, and the state of C is OK, it indicates that the channel C can be used for normal data transmission. Therefore, a path including the channel C may be determined as the transmission path of the service. In this case, for the first network node, in an example, the following transmission paths determined by the first network node cannot be actually used for service data transmission. However, in this scenario, the second network node may determine that the service data is transmitted through the second path, so that the service data is actually transmitted through the second path, and no service packet loss is caused.

In a case of west-side 1:1 and east-side 1:1, it may be determined that the transmission path of the service is the first path (A<->B), or it is determined to discard the service data.

In a case of west-side 1:1 and east-side 1+1, it may be determined that the transmission path of the service includes the fourth path (C->B).

In a case of west-side 1+1 and east-side 1+1, it may be determined that the transmission path of the service includes the first path (A<->B).

In a case of west-side 1+1 and east-side 1:1, it may be determined that the transmission path of the service includes the third path (C->A).

It is assumed that both the state of A and the state of B are standby, and the state of C is NOK state.

In a case of west-side 1:1 and east-side 1:1, it may be determined that the transmission path of the service is the first path (A<->B), or it is determined to discard the service data.

In a case of west-side 1:1 and east-side 1+1, it may be determined that the transmission path of the service includes the fourth path (C->B), or it is determined to discard the service data.

In a case of west-side 1+1 and east-side 1+1, it may be determined that the transmission path of the service includes the first path (A<->B).

In a case of west-side 1+1 and east-side 1:1, it may be determined that the transmission path of the service includes the third path (C->A), or it is determined to discard the service data.

In an example, Table 3 may be simplified into Table 4:

**Table 4**

| Serial number | State of A | State of B | Transmission path of the service | | | |
|---|---|---|---|---|---|---|
| | | | West-side 1:1 and east-side 1:1 | West-side 1:1 and east-side 1+1 | West-side 1+1 and east-side 1+1 | West-side 1+1 and east-side 1:1 |
| 1 | active | active | A<->B | A<->B & A->C | A<->B | A<->B & B->C |
| 2 | active | standby | A<->C | A->B & A<->C | A->B & A<->C | A<->C |
| 3 | standby | active | B<->C | B<->C | B->A & B<->C | B->A & B<->C |
| 4 | standby | standby | A<->B, or discard the service | C->B | A<->B | C->A |

For Table 4, refer to the foregoing descriptions of Table 3. Details are not described herein again.

The following describes a specific implementation in which the first network node determines the transmission path of the service based on the state of the channel when the sixth channel and the seventh channel are included between the first network node and the second network node. Refer to Table 5 for understanding. In Table 5, "A" represents the "first channel", "B" represents the "second channel", "C" represents the "sixth channel", and "D" represents the "seventh channel". West-side 1:1 means that the first channel and the third channel are configured as 1:1 protection switching paths, west-side 1+1 means that the first channel and the third channel are configured as 1+1 protection switching paths, east-side 1:1 means that the second channel and the fourth channel are configured as 1:1 protection switching paths, and east-side 1+1 means that the second channel and the fourth channel are configured as 1+1 protection switching paths.

**Table 5**

| Serial number | State of A | State of B | State of C | State of D | Transmission path of the service | | | |
|---|---|---|---|---|---|---|---|---|
| | | | | | West-side 1:1 and east-side 1:1 | West-side 1:1 and east-side 1+1 | West-side 1+1 and east-side 1+1 | West-side 1+1 and east-side 1:1 |
| 1 | active | active | OK | OK | A<->B | A<->B & A->D | A<->B & A->D & B->C | A<->B & B->C |
| 2 | active | active | OK | NOK | A<->B | A<->B & A->D, or A<->B | A<->B & A->D & B->C, or A<->B & B->C | A<->B & B->C |
| 3 | active | active | NOK | OK | A<->B | A<->B & A->D | A<->B & A->D & B->C, or A<->B & A->D | A<->B & B->C, or A<->B |
| 4 | active | active | NOK | NOK | A<->B | A<->B & A->D, or A<->B | A<->B & A->D & B->C, or A<->B | A<->B & B->C, or A<->B |
| 5 | active | standby | OK | OK | A->D & C->A | A->B & A->D & C->A | A->D & A->B & C->A | A->D & C->A |
| 6 | active | standby | OK | NOK | A->D & C->A, or C->A | A->B & A->D & C->A, or A->B & C->A | A->D & A->B & C->A, or A->B & C->A | A->D & C->A, or C->A |
| 7 | active | standby | NOK | OK | A->D & C->A, or A->D | A->B & A->D & C->A, or A->B & A->D | A->D & A->B & C->A, or A->D & A->B | A->D & C->A, or A->D |
| 8 | active | standby | NOK | NOK | A->D & C->A, or discard the service | A->B & A->D & C->A, or A->B | A->D & A->B & C->A, or A->B | A->D & C->A, or discard the service |
| 9 | standby | active | OK | OK | B->C & D->B | B->C & D->B | B->A & B->C & D->B | B->A & B->C & D->B |
| 10 | standby | active | OK | NOK | B->C & D->B, or B->C | B->C & D->B, or B->C | B->A & B->C & D->B, or B->A & B->C | B->A & B->C & D->B, or B->A & B->C |
| 11 | standby | active | NOK | OK | B->C & D->B, or D->B | B->C & D->B, or D->B | B->A & B->C & D->B, or B->A & D->B | B->A & B->C & D->B, or B->A & D->B |
| 12 | standby | active | NOK | NOK | B->C & D->B, or discard the service | B->C & D->B, or discard the service | B->A & B->C & D->B, or B->A | B->A & B->C & D->B, or B->A |
| 13 | standby | standby | OK | OK | A<->B, or discard the service | D->B | C->A & D->B | C->A |
| 14 | standby | standby | OK | NOK | A<->B, or discard the service | D->B, or discard the service | C->A & D->B, or C->A | C->A |
| 15 | standby | standby | NOK | OK | A<->B, or discard the service | D->B | C->A & D->B, or D->B | C->A, or discard the service |
| 16 | standby | standby | NOK | NOK | A<->B, or discard the service | D->B, or discard the service | C->A & D->B, or discard the service | C->A, or discard the service |

It should be noted that transmission paths of the service determined in three scenarios "west-side 1:1 and east-side 1:1", "west-side 1:1 and east-side 1+1", and "west-side 1+1 and east-side 1:1" in Table 5 are the same as those in Table 3. A difference lies in that the sixth channel (the channel C in Table 4) and the seventh channel (the channel D in Table 5) are included between first network nodes in Table 5 instead of the fifth channel (the channel C in Table 3). The state of C and the state of D in Table 5 are equivalent to the state of C in Table 3. In Table 5, that both the state of C and the state of D are OK is equivalent to that the state of C is OK in Table 3. In Table 5, that the state of C or the state of D is NOK is equivalent to that the state of C is NOK in Table 3. In addition, in Table 3, both the third path and the fourth path include the fifth channel, and in Table 5, both the third path and the fourth path include the sixth channel and the seventh channel.

The third path A<->C in Table 3 is equivalent to A->D & C->A in Table 5. To be specific, A->C in Table 3 is equivalent to A->D in Table 5, and C->A in Table 3 is equivalent to C->A in Table 5.

The fourth path B<->C in Table 3 is equivalent to B->C & D->B in Table 5. To be specific, B->C in Table 3 is equivalent to B->C in Table 5, and the fourth path C->B in Table 3 is equivalent to D->B in Table 5. For the transmission path of the service determined in the scenario "west-side 1+1 and east-side 1+1" in Table 5, refer to Table 5 for understanding. Details are not described herein.

In an example, Table 5 may be simplified into Table 6:

**Table 6**

| 1 Serial number | State of A | State of B | Transmission path of the service | | | |
|---|---|---|---|---|---|---|
| | | | West-side 1:1 and east-side 1:1 | West-side 1:1 and east-side 1+1 | West-side 1+1 and east-side 1+1 | West-side 1+1 and east-side 1:1 |
| 1 | active | active | A<->B | A<->B & A->D | A<->B & A->D & B->C | A<->B & B->C |
| 2 | active | standby | A->D & C->A | A->B & A->D & C->A | A->D & A->B & C->A | A->D & C->A |
| 3 | standby | active | B->C & D->B | B->C & D->B | B->A & B->C & D->B | B->A & B->C & D->B |
| 4 | standby | standby | A<->B, or discard the service | D->B | C->A & D->B | C->A |

Table 6 may also be understood with reference to the foregoing descriptions of Table 3. Details are not described herein again.

It can be learned from the foregoing descriptions that, by using the solution in this embodiment of this application, the first network node may determine the transmission path of the service based on the state of the channel, so that the determined transmission path matches the state of the channel. Correspondingly, when service traffic is transmitted based on the determined transmission path, service traffic transmission interruption can be effectively avoided.

In an implementation of this embodiment of this application, the first network node may further exchange a target OAM message with another network node on the first path. Specifically, the first network node may send or receive the target OAM message through the first channel or the second channel. The target OAM message mentioned herein includes but is not limited to a message carrying a basic code block, a message carrying an APS code block, a message carrying a connectivity verification (connectivity verification, CV) code block, a message carrying a one-way delay measurement (one-way delay measurement, 1DM) code block, a message carrying a delay measurement message (delay measurement message, 2DMM) code block, a message carrying a delay measurement reply (delay measurement reply, DMR) code block, or a message carrying a client signal (client signal, CS) code block. For functions and usages of the basic code block, the APS code block, the CV code block, the 1DM code block, the delay measurement message (delay measurement message, DMM) code block, the delay measurement reply (delay measurement reply, DMR) code block, and the client signal (client signal, CS) code block, refer to the related descriptions of the CCSA or the ITU-T. Details are not described herein again.

In an example, when the first channel or the second channel is a fine granularity channel, the target OAM message may be an end-to-end fine-granularity OAM message. For the end-to-end fine-granularity OAM message, refer to a CCSA standard definition or an ITU-T standard definition. Details are not described herein again. In this embodiment of this application, when the first network node is P, the first network node may also receive or send an end-to-end fine-granularity OAM message through the first channel.

In another example, the target OAM message may be a newly defined OAM message.

In a specific example, an O code block type field of the target OAM message indicates a message type of the target OAM message. The target OAM message may be an OAM message initiated or terminated at a P node on which a fine granularity technology is deployed. In an example, the O code block type field of the end-to-end fine-granularity OAM message may be extended, to obtain the target OAM message. For example, a value of the O code block type field of the end-to-end fine-granularity OAM message is 0XC, and a value of the O code block type field of the target OAM message is 0XD.

In another specific example, a type field of the target OAM message indicates a message type of the target OAM message. The target OAM message may be an OAM message initiated or terminated at a P node on which a fine granularity technology is deployed. In an example, the type field of the end-to-end fine-granularity OAM message may be extended, to obtain the target OAM message. For example, refer to Table 7 for understanding. Table 7 shows a value of the type field of the end-to-end fine-granularity OAM message and a value of the type field of the target OAM message.

**Table 7**

| Classification | OAM type | ITU-T standard type value | CCSA standard type value |
|---|---|---|---|
| End-to-end fine-granularity OAM message | BAS | 0xF | 0x1 |
| | APS | 0x11 | 0x2 |
| | CV | 0x33 | 0x11 |
| | IDM | 0x35 | 0x12 |
| | DMM | 0x39 | 0x13 |
| | DMR | 0x30 | 0x14 |
| | CS | 0x36 | 0x15 |
| Target OAM message | BAS | 0x21 | 0x21 |
| | APS | 0x22 | 0x22 |
| | CV | 0x24 | 0x23 |
| | IDM | 0x28 | 0x24 |
| | DMM | 0x3A | 0x25 |
| | DMR | 0x3C | 0x26 |
| | CS | 0x3D | 0x27 |

It should be noted that the value of the type field of the target OAM message shown in Table 7 is merely shown for ease of understanding of this solution, and does not constitute a limitation on this embodiment of this application.

The foregoing describes the communication system provided in embodiments of this application and the data processing method performed by the first network node. The following describes the data processing method provided in embodiments of this application with reference to a fine granularity scenario.

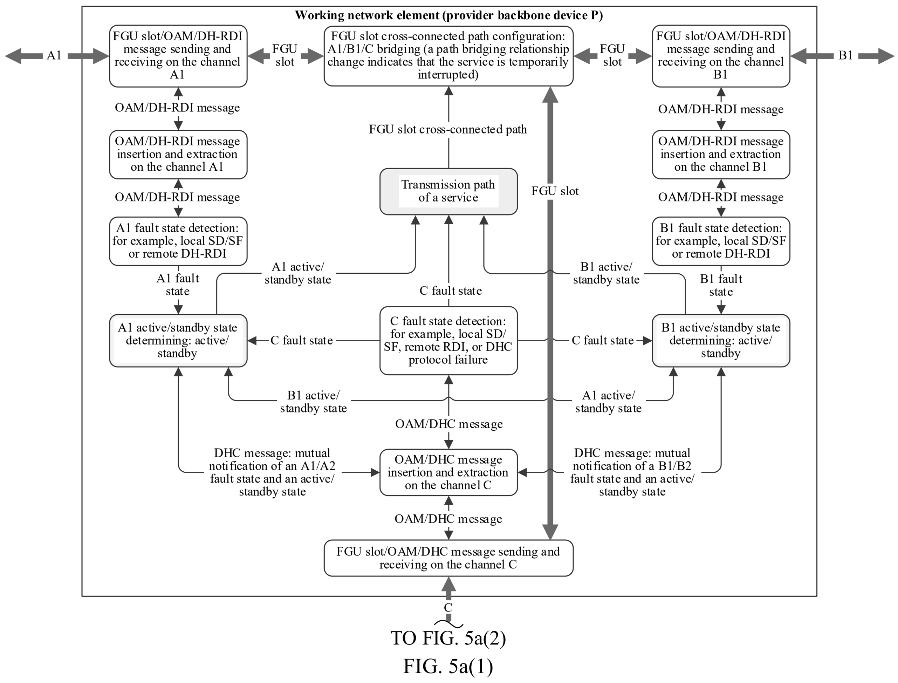

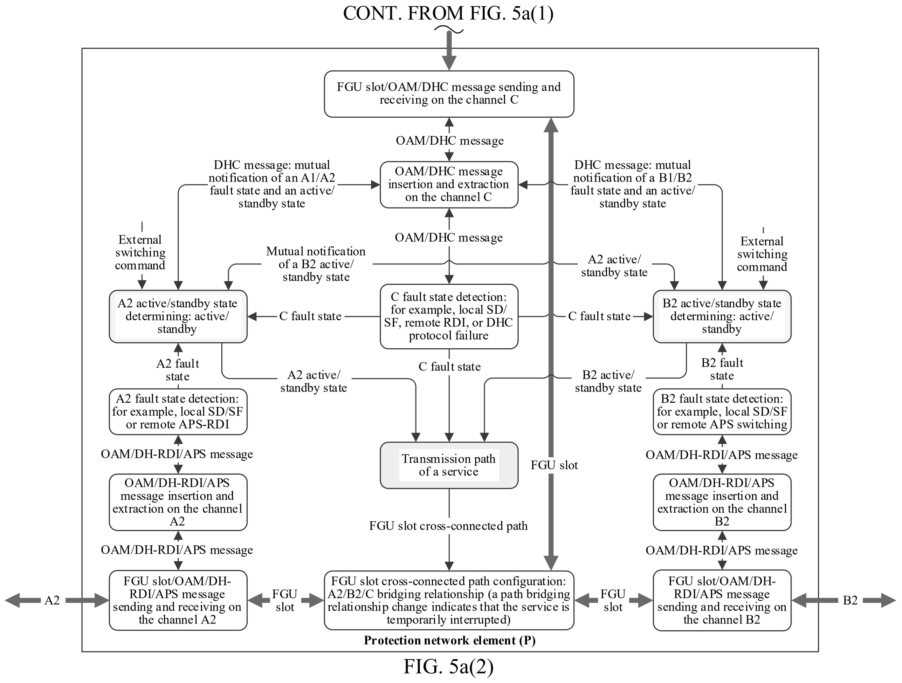

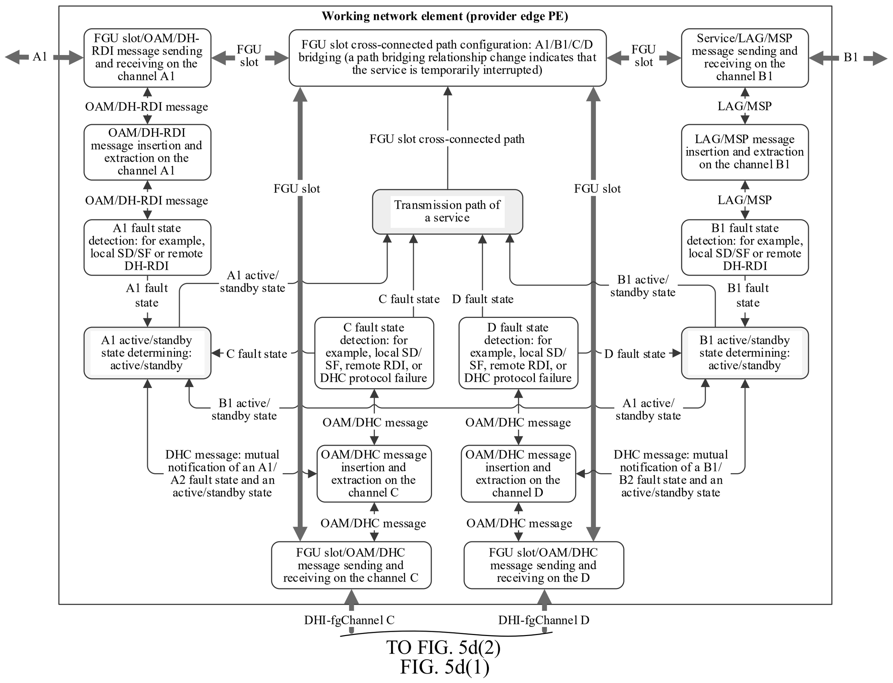

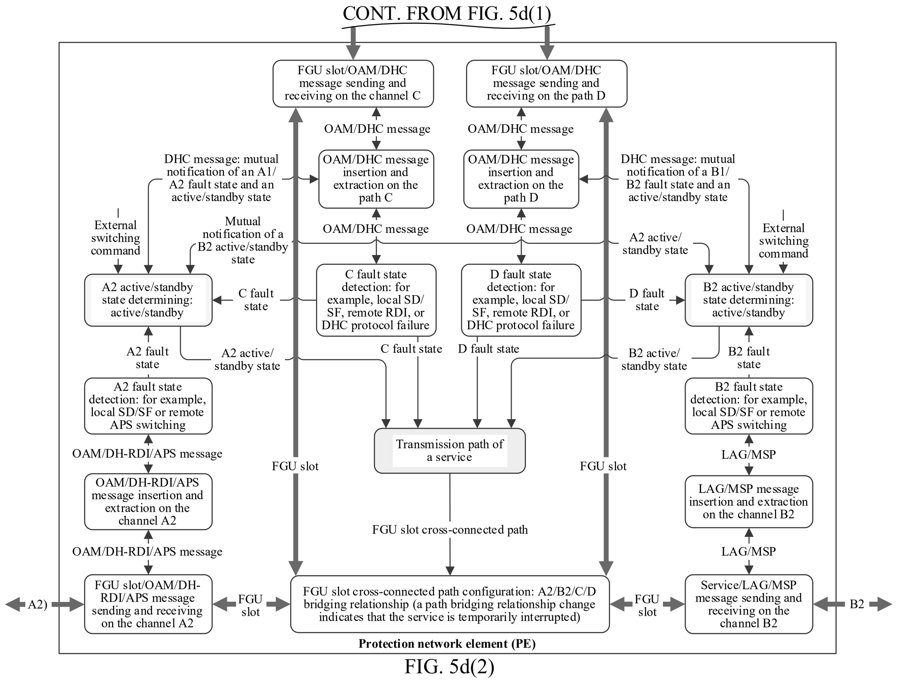

In FIG. 5a(1) to FIG. 5d(2), a working network element is a network element on a working path, a protection network element is a network element on a protection path, and the working network element and the protection network element may correspond to the first network node and the second network node. For example, the working network element corresponds to the first network node, and the protection network element corresponds to the second network node. For another example, the working network element corresponds to the second network node, and the protection network element corresponds to the first network node.

In FIG. 5a(1) to FIG. 5d(2), channels A1 and A2 are protection switching channels for each other, and channels B1 and B2 are protection switching channels for each other. The channels A1 and B1 are channels on the working path, and the channels A2 and B2 are channels on the protection path. In an example, the channel A1 may correspond to the first channel, the channel B1 may correspond to the second channel, the channel A2 may correspond to the third channel, the channel B2 may correspond to the fourth channel, and the channel C may correspond to the fifth channel. In another example, the channel A1 may correspond to the third channel, the channel B1 may correspond to the fourth channel, the channel A2 may correspond to the first channel, the channel B2 may correspond to the second channel, and the channel C may correspond to the fifth channel.

In FIG. 5a(1) to FIG. 5d(2), an active/standby state of a channel means a state of the channel. A fault state of a channel indicates whether a local fault or a remote fault occurs on the channel.

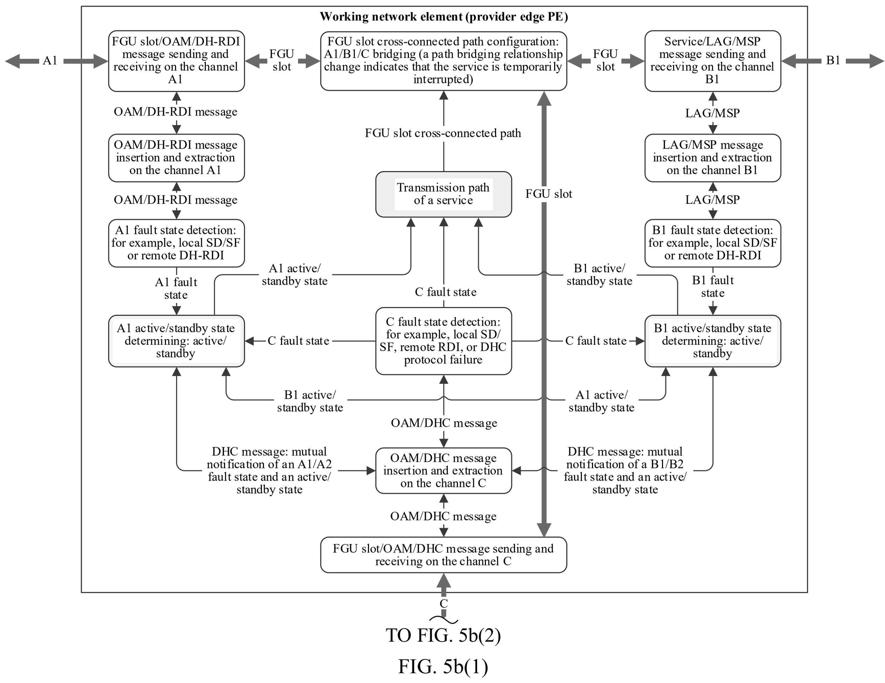

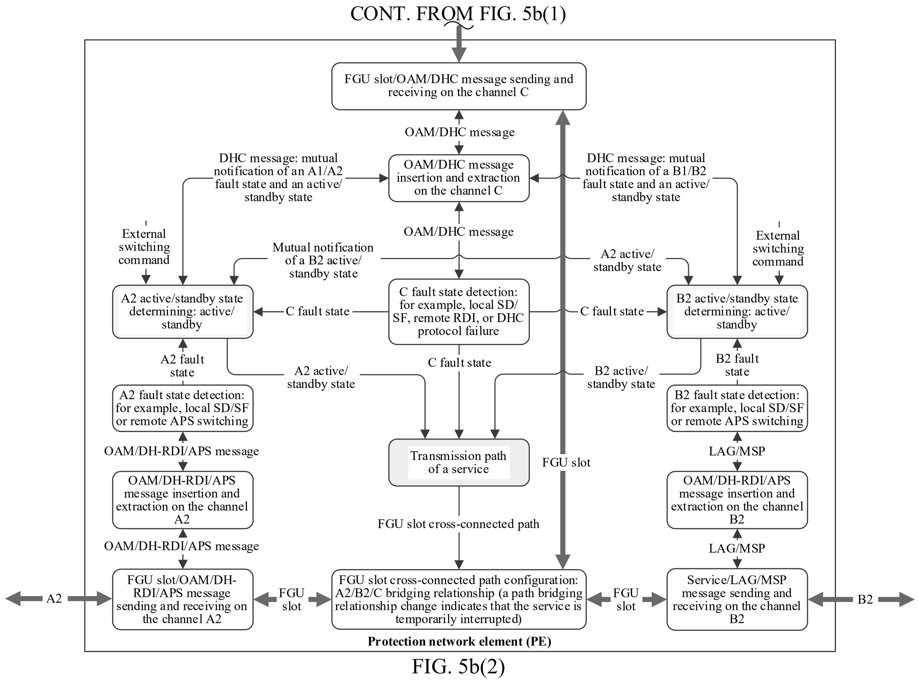

In FIG. 5a(1) to FIG. 5b(2), the channel C may correspond to the fifth channel.

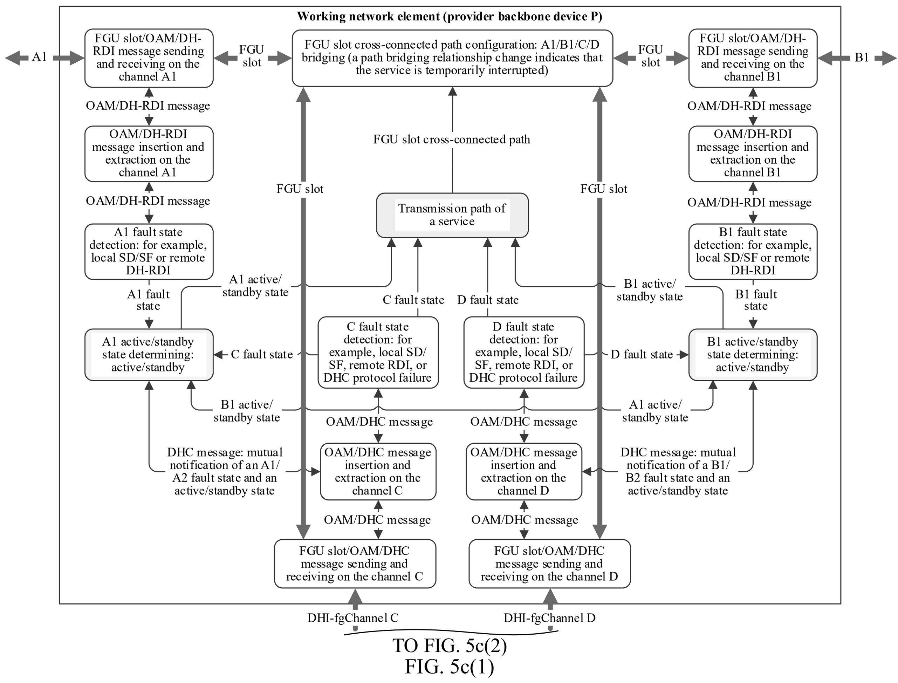

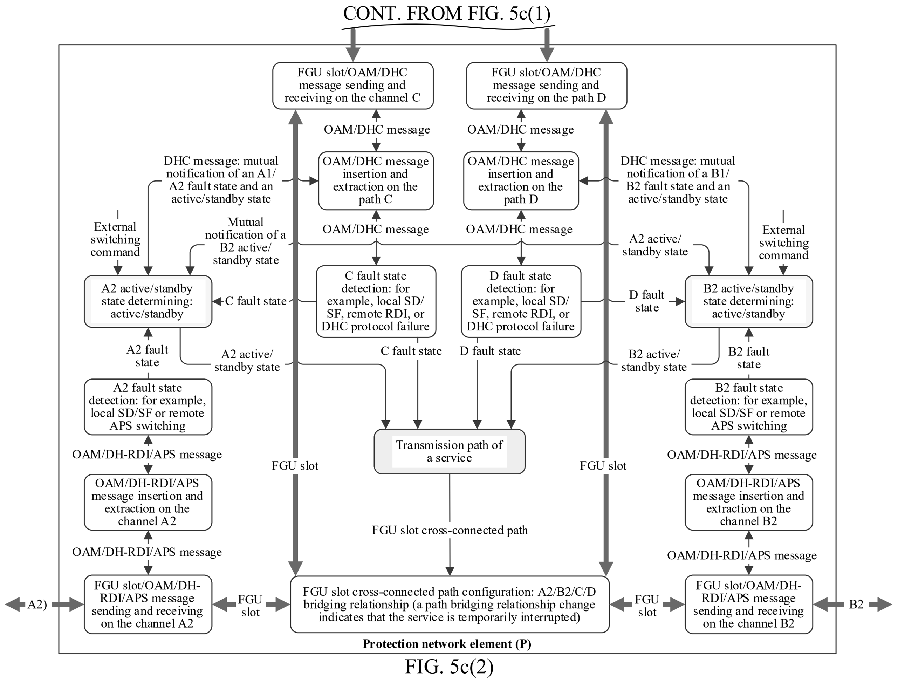

In FIG. 5c(1) to FIG. 5d(2), the channel C and the channel D may respectively correspond to the sixth channel and the seventh channel.

FIG. 5a(1) and FIG. 5a(2) are a diagram of a technical architecture according to an embodiment of this application. FIG. 5a(1) and FIG. 5a(2) are a diagram of a technical architecture when the first network node and the second network node are different P nodes, and the fifth channel is included between the first network node and the second network node. In FIG. 5a(1) and FIG. 5a(2), the channel A1, the channel A2, the channel A3, and the channel A4 all are fine granularity channels.

In FIG. 5a(1) and FIG. 5a(2), the working network element may perform OAM and DH-RDI sending and receiving through an FGU slot included in the channel A1. In addition, the working network element may further perform fault state detection on the channel A1, for example, detect whether a local fault or a remote fault occurs on the channel A1. The working network element may perform OAM and DH-RDI sending and receiving through an FGU slot included in the channel B1. In addition, the working network element may further perform fault state detection on the channel B1, for example, detect whether a local fault or a remote fault occurs on the channel B1.

The working network element may further receive state information of the channel A2 and state information of the channel B2 through the channel C. The state information of the channel A2 may include an active/standby state of the channel A2 and a fault state of the channel A2, and the state information of the channel B2 may include an active/standby state of the channel B2 and a fault state of the channel B2.

The working network element may perform OAM and DHC message sending and receiving through an FGU slot included in the channel C. In addition, the working network element may further perform fault state detection on the channel C, for example, detect whether a local fault or a remote fault occurs on the channel C.

The working network element may determine an active/standby state of the channel A1 with reference to a fault state of A1, the state information of A2, state information of B1, and a fault state of the channel C. In addition, the working network element may determine an active/standby state of the channel A2 with reference to a fault state of B 1, state information of A1, the state information of B2, and the fault state of the channel C.

After determining the active/standby state of A1 and the active/standby state of A2, the working network element may determine the transmission path of the service with reference to the active/standby state of A1, the active/standby state of A2, and the fault state of C, and further determine, based on the transmission path of the service, a mapping relationship between fine granularity slots between channels included on the transmission path.

A data processing procedure of the protection network element is similar to that of the working network element. A difference lies in that the protection network element may also determine the active/standby states of the channels B1 and B2 with reference to an external command. For the data processing procedure of the protection network element, refer to the foregoing descriptions of the processing procedure of the working network element. Details are not described herein again.

FIG. 5b(1) and FIG. 5b(2) are a diagram of another technical architecture according to an embodiment of this application. FIG. 5b(1) and FIG. 5b(2) are a diagram of a technical architecture when the first network node and the second network node are different PE nodes, and the fifth channel is included between the first network node and the second network node.

In FIG. 5b(1) and FIG. 5b(2), an example in which a channel A1 and a channel A2 are network side channels, and a channel B1 and a channel B2 are user side channels is used for description. The channel A1 and the channel A2 are fine granularity channels, and the channel B1 and the channel B2 are AC links.

A processing procedure of the working network element in FIG. 5b(1) and FIG. 5b(2) is basically the same as the processing procedure of the working network element in FIG. 5a(1) and FIG. 5a(2). A difference lies in that the working network element in FIG. 5b(1) and FIG. 5b(2) does not perform OAM and DH-RDI sending and receiving by using an FGU slot included in the channel B1, but sends and receives a service message, a link aggregation group (link aggregation group, LAG) message, and a multiplex section protection (multiplex section protection, MSP) message through the channel B1. A processing procedure of the protection network element in FIG. 5b(1) and FIG. 5b(2) is basically the same as the processing procedure of the protection network element in FIG. 5a(1) and FIG. 5a(2). A difference lies in that the protection network element in FIG. 5b(1) and FIG. 5b(2) does not perform OAM and DH-RDI sending and receiving by using an FGU slot included in the channel B2, but sends and receives a service message, an LAG message, and an MSP message through the channel B2.

FIG. 5c(1) and FIG. 5c(2) are a diagram of still another technical architecture according to an embodiment of this application. FIG. 5c(1) and FIG. 5c(2) are a diagram of a technical architecture when the first network node and the second network node are different P nodes, and the sixth channel and the seventh channel are included between the first network node and the second network node.

A processing procedure of the working network element in FIG. 5c(1) and FIG. 5c(2) is basically the same as the processing procedure of the working network element in FIG. 5a(1) and FIG. 5a(2). A difference lies in that, in FIG. 5c(1) and FIG. 5c(2), the working network element receives state information of the channel A2 through the channel C, and receives state information of the channel B2 through the channel D. In addition, the transmission path of the service needs to determined with reference to fault state of the channel D of the channel C. Similarly, a processing procedure of the protection network element in FIG. 5c(1) and FIG. 5c(2) is basically the same as the processing procedure of the protection network element in FIG. 5a(1) and FIG. 5a(2). A difference lies in that, in FIG. 5c(1) and FIG. 5c(2), the protection network element receives state information of the channel A1 through the channel C, and receives state information of the channel B1 through the channel D. In addition, the transmission path of the service needs to determined with reference to fault state of the channel D of the channel C.

FIG. 5d(1) and FIG. 5d(2) are a diagram of another technical architecture according to an embodiment of this application. FIG. 5d(1) and FIG. 5d(2) are a diagram of a technical architecture when the first network node and the second network node are different PE nodes, and the sixth channel and the seventh channel are included between the first network node and the second network node.

In FIG. 5d(1) and FIG. 5d(2), an example in which a channel A1 and a channel A2 are network side channels, and a channel B1 and a channel B2 are user side channels is used for description. The channel A1 and the channel A2 are fine granularity channels, and the channel B1 and the channel B2 are AC links.

A processing procedure of the working network element in FIG. 5d(1) and FIG. 5d(2) is basically the same as the processing procedure of the working network element in FIG. 5c(1) and FIG. 5c(2). A difference lies in that the working network element in FIG. 5d(1) and FIG. 5d(2) does not perform OAM and DH-RDI sending and receiving by using an FGU slot included in the channel B1, but sends and receives a service message, an LAG message, and an MSP message through the channel B1. A processing procedure of the protection network element in FIG. 5d(1) and FIG. 5d(2) is basically the same as the processing procedure of the protection network element in FIG. 5c(1) and FIG. 5c(2). A difference lies in that the protection network element in FIG. 5d(1) and FIG. 5d(2) does not perform OAM and DH-RDI sending and receiving by using an FGU slot included in the channel B2, but sends and receives a service message, an LAG message, and an MSP message through the channel B2.

The following describes, with reference to a specific scenario, the transmission path of the service determined by the first network node and/or the second network node.

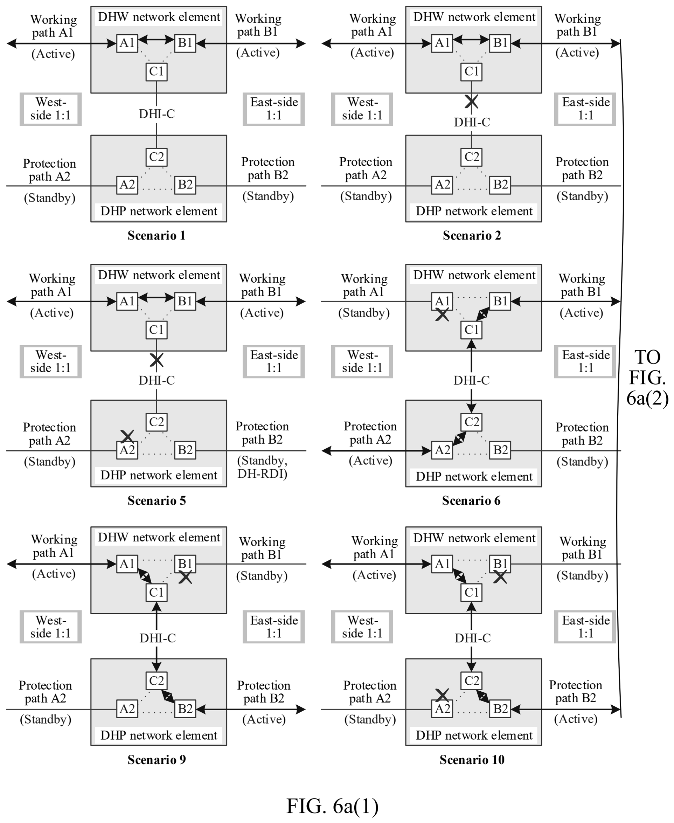

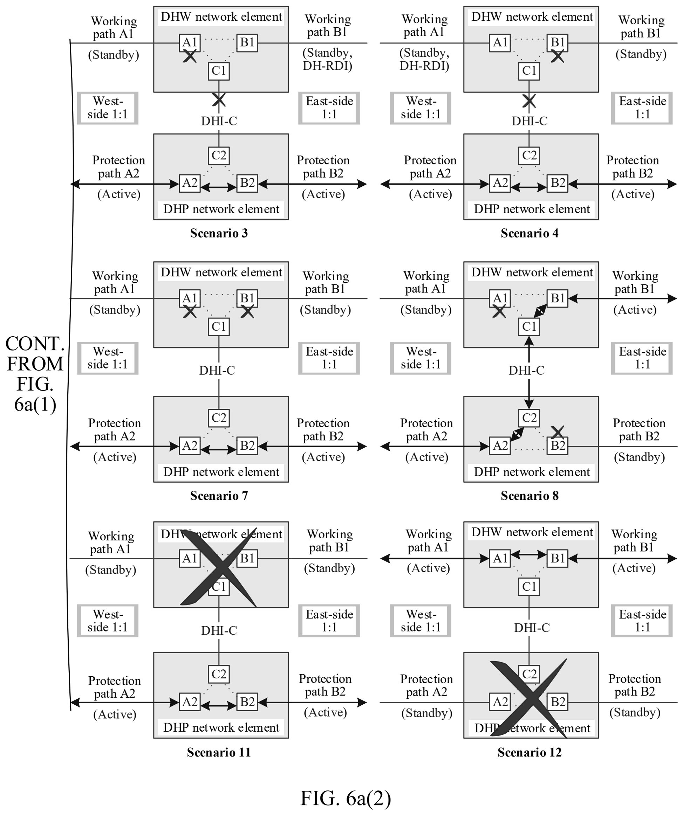

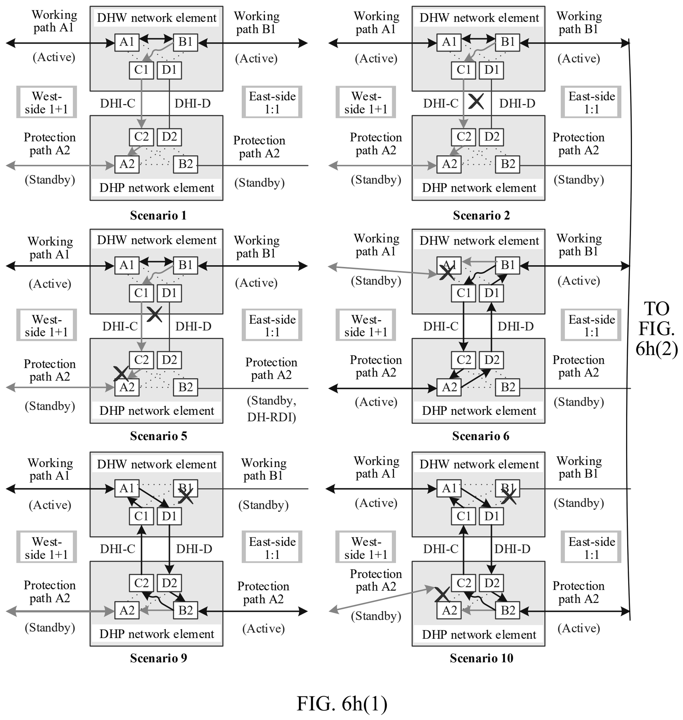

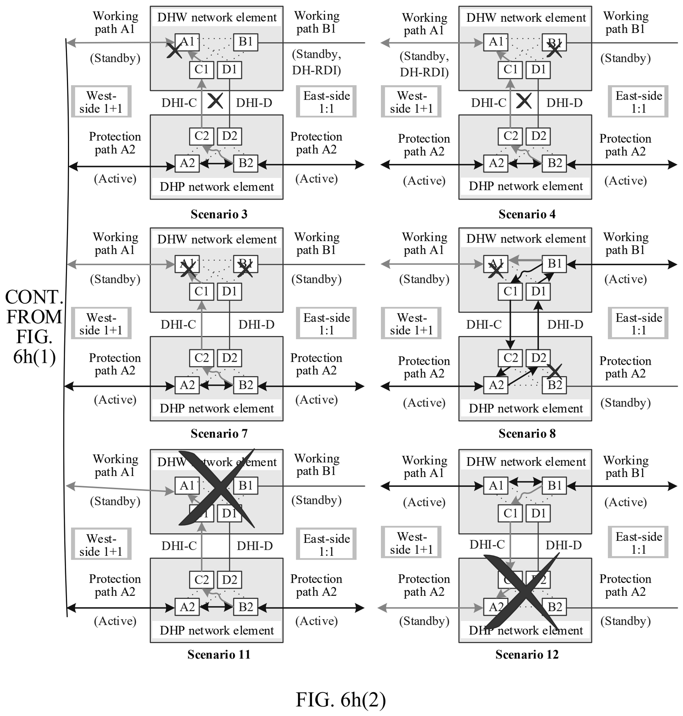

In FIG. 6a(1) to FIG. 6h(2), a dual-homing work (dual-homing work, DHW) network element represents a network element on a working path, a working path A1 represents the channel A1 on the working path, and a working path B1 represents the channel B1 on the working path. A dual-homing protection (dual-homing protection, DHP) network element represents a network element on a protection path, a protection path A2 represents the channel A2 on the protection path, a protection path B2 represents the channel B2 on the protection path, and "X" represents a fault.

FIG. 6a(1) and FIG. 6a(2) are a diagram of an example application scenario according to an embodiment of this application. FIG. 6a(1) and FIG. 6a(2) show 12 network scenarios in a case in which west-side channels (A1 and A2) are configured as 1:1 protection switching channels and east-side channels (B1 and B2) are configured as 1:1 protection switching channels, and shows transmission paths of the service separately determined in various network scenarios. In FIG. 6a(1) and FIG. 6a(2), a transmission path of the service is represented by an arrow with a direction. In the scenarios shown in FIG. 6a(1) and FIG. 6a(2), the fifth channel (that is, a channel between C1 and C2) is included between the DHW network element and the DHP network element.

As shown in FIG. 6a(1) and FIG. 6a(2), in the scenario 1, if the working path A1, the working path B1, the protection path A2, the protection path B2, and the fifth channel are all not faulty, the determined transmission path of the service is a working path A1<->B1.

As shown in FIG. 6a(1) and FIG. 6a(2), in the scenario 2, if the working path A1, the working path B1, the protection path A2, and the protection path B2 are all not faulty, and the fifth channel is faulty, the determined transmission path of the service is a working path A1<->B1.

As shown in FIG. 6a(1) and FIG. 6a(2), in the scenario 3, if the working path A1 and the fifth channel are faulty, and the working path B1, the protection path A2, and the protection path B2 are all not faulty, the determined transmission path of the service is a protection path A2<->B2. In addition, the DHW network element may further send a DH-RDI to a remote end through the working path B1.

As shown in FIG. 6a(1) and FIG. 6a(2), in the scenario 4, if the working path B1 and the fifth channel are faulty, and the working path A1, the protection path A2, and the protection path B2 are all not faulty, the determined transmission path of the service is a protection path A2<->B2. In addition, the DHW network element may further send a DH-RDI to a remote end through the working path A1.

As shown in FIG. 6a(1) and FIG. 6a(2), in the scenario 5, if the protection path A2 and the fifth channel are faulty, and the working path A1, the working path B1, and the protection path B2 are all not faulty, the determined transmission path of the service is a working path A1<->B1. In addition, the DHP network element may further send a DH-RDI to a remote end through the protection path B2.

As shown in FIG. 6a(1) and FIG. 6a(2), in the scenario 6, if the working path A1 is faulty, and the working path B1, the protection path A2, the protection path B2, and the fifth channel are all not faulty, the determined transmission path of the service is a path A2<->B1.

As shown in FIG. 6a(1) and FIG. 6a(2), in the scenario 7, if the working path A1 and the working path B1 are faulty, and the protection path A2, the protection path B2, and the fifth channel are all not faulty, the determined transmission path of the service is a protection path A2<->B2.

As shown in FIG. 6a(1) and FIG. 6a(2), in the scenario 8, if the working path A1 and the protection path B2 are faulty, and the protection path A2, the working path B1, and the fifth channel are all not faulty, the determined transmission path of the service is a path A2<->B1.

As shown in FIG. 6a(1) and FIG. 6a(2), in the scenario 9, if the working path B1 is faulty, and the working path A1, the protection path A2, the protection path B2, and the fifth channel are all not faulty, the determined transmission path of the service is a path A1<->B2.

As shown in FIG. 6a(1) and FIG. 6a(2), in the scenario 10, if the working path B1 and the protection path A2 are faulty, and the working path A1, the protection path B2, and the fifth channel are all not faulty, the determined transmission path of the service is a path A1 <->B2.

As shown in FIG. 6a(1) and FIG. 6a(2), in the scenario 11, if the DHW network element is faulty, that is, all channels connected to the DHW network element are faulty, and the protection path A2 and the protection path B2 are not faulty, the determined transmission path of the service is a protection path A2<->B2.

As shown in FIG. 6a(1) and FIG. 6a(2), in the scenario 12, if the DHP network element is faulty, that is, all channels connected to the DHP network element are faulty, and the working path A1 and the working path B1 are not faulty, the determined transmission path of the service is a working path A1<->B1.

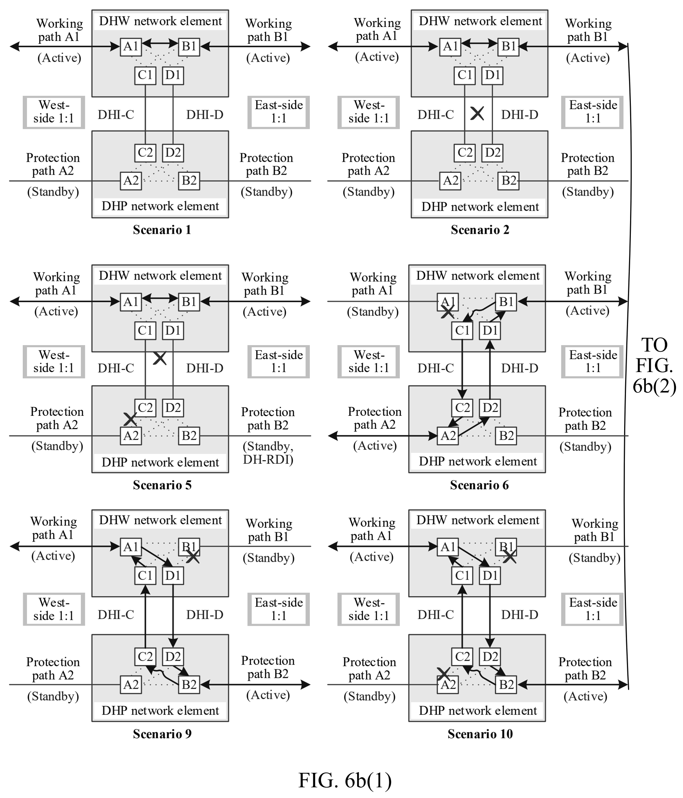

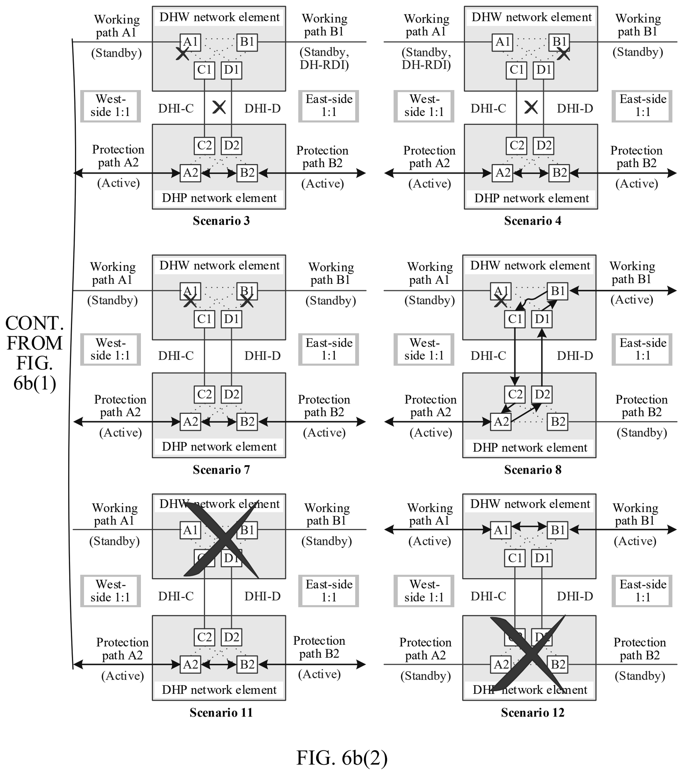

FIG. 6b(1) and FIG. 6b(2) are a diagram of an example application scenario according to an embodiment of this application. FIG. 6b(1) and FIG. 6b(2) show 12 network scenarios in a case in which west-side channels (A1 and A2) are configured as 1:1 protection switching channels and east-side channels (B1 and B2) are configured as 1:1 protection switching channels, and shows transmission paths of the service separately determined in various network scenarios. In FIG. 6b(1) and FIG. 6b(2), a transmission path of the service is represented by an arrow with a direction. In the scenarios shown in FIG. 6b(1) and FIG. 6b(2), the sixth channel (that is, a channel between C1 and C2) and the seventh channel (that is, a channel between D1 and D2) are included between the DHW network element and the DHP network element. For various network scenarios shown in FIG. 6b(1) and FIG. 6b(2) and corresponding transmission paths of the service, details are not described herein.

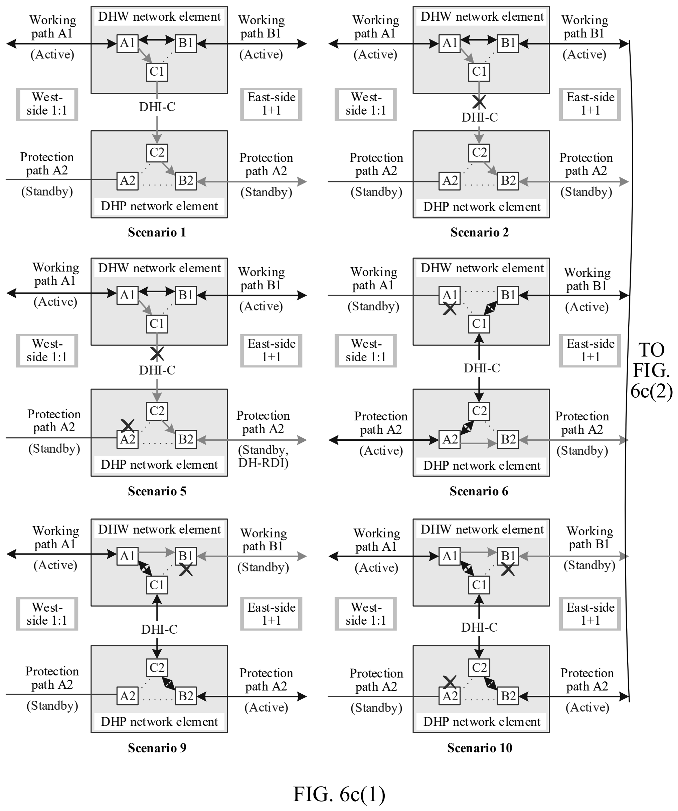

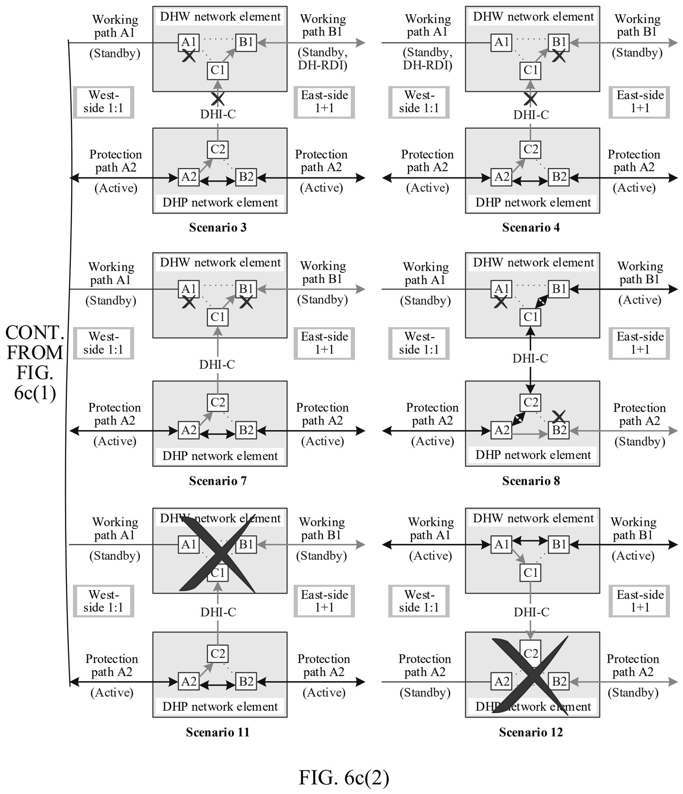

FIG. 6c(1) and FIG. 6c(2) are a diagram of an example application scenario according to an embodiment of this application. FIG. 6c(1) and FIG. 6c(2) show 12 network scenarios in a case in which west-side channels (A1 and A2) are configured as 1:1 protection switching channels and east-side channels (B1 and B2) are configured as 1+1 protection switching channels, and shows transmission paths of the service separately determined in various network scenarios. In FIG. 6c(1) and FIG. 6c(2), a transmission path of the service is represented by an arrow with a direction. In the scenarios shown in FIG. 6c(1) and FIG. 6c(2), the fifth channel (that is, a channel between C1 and C2) is included between the DHW network element and the DHP network element. For various network scenarios shown in FIG. 6c(1) and FIG. 6c(2) and corresponding transmission paths of the service, details are not described herein.

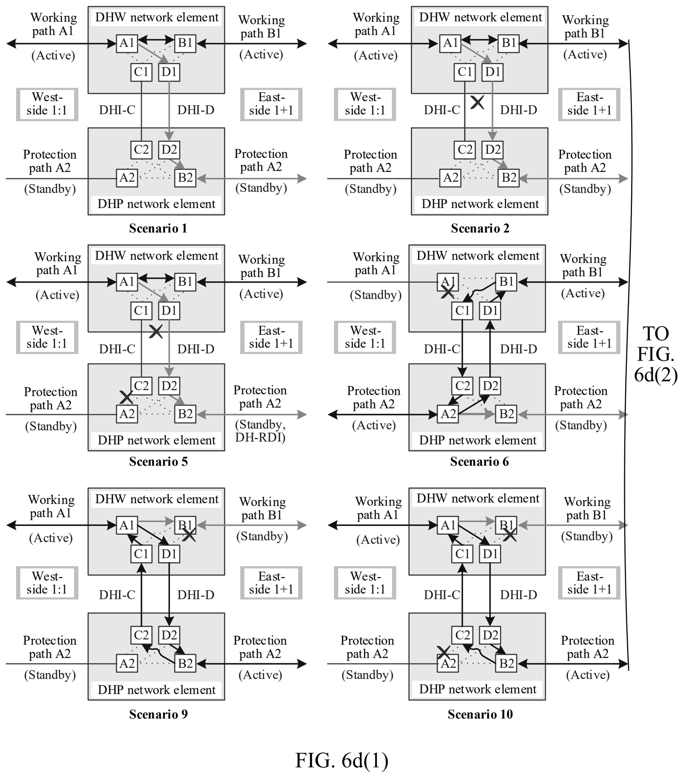

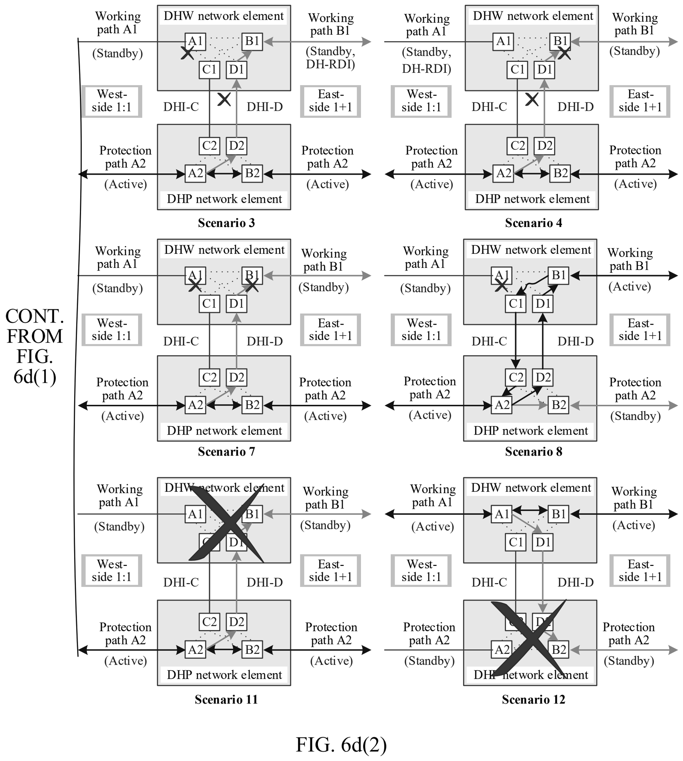

FIG. 6d(1) and FIG. 6d(2) are a diagram of an example application scenario according to an embodiment of this application. FIG. 6d(1) and FIG. 6d(2) show 12 network scenarios in a case in which west-side channels (A1 and A2) are configured as 1:1 protection switching channels and east-side channels (B1 and B2) are configured as 1+1 protection switching channels, and shows transmission paths of the service separately determined in various network scenarios. In FIG. 6d(1) and FIG. 6d(2), a transmission path of the service is represented by an arrow with a direction. In the scenarios shown in FIG. 6d(1) and FIG. 6d(2), the sixth channel (that is, a channel between C1 and C2) and the seventh channel (that is, a channel between D1 and D2) are included between the DHW network element and the DHP network element. For various network scenarios shown in FIG. 6d(1) and FIG. 6d(2) and corresponding transmission paths of the service, details are not described herein.

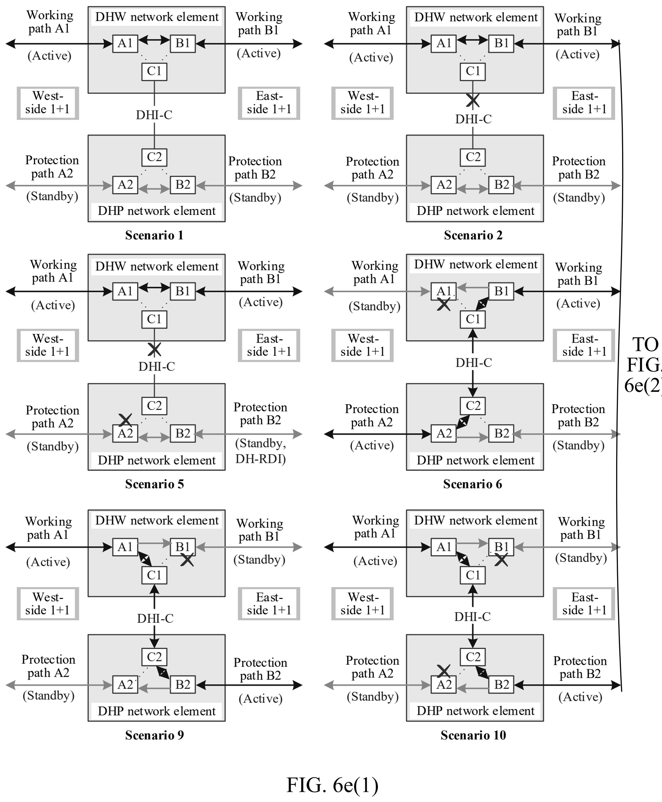

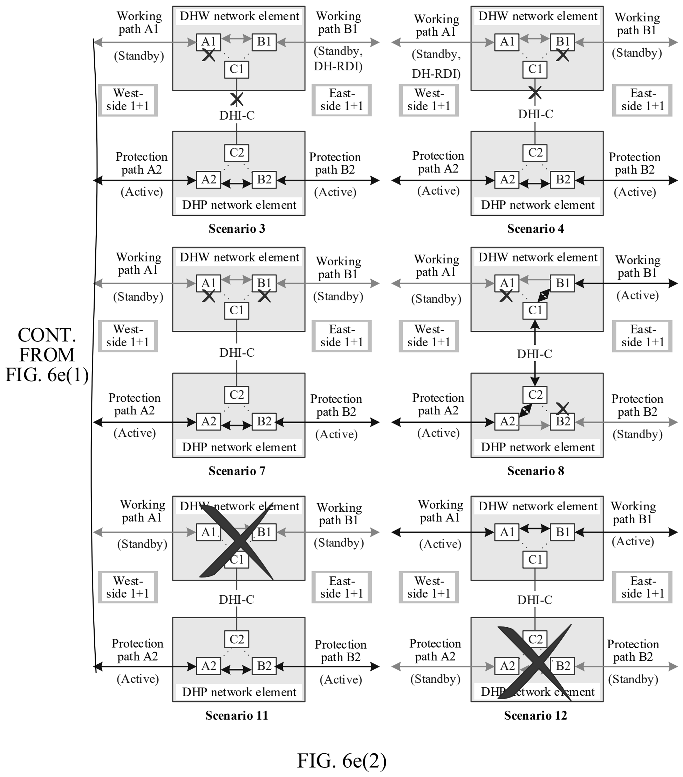

FIG. 6e(1) and FIG. 6e(2) are a diagram of an example application scenario according to an embodiment of this application. FIG. 6e(1) and FIG. 6e(2) show 12 network scenarios in a case in which west-side channels (A1 and A2) are configured as 1+1 protection switching channels and east-side channels (B1 and B2) are configured as 1+1 protection switching channels, and shows transmission paths of the service separately determined in various network scenarios. In FIG. 6e(1) and FIG. 6e(2), a transmission path of the service is represented by an arrow with a direction. In the scenarios shown in FIG. 6e(1) and FIG. 6e(2), the fifth channel (that is, a channel between C1 and C2) is included between the DHW network element and the DHP network element. For various network scenarios shown in FIG. 6e(1) and FIG. 6e(2) and corresponding transmission paths of the service, details are not described herein.

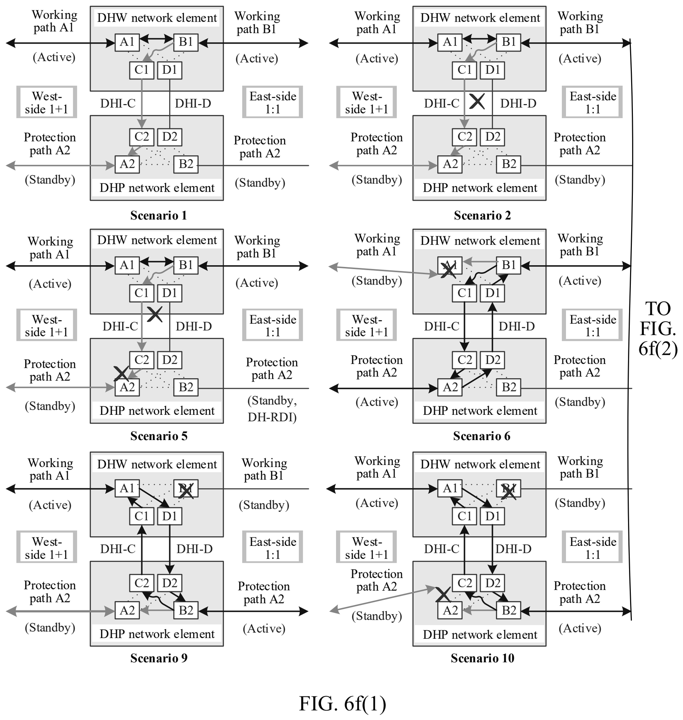

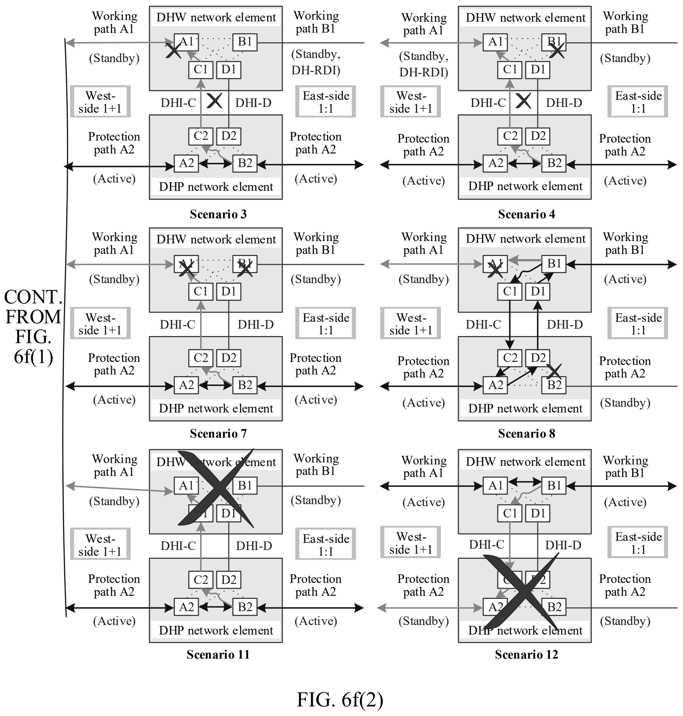

FIG. 6f(1) and FIG. 6f(2) are a diagram of an example application scenario according to an embodiment of this application. FIG. 6f(1) and FIG. 6f(2) show 12 network scenarios in a case in which west-side channels (A1 and A2) are configured as 1+1 protection switching channels and east-side channels (B1 and B2) are configured as 1+1 protection switching channels, and shows transmission paths of the service separately determined in various network scenarios. In FIG. 6f(1) and FIG. 6f(2), a transmission path of the service is represented by an arrow with a direction. In the scenarios shown in FIG. 6f(1) and FIG. 6f(2), the sixth channel (that is, a channel between C1 and C2) and the seventh channel (that is, a channel between D1 and D2) are included between the DHW network element and the DHP network element. For various network scenarios shown in FIG. 6f(1) and FIG. 6f(2) and corresponding transmission paths of the service, details are not described herein.

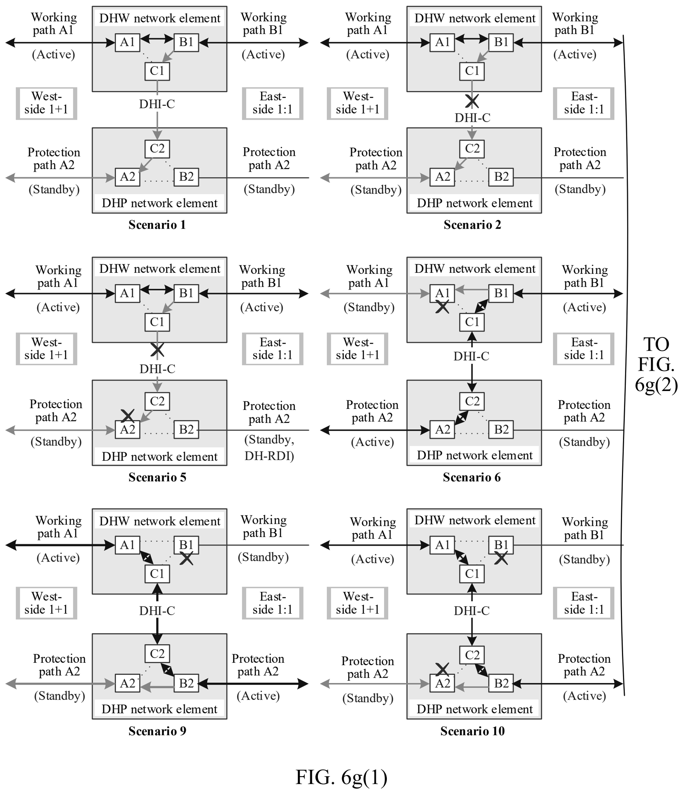

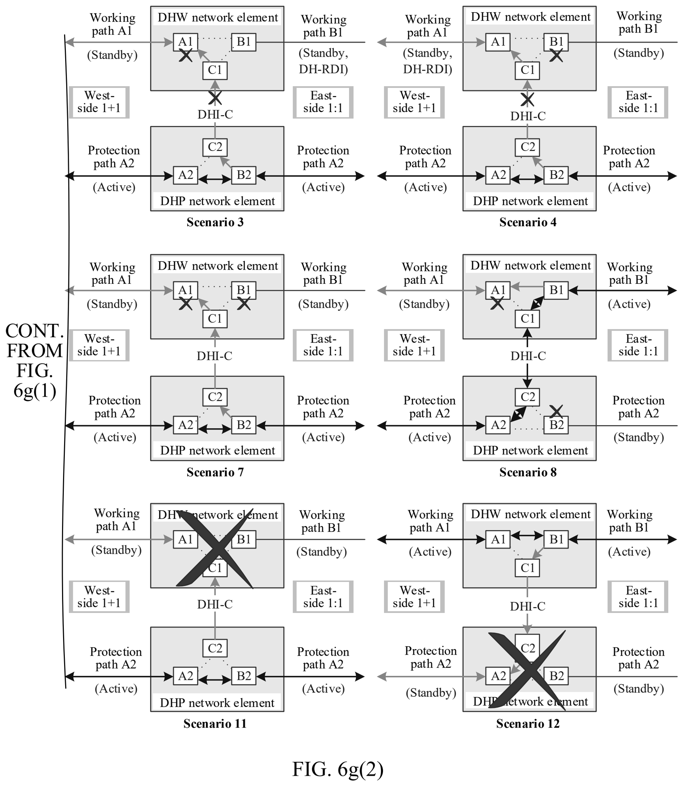

FIG. 6g(1) and FIG. 6g(2) are a diagram of an example application scenario according to an embodiment of this application. FIG. 6g(1) and FIG. 6g(2) show 12 network scenarios in a case in which west-side channels (A1 and A2) are configured as 1+1 protection switching channels and east-side channels (B1 and B2) are configured as 1:1 protection switching channels, and shows transmission paths of the service separately determined in various network scenarios. In FIG. 6g(1) and FIG. 6g(2), a transmission path of the service is represented by an arrow with a direction. In the scenarios shown in FIG. 6g(1) and FIG. 6g(2), the fifth channel (that is, a channel between C1 and C2) is included between the DHW network element and the DHP network element. For various network scenarios shown in FIG. 6g(1) and FIG. 6g(2) and corresponding transmission paths of the service, details are not described herein.

FIG. 6h(1) and FIG. 6h(2) are a diagram of an example application scenario according to an embodiment of this application. FIG. 6h(1) and FIG. 6h(2) show 12 network scenarios in a case in which west-side channels (A1 and A2) are configured as 1+1 protection switching channels and east-side channels (B1 and B2) are configured as 1:1 protection switching channels, and shows transmission paths of the service separately determined in various network scenarios. In FIG. 6h(1) and FIG. 6h(2), a transmission path of the service is represented by an arrow with a direction. In the scenarios shown in FIG. 6h(1) and FIG. 6h(2), the sixth channel (that is, a channel between C1 and C2) and the seventh channel (that is, a channel between D1 and D2) are included between the DHW network element and the DHP network element. For various network scenarios shown in FIG. 6h(1) and FIG. 6h(2) and corresponding transmission paths of the service, details are not described herein.

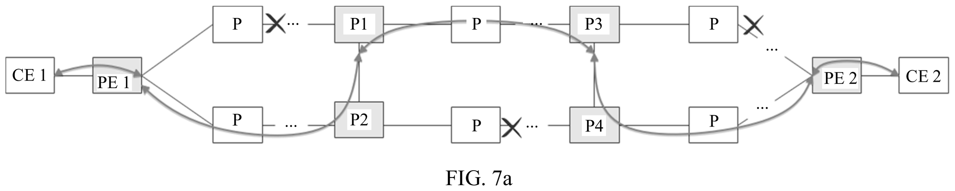

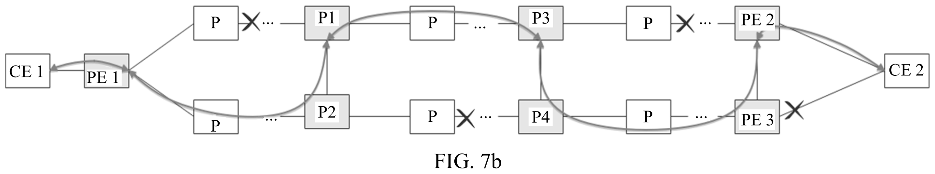

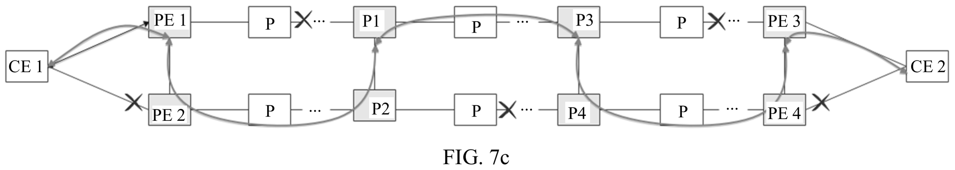

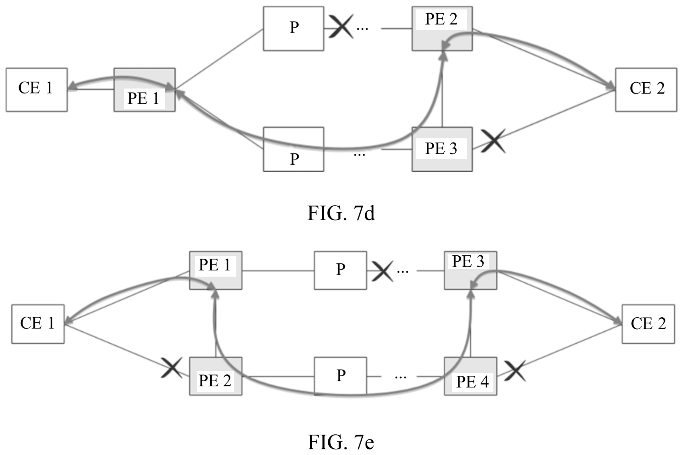

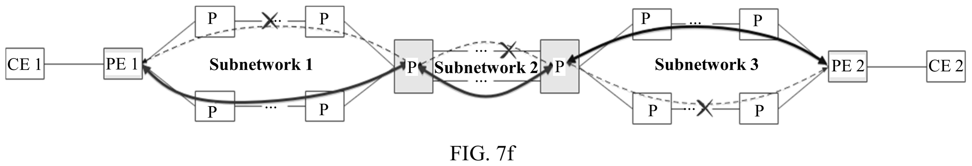

The solution in this embodiment of this application can effectively reduce or even avoid service interruption. For example, after the solution provided in this embodiment of this application is applied to the application scenario shown in FIG. 1a, a transmission path of the service may be shown in FIG. 7a. For another example, after the solution provided in this embodiment of this application is applied to the application scenario shown in FIG. 1b, a transmission path of the service may be shown in FIG. 7b. After the solution provided in this embodiment of this application is applied to the application scenario shown in FIG. 1c, a transmission path of the service may be shown in FIG. 7c. After the solution provided in this embodiment of this application is applied to the application scenario shown in FIG. 1d, a transmission path of the service may be shown in FIG. 7d. After the solution provided in this embodiment of this application is applied to the application scenario shown in FIG. 1e, a transmission path of the service may be shown in FIG. 7e. After the solution provided in this embodiment of this application is applied to the application scenario shown in FIG. 1f, a transmission path of the service may be shown in FIG. 7f. FIG. 7a to FIG. 7f are diagrams of six example application scenarios according to embodiments of this application.

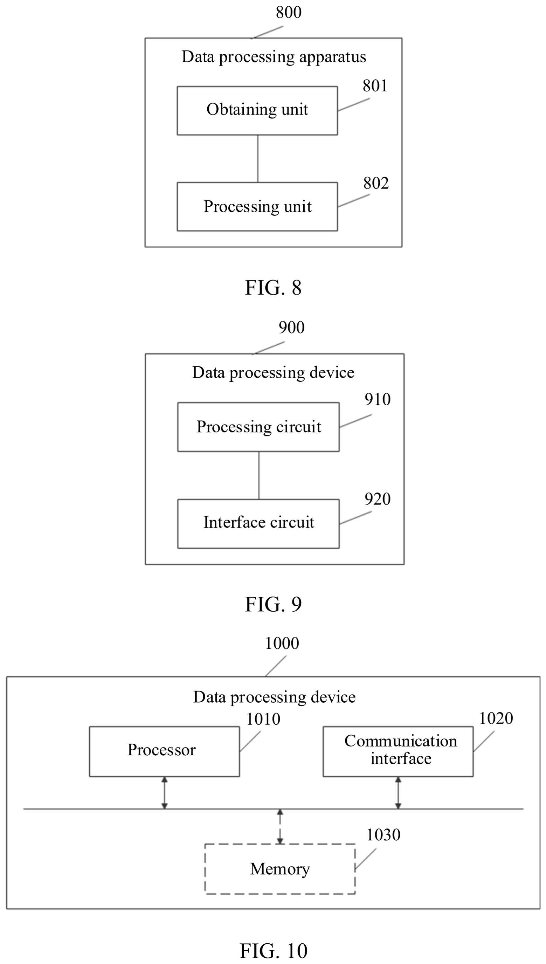

FIG. 8 is a diagram of a structure of a data processing apparatus according to an embodiment of this application. The data processing apparatus 800 shown in FIG. 8 may be used in a first network node, and is configured to perform the data processing method that is performed by the first network node and that is provided in the foregoing method embodiment.

As shown in FIG. 8, the data processing apparatus 800 includes an obtaining unit 801 and a processing unit 802.

The obtaining unit 801 is configured to obtain a state of a channel, where the state of the channel includes at least one state in a state set, the state set includes a state of a first channel, a state of a second channel, a state of a third channel, and a state of a fourth channel, the first channel and the second channel are separately connected to the first network node, the first channel and the second channel belong to a first path, the third channel and the fourth channel are separately connected to a second network node, the third channel and the fourth channel belong to a second path, the first channel and the third channel are protection switching channels for each other, and the second channel and the fourth channel are protection switching channels for each other.

The processing unit 802 is configured to determine a transmission path of a service based on the state of the channel, where the transmission path of the service is one or more paths in a path set, the path set includes the first path, the second path, a third path, and a fourth path, the third path includes the first channel and the fourth channel, and the fourth path includes the second channel and the third channel.

In a possible implementation, the first network node and the second network node are a same network node.

In a possible implementation, the first network node and the second network node are different network nodes, a fifth channel is included between the first network node and the second network node, and the third path and the fourth path further include the fifth channel.

In a possible implementation, the state set further includes a state of the fifth channel.

In a possible implementation, the first network node and the second network are different network nodes, a sixth channel and a seventh channel are included between the first network node and the second network node, and the third path and the fourth path each include the sixth channel or the seventh channel. When the first network node sends a service to the second network node through the third path, the third path includes the seventh channel; when the second network node sends a service to the first network node through the third path, the third path includes the sixth channel; when the first network node sends a service to the second network node through the fourth path, the fourth path includes the sixth channel; or when the second network node sends a service to the first network node through the fourth path, the fourth path includes the seventh channel.

In a possible implementation, the state set further includes a state of the sixth channel and a state of the seventh channel.

In a possible implementation, both the first network node and the second network node are provider edges PEs.

In a possible implementation, the first network node and the second network node are provider intermediate devices.

In a possible implementation, the first channel, the second channel, the third channel, and the fourth channel all are fine granularity channels; or the first channel, the second channel, the third channel, and the fourth channel all are metropolitan transport network MTN channels.

In a possible implementation, the first channel and the third channel are attachment circuit AC links, and the second channel and the fourth channel are fine granularity channels; or the first channel and the third channel are AC links, and the second channel and the fourth channel are MTN channels.

In a possible implementation, the state of the first channel is determined based on a first factor, and the first factor includes one or more of the following: the state of the third channel, local fault information of the first channel, first remote fault indication information received through the first channel, and the state of the second channel.

In a possible implementation, if the first network node and the second network node are different network nodes, the first factor further includes a state of a target channel, and the state of the target channel indicates whether the target channel is faulty. When the fifth channel is included between the first network node and the second network node, the target channel includes the fifth channel; or when the sixth channel and the seventh channel are included between the first network node and the second network node, the target channel includes the sixth channel and the seventh channel.

In a possible implementation, the first path is a working path, and the state of the first channel is determined in the following manner: when the state of the third channel is active active, determining that the state of the first channel is standby standby; or when the local fault information of the first channel indicates that a local fault occurs on the first channel, determining that the state of the first channel is standby; or when the first remote fault indication information is received through the first channel, determining that the state of the first channel is standby; or when the state of the second channel is standby and the state of the target channel indicates that the target channel is faulty, determining that the state of the first channel is standby.

In a possible implementation, the first path is a protection path, and the state of the first channel is determined in the following manner: when the state of the third channel is standby, determining that the state of the first channel is active; or when the local fault information of the first channel indicates that a local fault occurs on the first channel, determining that the state of the first channel is standby; or when the first remote fault indication information is received through the first channel, determining that the state of the first channel is standby; or when the state of the second channel is standby and the state of the target channel indicates that the target channel is faulty, determining that the state of the first channel is standby.

In a possible implementation, the obtaining unit 801 is configured to receive the state of the third channel and the state of the fourth channel that are sent by the second network node.

In a possible implementation, if the fifth channel is included between the first network node and the second network node, the obtaining unit 801 is configured to receive the state of the third channel and the state of the fourth channel that are sent by the second network node through the fifth channel.

In a possible implementation, if the sixth channel and the seventh channel are included between the first network node and the second network node, the obtaining unit 801 is configured to: receive the state of the third channel that is sent by the second network node through the sixth channel, and receive the state of the fourth channel that is sent by the second network node through the seventh channel.

In a possible implementation, the obtaining unit 801 is configured to receive state information of the third channel that is sent by the second network node, where the state information includes the state of the third channel.

In a possible implementation, the obtaining unit 801 is configured to receive a first operation, administration and maintenance OAM code block sent by the second network node, where the first OAM code block carries the state information.

In a possible implementation, a type field of the first OAM code block indicates that the first OAM code block carries the state information.

In a possible implementation, the first OAM code block is a first automatic protection switching APS code block, and the state information is carried in an available field of the first APS code block.

In a possible implementation, the obtaining unit 801 is configured to receive a first Ethernet packet sent by the second network node, where the first Ethernet packet includes the state information.

In a possible implementation, the state information further includes: local fault information of the third channel, and/or second remote fault indication information received through the third channel.

In a possible implementation, the apparatus further includes a sending unit, configured to send the state of the first channel and the state of the second channel to the second network node.

In a possible implementation, the apparatus further includes: a sending unit, configured to: when the state of the second channel is standby and the state of the target channel indicates that the target channel is faulty, send third remote fault indication information through the first channel.

In a possible implementation, target fault indication information is carried in a second OAM code block, and the target fault indication information includes the first remote fault indication information, the second remote fault indication information, or the third remote fault indication information.

In a possible implementation, a type field of the second OAM code block indicates that the second OAM code block carries the target remote fault indication information.

In a possible implementation, the second OAM code block is a basic code block, and the target remote fault indication information is carried in a reserved field or a remote defect indication RDI field of the basic code block.

In a possible implementation, the second OAM code block is a second APS code block, and the target remote fault indication information is carried in an available field of the second APS code block.

In a possible implementation, the apparatus further includes: a sending unit, configured to send or receive a target OAM message through the first channel. The target OAM message is an end-to-end fine-granularity channel OAM message; or an O code block type field of the target OAM message indicates a message type of the target OAM message; or a type field of the target OAM code block indicates a message type of the target OAM message.

In a possible implementation, the first channel and the third channel are configured as 1:1 protection switching channels, and the second channel and the fourth channel are also configured as 1:1 protection switching channels. The processing unit 802 is configured to: when both the state of the first channel and the state of the second channel are active, determine the first path as the transmission path of the service; or when the state of the first channel is active and the state of the second channel is standby, determine the third path as the transmission path of the service; or when the state of the first channel is standby and the state of the second channel is active, determine the fourth path as the transmission path of the service; or when both the state of the first channel and the state of the second channel are standby, determine the first path as the transmission path of the service or determine to discard the service.

In a possible implementation, the first channel and the third channel are configured as 1:1 protection switching channels, and the second channel and the fourth channel are configured as 1+1 protection switching channels. The processing unit 802 is configured to: when both the state of the first channel and the state of the second channel are active, determine the first path and the third path as the transmission paths of the service, where the third path is a unidirectional path, and on the third path, the first network node is an upstream node of the second network node; or when the state of the first channel is active and the state of the second channel is standby, determine the first path and the third path as the transmission paths of the service, where the first path is a unidirectional path, and on the first path, the first channel is an upstream channel of the second channel; or when the state of the first channel is standby and the state of the second channel is active, determine the fourth path as the transmission path of the service; or when both the state of the first channel and the state of the second channel are standby, determine the fourth path as the transmission path of the service, where the fourth path is a unidirectional path, and on the fourth path, the first network node is a downstream node of the second network node.

In a possible implementation, the first channel and the third channel are configured as 1+1 protection switching channels, and the second channel and the fourth channel are configured as 1:1 protection switching channels. The processing unit 802 is configured to: when both the state of the first channel and the state of the second channel are active, determine the first path and the fourth path as the transmission paths of the service, where the fourth path is a unidirectional path, and on the fourth path, the first network node is an upstream node of the second network node; or when the state of the first channel is active and the state of the second channel is standby, determine the third path as the transmission path of the service; or when the state of the first channel is standby and the state of the second channel is active, determine the fourth path and the first path as the transmission paths of the service, where the first path is a unidirectional path, and on the first path, the second channel is an upstream channel of the first channel; or when both the state of the first channel and the state of the second channel are standby, determine the third path as the transmission path of the service, where the third path is a unidirectional path, and on the third path, the second network node is an upstream node of the first network node.

In a possible implementation, the first channel and the third channel are configured as 1+1 protection switching channels, and the second channel and the fourth channel are also configured as 1+1 protection switching channels. The processing unit 802 is configured to: when both the state of the first channel and the state of the second channel are active, determine the first path as the transmission path of the service; or when the state of the first channel is active and the state of the second channel is standby, determine the first path and the third path as the transmission paths of the service, where the first path is a unidirectional path, and on the first path, the first channel is an upstream channel of the second channel; or when the state of the first channel is standby and the state of the second channel is active, determine the fourth path and the first path as the transmission paths of the service, where the first path is a unidirectional path, and on the first path, the second channel is an upstream channel of the first channel; or when both the state of the first channel and the state of the second channel are standby, determine the first path as the transmission path of the service.

In a possible implementation, the first channel and the third channel are configured as 1+1 protection switching channels, and the second channel and the fourth channel are also configured as 1+1 protection switching channels. The processing unit 802 is configured to: when both the state of the first channel and the state of the second channel are active, determine the first path, the third path, and the fourth path as the transmission paths of the service, where the first path is a bidirectional path, both the third path and the fourth path are unidirectional paths, the unidirectional third path includes the seventh channel, and the unidirectional fourth path includes the sixth channel; or when the state of the first channel is active and the state of the second channel is standby, determine the first path and the third path as the transmission paths of the service, where the first path is a unidirectional path, the third path is a bidirectional path, and on the unidirectional first path, the first channel is an upstream channel of the second channel; or when the state of the first channel is standby and the state of the second channel is active, determine the fourth path and the first path as the transmission paths of the service, where the first path is a unidirectional path, the fourth path is a bidirectional path, and on the unidirectional first path, the second channel is an upstream channel of the first channel; or when both the state of the first channel and the state of the second channel are standby, determine the third path and the fourth path as the transmission paths of the service, where both the third path and the fourth path are unidirectional paths, the unidirectional third path includes the sixth channel, and the unidirectional fourth path includes the seventh channel.

FIG. 9 is a diagram of a structure of a data processing device according to an embodiment of this application. The data processing device 900 shown in FIG. 9 includes a processing circuit 910 and an interface circuit 920. The processing circuit 910 and the interface circuit 920 are coupled to each other. It may be understood that the interface circuit 920 may be a transceiver or an input/output interface. Optionally, the data processing device 900 may further include a memory, configured to store instructions executed by the processing circuit, store input data needed by the processing circuit 910 to run instructions, or store data generated after the processing circuit 910 runs instructions. In an example, the interface circuit 920 is configured to perform receiving and sending operations performed by the first network node provided in the foregoing method embodiment, and the processing circuit 910 is configured to perform another operation performed by the first network node other than the receiving and sending operations.

FIG. 10 is a diagram of a structure of another data processing device according to an embodiment of this application. The data processing device 1000 shown in FIG. 10 includes a processor 1010 and a communication interface 1020. The processor 1010 and the communication interface 1020 are coupled to each other. It may be understood that the communication interface 1020 may be a transceiver or an input/output interface. Optionally, the communication apparatus 1000 may further include a memory 1030, configured to store instructions executed by the processor 1010, or store input data required by the processor 1010 to run the instructions, or store data generated after the processor 1010 runs the instructions. In an example, the communication interface 1020 is configured to perform receiving and sending operations performed by the first network node provided in the foregoing method embodiment, and the processor 1010 is configured to perform another operation performed by the first network node other than the receiving and sending operations.

In this specification, the claims, and the accompanying drawings of this application, terms "first", "second", "third", "fourth", and the like (if existent) are intended to distinguish between similar objects but do not necessarily indicate a specific order or sequence. It should be understood that data termed in such a way are interchangeable in proper circumstances, so that embodiments of the present invention described herein can be implemented in other orders than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical service division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that, in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium. The communication medium includes any medium that enables a computer program to be transmitted from one place to another. The storage medium may be any available medium accessible to a general-purpose or a special-purpose computer.

The objectives, technical solutions, and beneficial effects of the present invention are further described in detail in the foregoing specific implementations. It should be understood that the foregoing is merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A communication system, wherein the communication system comprises a target network; the target network comprises at least one subnetwork domain, the at least one subnetwork domain comprises a first subnetwork domain, the first subnetwork domain comprises a first network node and a second network node, the first network node belongs to a first path, the second network node belongs to a second path, the first path comprises a first channel and a second channel that are connected to the first network node, the second path comprises a third channel and a fourth channel that are connected to the second network node, the first channel and the third channel are protection switching channels for each other, and the second channel and the fourth channel are protection switching channels for each other;
the first network node and/or the second network node are/is configured to determine a transmission path of a service based on a state of a channel;
the state of the channel comprises at least one state in a state set, and the state set comprises a state of the first channel, a state of the second channel, a state of the third channel, and a state of the fourth channel; and
the transmission path of the service is one or more paths in a path set, the path set comprises the first path, the second path, a third path, and a fourth path, the third path comprises the first channel and the fourth channel, and the fourth path comprises the second channel and the third channel.

2. The system according to claim 1, wherein the first network node and the second network node are a same network node.

3. The system according to claim 1, wherein the first network node and the second network node are different network nodes, and a fifth channel is comprised between the first network node and the second network node; and
the third path and the fourth path further comprise the fifth channel.

4. The system according to claim 3, wherein the state set further comprises a state of the fifth channel.

5. The system according to claim 1, wherein the first network node and the second network are different network nodes, a sixth channel and a seventh channel are comprised between the first network node and the second network node, and the third path and the fourth path each comprise the sixth channel or the seventh channel, wherein
when the first network node sends a service to the second network node through the third path, the third path comprises the seventh channel;
when the second network node sends a service to the first network node through the third path, the third path comprises the sixth channel;
when the first network node sends a service to the second network node through the fourth path, the fourth path comprises the sixth channel; or
when the second network node sends a service to the first network node through the fourth path, the fourth path comprises the seventh channel.

6. The system according to claim 5, wherein the state set further comprises a state of the sixth channel and a state of the seventh channel.

7. The system according to any one of claims 3 to 6, wherein both the first network node and the second network node are provider edges PEs.

8. The system according to any one of claims 1 to 6, wherein the first network node and the second network node are provider intermediate devices.

9. The system according to claim 8, wherein
the first channel, the second channel, the third channel, and the fourth channel all are fine granularity channels; or
the first channel, the second channel, the third channel, and the fourth channel all are metropolitan transport network MTN channels.

10. The system according to claim 7, wherein
the first channel and the third channel are attachment circuit AC links, and the second channel and the fourth channel are fine granularity channels; or
the first channel and the third channel are AC links, and the second channel and the fourth channel are MTN channels.

11. A data processing method, applied to a first network node, wherein the method comprises:
obtaining a state of a channel, wherein the state of the channel comprises at least one state in a state set, the state set comprises a state of a first channel, a state of a second channel, a state of a third channel, and a state of a fourth channel, the first channel and the second channel are separately connected to the first network node, the first channel and the second channel belong to a first path, the third channel and the fourth channel are separately connected to a second network node, the third channel and the fourth channel belong to a second path, the first channel and the third channel are protection switching channels for each other, and the second channel and the fourth channel are protection switching channels for each other; and
determining a transmission path of a service based on the state of the channel, wherein the transmission path of the service is one or more paths in a path set, the path set comprises the first path, the second path, a third path, and a fourth path, the third path comprises the first channel and the fourth channel, and the fourth path comprises the second channel and the third channel.

12. The method according to claim 11, wherein the first network node and the second network node are a same network node.

13. The method according to claim 11, wherein the first network node and the second network node are different network nodes, a fifth channel is comprised between the first network node and the second network node, and the third path and the fourth path further comprise the fifth channel.

14. The method according to claim 13, wherein the state set further comprises a state of the fifth channel.

15. The system according to claim 11, wherein the first network node and the second network are different network nodes, a sixth channel and a seventh channel are comprised between the first network node and the second network node, and the third path and the fourth path each comprise the sixth channel or the seventh channel, wherein
when the first network node sends a service to the second network node through the third path, the third path comprises the seventh channel;
when the second network node sends a service to the first network node through the third path, the third path comprises the sixth channel;
when the first network node sends a service to the second network node through the fourth path, the fourth path comprises the sixth channel; or
when the second network node sends a service to the first network node through the fourth path, the fourth path comprises the seventh channel.

16. The system according to claim 15, wherein the state set further comprises a state of the sixth channel and a state of the seventh channel.

17. The method according to any one of claims 13 to 16, wherein both the first network node and the second network node are provider edges PEs.

18. The method according to any one of claims 11 to 16, wherein the first network node and the second network node are provider intermediate devices.

19. The system according to claim 18, wherein the first channel, the second channel, the third channel, and the fourth channel all are fine granularity channels; or
the first channel, the second channel, the third channel, and the fourth channel all are metropolitan transport network MTN channels.

20. The system according to claim 17, wherein the first channel and the third channel are attachment circuit AC links, and the second channel and the fourth channel are fine granularity channels; or
the first channel and the third channel are AC links, and the second channel and the fourth channel are MTN channels.

21. The method according to any one of claims 11 to 20, wherein the state of the first channel is determined based on a first factor, and the first factor comprises one or more of the following:
the state of the third channel, local fault information of the first channel, first remote fault indication information received through the first channel, and the state of the second channel.

22. The method according to claim 21, wherein if the first network node and the second network node are different network nodes, the first factor further comprises:
a state of a target channel, wherein the state of the target channel indicates whether the target channel is faulty, wherein
when the fifth channel is comprised between the first network node and the second network node, the target channel comprises the fifth channel; or
when the sixth channel and the seventh channel are comprised between the first network node and the second network node, the target channel comprises the sixth channel and the seventh channel.

23. The method according to claim 22, wherein the first path is a working path, and the state of the first channel is determined in the following manner:
when the state of the third channel is active, determining that the state of the first channel is standby ; or
when the local fault information of the first channel indicates that a local fault occurs on the first channel, determining that the state of the first channel is standby; or
when the first remote fault indication information is received through the first channel, determining that the state of the first channel is standby; or
when the state of the second channel is standby and the state of the target channel indicates that the target channel is faulty, determining that the state of the first channel is standby.

24. The method according to claim 22, wherein the first path is a protection path, and the state of the first channel is determined in the following manner:
when the state of the third channel is standby, determining that the state of the first channel is active; or
when the local fault information of the first channel indicates that a local fault occurs on the first channel, determining that the state of the first channel is standby; or
when the first remote fault indication information is received through the first channel, determining that the state of the first channel is standby; or
when the state of the second channel is standby and the state of the target channel indicates that the target channel is faulty, determining that the state of the first channel is standby.

25. The method according to any one of claims 11 to 24, wherein the obtaining a state of a channel comprises:
receiving the state of the third channel and the state of the fourth channel that are sent by the second network node.

26. The method according to claim 25, wherein if the fifth channel is comprised between the first network node and the second network node, the receiving the state of the third channel and the state of the fourth channel that are sent by the second network node comprises:
receiving the state of the third channel and the state of the fourth channel that are sent by the second network node through the fifth channel.

27. The method according to claim 25, wherein if the sixth channel and the seventh channel are comprised between the first network node and the second network node, the receiving the state of the third channel and the state of the fourth channel that are sent by the second network node comprises:
receiving the state of the third channel that is sent by the second network node through the sixth channel, and receiving the state of the fourth channel that is sent by the second network node through the seventh channel.

28. The method according to any one of claims 25 to 27, wherein the receiving the state of the third channel that is sent by the second network node comprises:
receiving state information of the third channel that is sent by the second network node, wherein the state information comprises the state of the third channel.

29. The method according to claim 28, wherein the receiving state information of the third channel that is sent by the second network node comprises:
receiving a first operation, administration and maintenance OAM code block sent by the second network node, wherein the first OAM code block carries the state information.

30. The method according to claim 29, wherein a type field of the first OAM code block indicates that the first OAM code block carries the state information.

31. The method according to claim 29, wherein the first OAM code block is a first automatic protection switching APS code block, and the state information is carried in an available field of the first APS code block.

32. The method according to claim 28, wherein the receiving state information of the third channel that is sent by the second network node comprises:
receiving a first Ethernet packet sent by the second network node, wherein the first Ethernet packet comprises the state information.

33. The method according to any one of claims 28 to 32, wherein the state information further comprises:
local fault information of the third channel, and/or second remote fault indication information received through the third channel.

34. The method according to any one of claims 11 to 33, wherein the method further comprises:
sending the state of the first channel and the state of the second channel to the second network node.

35. The method according to claim 23 or 24, wherein the method further comprises:
when the state of the second channel is standby and the state of the target channel indicates that the target channel is faulty, sending third remote fault indication information through the first channel.

36. The method according to any one of claims 21 to 35, wherein target fault indication information is carried in a second OAM code block, and the target fault indication information comprises the first remote fault indication information, the second remote fault indication information, or the third remote fault indication information.

37. The method according to claim 36, wherein a type field of the second OAM code block indicates that the second OAM code block carries the target remote fault indication information.

38. The method according to claim 36, wherein the second OAM code block is a basic code block, and the target remote fault indication information is carried in a reserved field or a remote defect indication RDI field of the basic code block.

39. The method according to claim 36, wherein the second OAM code block is a second APS code block, and the target remote fault indication information is carried in an available field of the second APS code block.

40. The method according to any one of claims 11 to 39, wherein the method further comprises:
sending or receiving a target OAM message through the first channel, wherein
the target OAM message is an end-to-end fine-granularity channel OAM message; or
an O code block type field of the target OAM message indicates a message type of the target OAM message; or
a type field of the target OAM code block indicates a message type of the target OAM message.

41. The method according to any one of claims 13 to 16, wherein the first channel and the third channel are configured as 1:1 protection switching channels, and the second channel and the fourth channel are also configured as 1:1 protection switching channels; and the determining a transmission path of a service based on the state of the channel comprises:
when both the state of the first channel and the state of the second channel are active, determining the first path as the transmission path of the service; or
when the state of the first channel is active and the state of the second channel is standby, determining the third path as the transmission path of the service; or
when the state of the first channel is standby and the state of the second channel is active, determining the fourth path as the transmission path of the service; or
when both the state of the first channel and the state of the second channel are standby, determining the first path as the transmission path of the service or determining to discard the service.

42. The method according to any one of claims 13 to 16, wherein the first channel and the third channel are configured as 1:1 protection switching channels, and the second channel and the fourth channel are configured as 1+1 protection switching channels; and the determining a transmission path of a service based on the state of the channel comprises:
when both the state of the first channel and the state of the second channel are active, determining the first path and the third path as the transmission paths of the service, wherein the third path is a unidirectional path, and on the third path, the first network node is an upstream node of the second network node; or
when the state of the first channel is active and the state of the second channel is standby, determining the first path and the third path as the transmission paths of the service, wherein the first path is a unidirectional path, and on the first path, the first channel is an upstream channel of the second channel; or
when the state of the first channel is standby and the state of the second channel is active, determining the fourth path as the transmission path of the service; or
when both the state of the first channel and the state of the second channel are standby, determining the fourth path as the transmission path of the service, wherein the fourth path is a unidirectional path, and on the fourth path, the first network node is a downstream node of the second network node.

43. The method according to any one of claims 13 to 16, wherein the first channel and the third channel are configured as 1+1 protection switching channels, and the second channel and the fourth channel are configured as 1:1 protection switching channels; and the determining a transmission path of a service based on the state of the channel comprises:
when both the state of the first channel and the state of the second channel are active, determining the first path and the fourth path as the transmission paths of the service, wherein the fourth path is a unidirectional path, and on the fourth path, the first network node is an upstream node of the second network node; or
when the state of the first channel is active and the state of the second channel is standby, determining the third path as the transmission path of the service; or
when the state of the first channel is standby and the state of the second channel is active, determining the fourth path and the first path as the transmission paths of the service, wherein the first path is a unidirectional path, and on the first path, the second channel is an upstream channel of the first channel; or
when both the state of the first channel and the state of the second channel are standby, determining the third path as the transmission path of the service, wherein the third path is a unidirectional path, and on the third path, the second network node is an upstream node of the first network node.

44. The method according to claim 13 or 14, wherein the first channel and the third channel are configured as 1+1 protection switching channels, and the second channel and the fourth channel are also configured as 1+1 protection switching channels; and the determining a transmission path of a service based on the state of the channel comprises:
when both the state of the first channel and the state of the second channel are active, determining the first path as the transmission path of the service; or
when the state of the first channel is active and the state of the second channel is standby, determining the first path and the third path as the transmission paths of the service, wherein the first path is a unidirectional path, and on the first path, the first channel is an upstream channel of the second channel; or
when the state of the first channel is standby and the state of the second channel is active, determining the fourth path and the first path as the transmission paths of the service, wherein the first path is a unidirectional path, and on the first path, the second channel is an upstream channel of the first channel; or
when both the state of the first channel and the state of the second channel are standby, determining the first path as the transmission path of the service.

45. The method according to claim 15 or 16, wherein the first channel and the third channel are configured as 1+1 protection switching channels, and the second channel and the fourth channel are also configured as 1+1 protection switching channels; and the determining a transmission path of a service based on the state of the channel comprises:
when both the state of the first channel and the state of the second channel are active, determining the first path, the third path, and the fourth path as the transmission paths of the service, wherein the first path is a bidirectional path, both the third path and the fourth path are unidirectional paths, the unidirectional third path comprises the seventh channel, and the unidirectional fourth path comprises the sixth channel; or
when the state of the first channel is active and the state of the second channel is standby, determining the first path and the third path as the transmission paths of the service, wherein the first path is a unidirectional path, the third path is a bidirectional path, and on the unidirectional first path, the first channel is an upstream channel of the second channel; or
when the state of the first channel is standby and the state of the second channel is active, determining the fourth path and the first path as the transmission paths of the service, wherein the first path is a unidirectional path, the fourth path is a bidirectional path, and on the unidirectional first path, the second channel is an upstream channel of the first channel; or
when both the state of the first channel and the state of the second channel are standby, determining the third path and the fourth path as the transmission paths of the service, wherein both the third path and the fourth path are unidirectional paths, the unidirectional third path comprises the sixth channel, and the unidirectional fourth path comprises the seventh channel.

46. A data processing apparatus, wherein the apparatus comprises:
an obtaining unit, configured to obtain a state of a channel, wherein the state of the channel comprises at least one state in a state set, the state set comprises a state of a first channel, a state of a second channel, a state of a third channel, and a state of a fourth channel, the first channel and the second channel are separately connected to the first network node, the first channel and the second channel belong to a first path, the third channel and the fourth channel are separately connected to a second network node, the third channel and the fourth channel belong to a second path, the first channel and the third channel are protection switching channels for each other, and the second channel and the fourth channel are protection switching channels for each other; and
a processing unit, configured to determine a transmission path of a service based on the state of the channel, wherein the transmission path of the service is one or more paths in a path set, the path set comprises the first path, the second path, a third path, and a fourth path, the third path comprises the first channel and the fourth channel, and the fourth path comprises the second channel and the third channel.

47. A data processing device, comprising a communication interface and a processor, wherein the communication apparatus performs the method according to any one of claims 11 to 45 according to the communication interface and the processor.

48. A computer-readable storage medium, comprising instructions or a computer program, wherein when the instructions or the computer program is run on a computer, the computer is enabled to perform the method according to any one of claims 1 to 45.

49. A computer program product, comprising a computer program, wherein when the computer program is run on a processor, the method according to any one of claims 1 to 45 is performed.
